# EUROPEAN PATENT APPLICATION

(11) **EP 1 571 278 A1**
(43) Date of publication of application: **07.09.2005**
(21) Application number: 03780710.4
(22) Date of filing: 10.12.2003
(51) Int. Cl.: E05B 49/00, B60R 25/04, B60R 25/10, B60R 11/04, B60R 16/02

(54) **ONBOARD DEVICE CONTROL SYSTEM, ONBOARD DEVICE CONTROLLER, AND ONBOARD DEVICE CONTROL METHOD**

(30) Priority: 13.12.2002 JP 2002362537; 06.08.2003 JP 2003287855; 01.09.2003 JP 2003308912; 01.09.2003 JP 2003308913; 01.09.2003 JP 2003309289
(71) Applicant: MATSUSHITA ELECTRIC INDUSTRIAL CO., LTD., Osaka 571-8501 (JP)
(72) Inventor: YUHARA, Masahiro, Yokohama-shi, Kanagawa 246-0011 (JP)
(74) Representative: Pautex Schneider, Nicole Véronique
(86) International application number: PCT/JP2003/015825
(87) International publication number: WO 2004/055302

(57) **Abstract**

Herein disclosed is an in-vehicle apparatus controlling system, comprising: an in-vehicle controlling apparatus for controlling an in-vehicle apparatus, and memory media having user identification information stored therein, the user identification information being partially constituted by biometric information indicative of a person demanding permission to utilize the in-vehicle apparatus, wherein the in-vehicle controlling apparatus includes: biometric information obtaining means for obtaining biometric information indicative of the person demanding permission to utilize the in-vehicle apparatus; storing means for storing user identification information which is partially constituted by biometric information indicative of a registered user having permission to utilize the automotive vehicle; identifying means for judging whether or not the person is identical to the registered user having permission to utilize the automotive vehicle by establishing the verification of the biometric information obtained by the biometric information obtaining means with respect to the biometric information stored by the storing means; controlling means for controlling the in-vehicle apparatus on the basis of the judgment made by the identifying means; and reading means for receiving the user identification information from the memory media.

## Description

### TECHNICAL FIELD OF THE INVENTION

The present invention relates to a method, a system, and an apparatus for controlling one or more in-vehicle apparatuses, and more particularly to a method, a system, and an apparatus for controlling one or more in-vehicle apparatuses on the basis of the verification of user identification information including biometric information indicative of biometric features of a person demanding permission to utilize an in-vehicle apparatus with respect to user identification information including biometric information indicative of biometric features of a registered user having permission to utilize the automotive vehicle.

### DESCRIPTION OF THE RELATED ART

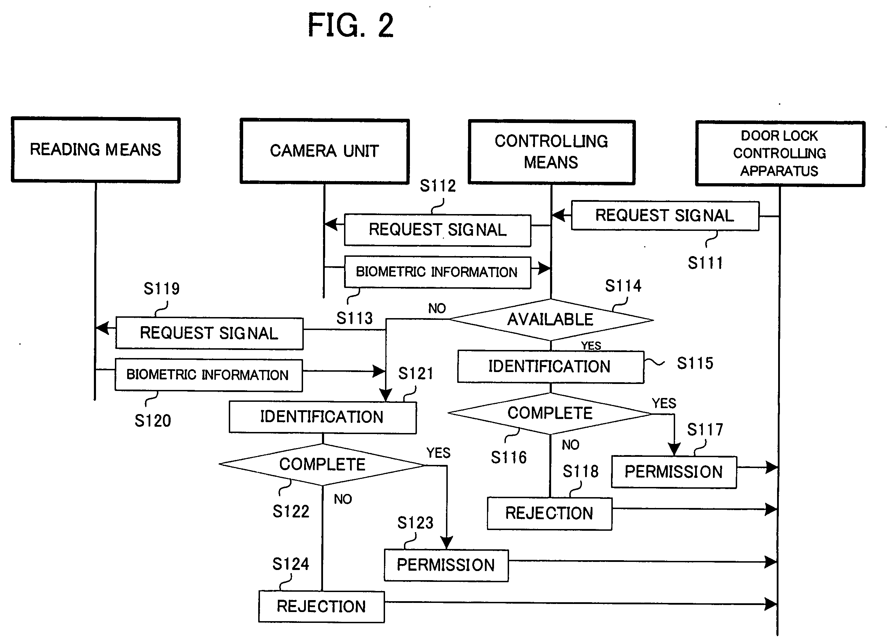

As one example of in-vehicle apparatus controlling systems, there has been known a system disclosed in Japanese Patent Laying-Open Publication No. H11-36675 (pages **3** and **4**, FIG. **2**). The above mentioned conventional system comprises an electronic key having an identification code stored therein, the identification code being indicative of a person demanding permission to utilize an automotive vehicle, and a memory unit having an identification code previously stored therein. When the judgment is made that the identification code received from the electronic key is the same as the identification code previously stored in the memory unit, the above mentioned conventional system is adapted to allow the automotive vehicle to be utilized by the person by unlocking doors of the automotive vehicle.

As another example of the conventional in-vehicle apparatus controlling systems, there has been known a system disclosed in Japanese Patent Laying-Open Publication No. 2002-183734. The above mentioned conventional system is adapted to judge whether or not a person is identical to a registered user on the basis of the biometric information obtained by the biometric information obtaining means such as a camera unit.

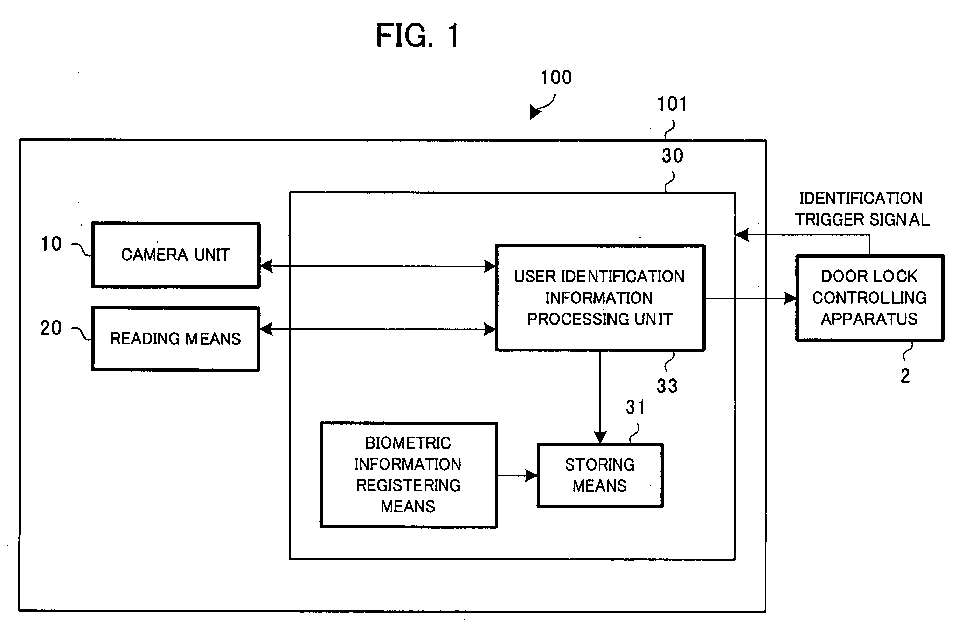

As further example of the conventional in-vehicle apparatus controlling systems, there has been known a system disclosed in Japanese Patent Laying-Open Publication No. H11-43016 (pages **2** and **3**, FIG. **1**). The above mentioned conventional system comprises door locks provided in an automotive vehicle, and image taking means for taking an image indicative of a face of a person demanding permission to unlock doors of an automotive vehicle. The image taking means has a lamp unit producing a light having specific wavelengths, the light illuminating the face of the person when the image indicative of the face of the person is taken at night or in a dark place, and a receiving unit for receiving a light reflected by the face of the person. The above mentioned conventional system further comprises registering means for registering face information indicative of a user having permission to utilize the automotive vehicle, memory means having the face information registered by the registering means stored therein, and judging means for verifying the image taken by the image taking means on the basis of the user having permission to utilize the automotive vehicle, judging whether or not the person is identical to the registered user, and allowing the doors of the automotive vehicle to be unlocked by the person identified as the registered user. The above mentioned conventional system, therefore, can improve convenience of unlocking the doors of the automotive vehicle without a mechanical key, and prevent the doors of the automotive vehicle from being unlocked by an unregistered user, such as for example a suspicious person stealing the mechanical key, to enhance the security level of the automotive vehicle.

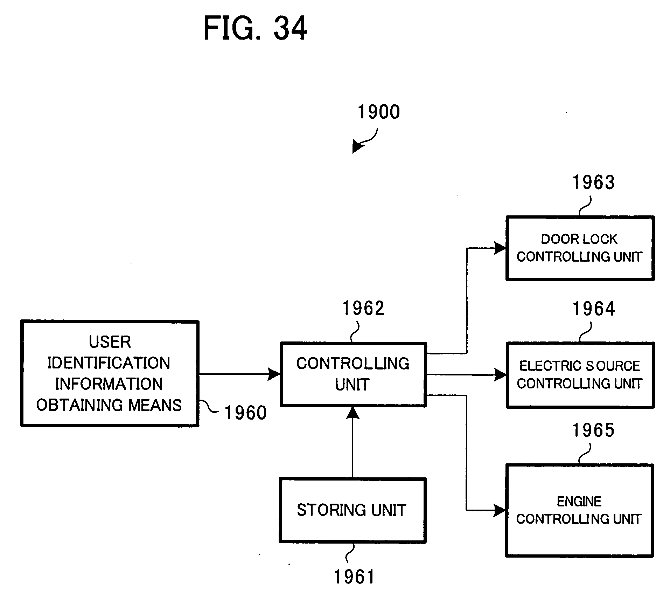

As still further example of the conventional in-vehicle apparatus controlling systems, there has been known a system which is shown in FIG. **34** and disclosed in Japanese Patent Laying-Open Publication No. 2003-120094. As shown in FIG **34,** the conventional system comprises user identification information inputting means **1960** constituted by a card reader and a fingerprint processor, a memory apparatus **1961** having user identification information previously stored therein, a controlling unit **1962** for judging whether or not a person demanding permission to utilize an automotive vehicle is identical to a registered user on the basis of the user identification information inputted by the user identification information inputting means **1960** and the user identification information stored in the memory apparatus, a door lock controlling unit **1963** for controlling door locks of the automotive vehicle on the basis of the judgment made by the controlling unit **1962,** a power source controlling unit **1964** for controlling a power source on the basis of the judgment made by the controlling unit **1962,** and an engine controlling unit **1965** for controlling an engine on the basis of the judgment made by the controlling unit **1962.** The above mentioned conventional system can allow the automotive vehicle to be utilized by the person identified as the registered user by allowing the doors of the automotive vehicle to be unlocked, allowing an electric power to be supplied, and allowing the engine to be started.

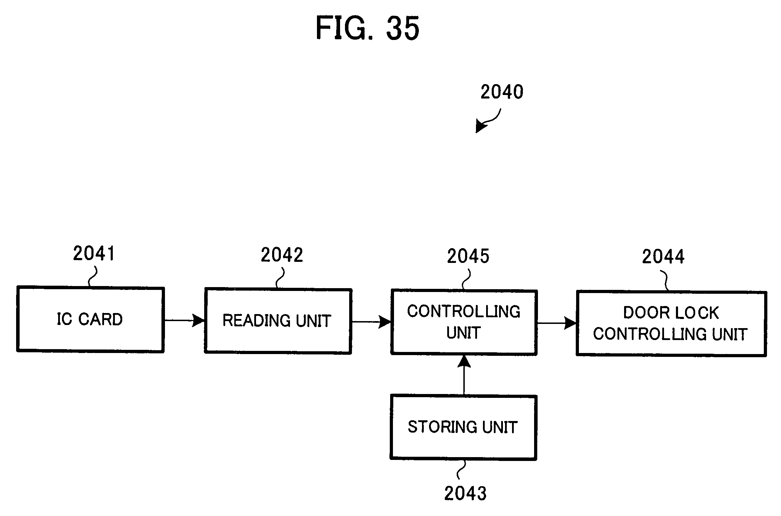

As yet further example of the conventional in-vehicle apparatus controlling systems, there has been known a system which is shown in FIG **35** and disclosed in Japanese Patent Laying-Open Publication No. 2003-120094 (FIG 1). As shown in FIG. **35,** the above mentioned conventional system **2040** comprises an IC card **2041** having user identification information stored therein, a card reader **2042** provided in the vicinity of a door knob of an automotive vehicle, the card reader **2024** being adapted to receive the user identification information from the IC card, a memory apparatus **2043** having user identification information previously stored therein, a controlling unit **2045** for controlling a door lock 2044, and performing verification of the user identification information received from the IC card **2041** with respect to the user identification information previously stored in the memory apparatus **2043.** The controlling unit **2045** is adapted to unlock doors of the automotive vehicle when the judgment is made that the user identification information received from the IC card **2041** is the same as the user identification information previously stored in the memory apparatus **2043.**

The above mentioned conventional system encounters such a problem that environmental conditions such as for example a bad weather and a dark place, and adverse conditions such as for example a sudden failure of the camera unit tend to make it difficult to obtain the optimum biometric information indicative of the person demanding permission to utilize the automotive vehicle. This leads to the fact that the above mentioned conventional system tends to prevent the person from being identified as the registered user. As a result, the above mentioned conventional system tends to prevent the doors of the automotive vehicle from being unlocked by the person identified as the registered user.

The above mentioned conventional system encounters such another problem that another condition such as for example the image taken through the lens stained with dust, or taken against a light tends to make it difficult to sufficiently obtain the biometric features indicative of the person demanding permission to utilize the automotive vehicle. This leads to the fact that the above mentioned conventional system tends to prevent the person from being identified as the registered user. As a result, the above mentioned conventional system tends to prevent the doors of the automotive vehicle from being unlocked by the person identified as the registered user.

The above mentioned conventional system encounters further problem that the information about whether or not the user identification information is immorally registered by the unregistered user, and the information about whether or not the user identification information is cancelled by the unregistered user can't be watched by the person identified as the registered user.

The above mentioned conventional system encounters still further problem that the user identification information tends to be received from the IC card under bad environments, or sudden failure of the card reader. This leads to the fact that the above mentioned conventional system tends to prevent the doors of the automotive vehicle from being unlocked when the user identification information fails to be received from the IC card.

The above mentioned conventional system encounters yet further problem that the electronic key is limited to applications such as for example permission to unlock or lock the doors of the automotive vehicle, and permission to start the engine of the automotive vehicle by reason that the information stored in the electronic key can't be updated by the user. Therefore, the in-vehicle apparatus can't be operated on the basis of the infromation stored in the electronic key.

It is, therefore, an object of the present invention to provide an in-vehicle apparatus controlling method, an in-vehicle controlling apparatus, and an in-vehicle apparatus controlling system which can judge at a relatively high accuracy and reliability whether or not the person is identical to the registered user having permission to utilize the automotive vehicle without being affected by an environmental condition such as for example a bad weather and a dark place, and other adverse condition.

It is another object of the present invention to provide an in-vehicle apparatus controlling method, an in-vehicle controlling apparatus, and an in-vehicle apparatus controlling system which can improve convenience of unlocking the doors of the automotive vehicle without decreasing the security level of the automotive vehicle, and judge at a relatively high reliability whether or not the person is identical to the registered user even if the biometric information indicative of the biometric features of the person demanding permission to utilize the automotive vehicle fails to be obtained.

It is further object of the present invention to provide an in-vehicle apparatus controlling method, an in-vehicle controlling apparatus, and an in-vehicle apparatus controlling system which can inform the registered user having permission to utilize the automotive vehicle about whether or not the user identification information is immorally registered or cancelled by the unregistered user failing to have permission to utilize the automotive vehicle.

It is still further object of the present invention to provide an in-vehicle apparatus controlling method, an in-vehicle controlling apparatus, and an in-vehicle apparatus controlling system which can control the in-vehicle apparatuses without decreasing the security level of the automotive vehicle even if the information fails to be obtained from IC card.

It is yet further object of the present invention to provide an in-vehicle apparatus controlling method, an in-vehicle controlling apparatus, and an in-vehicle apparatus controlling system which can allow the information stored in the electronic key to be updated, and allow the in-vehicle apparatus to be utilized by the person identified as the registered user on the basis of the updated information stored in the electronic key.

### DISCLOSURE OF THE INVENTION

In accordance with the present invention, there is provided an in-vehicle apparatus controlling system, comprising: an in-vehicle controlling apparatus for controlling an in-vehicle apparatus; and memory media having user identification information stored therein, the user identification information being partially constituted by biometric information indicative of a person demanding permission to utilize the in-vehicle apparatus, wherein the in-vehicle controlling apparatus includes: biometric information obtaining means for obtaining biometric information indicative of the person demanding permission to utilize the in-vehicle apparatus; storing means for storing user identification information which is partially constituted by biometric information indicative of a registered user having permission to utilize the automotive vehicle; identifying means for judging whether or not the person is identical to the registered user having permission to utilize the automotive vehicle by establishing the verification of the biometric information obtained by the biometric information obtaining means with respect to the biometric information stored by the storing means; controlling means for controlling the in-vehicle apparatus on the basis of the judgment made by the identifying means; and reading means for receiving the user identification information from the memory media, the identifying means being adapted to judge whether or not the person is identical to the registered user having permission to utilize the automotive vehicle by establishing the verification of the biometric information received by the reading means with respect to the biometric information stored in the memory media when the verification of the biometric information obtained by the biometric information obtaining means with respect to the biometric information stored by the storing means is not normally established by the identifying means.

The in-vehicle apparatus controlling system thus constructed as previously mentioned can judge at a relatively high accuracy and reliability whether or not the person is identical to the registered user without being affected by a bad weather, a dark place, and other environmental conditions by reason that the identifying means is adapted to judge whether or not the person is identical to the registered user on the basis of the biometric information obtained from the memory media when the judgment is made that the biometric information obtained by the biometric information obtaining means is accidentally unavailable for the identification of the person demanding permission to utilize the in-vehicle apparatus.

In the in-vehicle apparatus controlling system according to the present invention, the biometric information obtaining means may be constituted by a camera unit for taking an image indicative of the face of the person demanding permission to utilize the in-vehicle apparatus, and obtaining, as the biometric information, image information indicative of the face of the person demanding permission to utilize the in-vehicle apparatus.

The in-vehicle apparatus controlling system thus constructed as previously mentioned can judge at a relatively high accuracy and reliability whether or not the person is identical to the registered user without being affected by a bad weather, a dark place, the lens stained with dust, and other adverse conditions by reason that the identifying means is adapted to judge whether or not the person is identical to the registered user on the basis of the biometric information obtained from the memory media when the judgment is made that the biometric information obtained by the biometric information obtaining means is accidentally unavailable for the identification of the person demanding permission to utilize the in-vehicle apparatus.

In the in-vehicle apparatus controlling system according to the present invention, the memory media may be constituted by an electronic license card. The biometric information obtaining means may be adapted to obtain the biometric information from the electronic license card.

The in-vehicle apparatus controlling system thus constructed as previously mentioned can improve convenience and user-friendliness by judging at a relatively high accuracy and reliability whether or not the person is identical to the registered user on the basis of the verification of the biometric information received from the electronic license card when the judgment is made that the biometric information obtained by the biometric information obtaining means is accidentally unavailable for the identification of the person demanding permission to utilize the in-vehicle apparatus.

In the in-vehicle apparatus controlling system according to the present invention, the memory media ma be constituted by a non-contact type electronic license card. The biometric information obtaining means may be adapted to obtain the biometric information from the non-contact type electronic license card.

The in-vehicle apparatus controlling system thus constructed as previously mentioned can provide an enhanced operationality by reason that the biometric information is wirelessly received from the IC card when the judgment is made that the biometric information obtained by the biometric information obtaining means is accidentally unavailable for the identification of the person demanding permission to utilize the in-vehicle apparatus.

In the in-vehicle apparatus controlling system according to the present invention, the in-vehicle apparatus may be constituted by a door lock controlling apparatus provided in the automotive vehicle. The controlling means may be adapted to control the door lock controlling apparatus on the basis of the judgment made by the identifying means.

The in-vehicle apparatus controlling system thus constructed as previously mentioned can judge at a relatively high accuracy and reliability whether or not the person is identical to the registered user without being affected by a bad weather, a dark place, and other environmental conditions, and allow the doors of the automotive vehicle to be unlocked by the person identified as the registered user.

In the in-vehicle apparatus controlling system according to the present invention, the in-vehicle apparatus may be constituted by an engine starting apparatus provided in the automotive vehicle. The controlling means may be adapted to control the engine starting apparatus on the basis of the judgment made by the identifying means.

The in-vehicle apparatus controlling system thus constructed as previously mentioned can judge at a relatively high accuracy and reliability whether or not the person is identical to the registered user without being affected by a bad weather, a dark place, and other environmental conditions, and allow the engine to be started by the person identified as the registered user.

In the in-vehicle apparatus controlling system according to the present invention, the in-vehicle apparatus may be constituted by a telephone provided in the automotive vehicle. The controlling means may be adapted to control the telephone on the basis of the judgment made by the identifying means.

The in-vehicle apparatus controlling system thus constructed as previously mentioned can judge at a relatively high accuracy and reliability whether or not the person is identical to the registered user without being affected by a bad weather, a dark place, and other environmental conditions, and allow the in-vehicle telephone apparatus to be utilized by the person identified as the registered user.

In the in-vehicle apparatus controlling system according to the present invention, the in-vehicle apparatus may be constituted by an audio apparatus provided in the automotive vehicle. The controlling means may be adapted to control the audio apparatus on the basis of the judgment made by the identifying means.

The in-vehicle apparatus controlling system thus constructed as previously mentioned can judge at a relatively high accuracy and reliability whether or not the person is identical to the registered user without being affected by a bad weather, a dark place, and other environmental conditions, and allow the in-vehicle audio apparatus to be utilized by the person identified as the registered user.

In the in-vehicle apparatus controlling system according to the present invention, the in-vehicle apparatus may be constituted by an automotive instrument panel provided in the automotive vehicle. The controlling means may be adapted to control the automotive instrument panel on the basis of the judgment made by the identifying means.

The in-vehicle apparatus controlling system thus constructed as previously mentioned can judge at a relatively high accuracy and reliability whether or not the person is identical to the registered user without being affected by a bad weather, a dark place, and other environmental conditions, and allow the automotive instrument panel to be started by the person identified as the registered user.

In the in-vehicle apparatus controlling system according to the present invention, the in-vehicle apparatus may be constituted by an emergency call apparatus provided in the automotive vehicle. The controlling means may be adapted to control the emergency call apparatus on the basis of the judgment made by the identifying means.

The in-vehicle apparatus controlling system thus constructed as previously mentioned can judge at a relatively high accuracy and reliability whether or not the person is identical to the registered user without being affected by a bad weather, a dark place, and other environmental conditions, and allow the medical emergency apparatus to be started by the person identified as the registered user.

In the in-vehicle apparatus controlling system according to the present invention, the in-vehicle apparatus may be constituted by a vehicle-to-roadside communication apparatus provided in the automotive vehicle. The controlling means may be adapted to control the vehicle-to-roadside communication apparatus on the basis of the judgment made by the identifying means.

The in-vehicle apparatus controlling system thus constructed as previously mentioned can judge at a relatively high accuracy and reliability whether or not the person is identical to the registered user without being affected by a bad weather, a dark place, and other environmental conditions, and allow the vehicle-to-roadside communication apparatus to be started by the person identified as the registered user.

In accordance with the present invention, there is provided an in-vehicle apparatus controlling system, comprising: an in-vehicle controlling apparatus for controlling an in-vehicle apparatus; memory media having stored therein user identification information indicative of a person demanding permission to utilize the in-vehicle apparatus; and a mobile apparatus for performing communication with the in-vehicle controlling apparatus, wherein the mobile apparatus includes: reading means for receiving the user identification information from the memory media; storing means for storing user identification information indicative of a registered user having permission to utilize the automotive vehicle; identifying means for judging whether or not the person is identical to the registered user having permission to utilize the automotive vehicle by establishing the verification of the biometric information received by the reading means with respect to the biometric information stored by the storing means; and transmitting means for transmitting the judgment made by the identifying means to the in-vehicle controlling apparatus, and the in-vehicle controlling apparatus includes: receiving means for receiving the judgment made by the identifying means from the mobile apparatus; and controlling means for controlling the in-vehicle apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the in-vehicle apparatus on the basis of the information about whether or not the person is identified as the registered user.

In accordance with the present invention, there is provided an in-vehicle apparatus controlling system, comprising: an in-vehicle controlling apparatus for controlling an in-vehicle apparatus; memory media having stored therein user identification information indicative of a person demanding permission to utilize the in-vehicle apparatus; and a mobile apparatus for performing communication with the in-vehicle controlling apparatus, wherein the mobile apparatus includes: reading means for receiving the user identification information from the memory media; and transmitting means for transmitting the user identification information to the in-vehicle controlling apparatus, and the in-vehicle controlling apparatus includes: receiving means for receiving the user identification information from the mobile apparatus; storing means for storing user identification information indicative of a registered user having permission to utilize the automotive vehicle; identifying means for judging whether or not the person is identical to the registered user having permission to utilize the automotive vehicle by establishing the verification of the biometric information received by the reading means with respect to the biometric information stored by the storing means; and controlling means for controlling the in-vehicle apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the in-vehicle apparatus on the basis of the information about whether or not the person is identified as the registered user.

In the in-vehicle apparatus controlling system according to the present invention, the user identification information stored in the memory media may be partially constituted by biometric information indicative of a person demanding permission to utilize the in-vehicle apparatus. The user identification information stored by the storing means of the in-vehicle controlling apparatus may be partially constituted by biometric information indicative of the registered user having permission to utilize the automotive vehicle. The identifying means of the in-vehicle controlling apparatus may be adapted to judge whether or not the person is identical to the registered user having permission to utilize the automotive vehicle by establishing the verification of the biometric information received by the reading means with respect to the biometric information stored by the storing means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the biometric information received from the IC card by the reading means of the mobile apparatus when the judgment is made that the reading means of the in-vehicle controlling apparatus is in an accidental state to fail to receive the biometric information from the IC card. The in-vehicle controlling apparatus can control the in-vehicle apparatus on the basis of the information about whether or not the person is identified as the registered user.

In the in-vehicle apparatus controlling system according to the present invention, the memory media may be constituted by an electronic license card. The reading means of the mobile apparatus may be adapted to receive the user identification information from the electronic license card.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the electronic driving license by the reading means of the mobile apparatus when the judgment is made that the reading means of the in-vehicle controlling apparatus is in an accidental state to fail to receive the user identification information from the electronic driving license. The in-vehicle controlling apparatus can control the in-vehicle apparatus on the basis of the information about whether or not the person is identified as the registered user.

In the in-vehicle apparatus controlling system according to the present invention, the memory media may be constituted by a non-contact type electronic license card, and the reading means of the mobile apparatus may be adapted to receive the user identification information from the non-contact type electronic license card.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the non-contact type electronic driving license by the reading means of the mobile apparatus when the judgment is made that the reading means of the in-vehicle controlling apparatus is in an accidental state to fail to receive the user identification information from the non-contact type electronic driving license. The in-vehicle controlling apparatus can control the in-vehicle apparatus on the basis of the information about whether or not the person is identified as the registered user.

In the in-vehicle apparatus controlling system according to the present invention, the in-vehicle apparatus may be constituted by a door lock controlling apparatus provided in the automotive vehicle. The controlling means of the in-vehicle controlling apparatus may be adapted to control the door lock controlling apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the door lock controlling apparatus on the basis of the information about whether or not the person is identified as the registered user.

In the in-vehicle apparatus controlling system according to the present invention, the in-vehicle apparatus is constituted by an engine starting apparatus provided in the automotive vehicle. The controlling means of the in-vehicle controlling apparatus may be adapted to control the engine starting apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the engine starting apparatus on the basis of the information about whether or not the person is identified as the registered user.

In the in-vehicle apparatus controlling system according to the present invention, the in-vehicle apparatus may be constituted by a telephone provided in the automotive vehicle. The controlling means of the in-vehicle controlling apparatus may be adapted to control the telephone on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the in-vehicle telephone apparatus on the basis of the information about whether or not the person is identified as the registered user.

In the in-vehicle apparatus controlling system according to the present invention, the in-vehicle apparatus may be constituted by an audio apparatus provided in the automotive vehicle. The controlling means of the in-vehicle controlling apparatus may be adapted to control the audio apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the in-vehicle audio apparatus on the basis of the information about whether or not the person is identified as the registered user.

In the in-vehicle apparatus controlling system according to the present invention, the in-vehicle apparatus may be constituted by an automotive instrument panel provided in the automotive vehicle. The controlling means of the in-vehicle controlling apparatus may be adapted to control the automotive instrument panel on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the automotive instrument panel on the basis of the information about whether or not the person is identified as the registered user.

In the in-vehicle apparatus controlling system according to the present invention, the in-vehicle apparatus may be constituted by an emergency call apparatus provided in the automotive vehicle. The controlling means of the in-vehicle controlling apparatus may be adapted to control the emergency call apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the medical emergency apparatus on the basis of the information about whether or not the person is identified as the registered user.

In the in-vehicle apparatus controlling system according to the present invention, the in-vehicle apparatus may be constituted by a vehicle-to-roadside communication apparatus provided in the automotive vehicle. The controlling means of the in-vehicle controlling apparatus may be adapted to control the vehicle-to-roadside communication apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the vehicle-to-roadside communication apparatus on the basis of the information about whether or not the person is identified as the registered user.

In accordance with the present invention, there is provided an in-vehicle apparatus controlling system, comprising: an in-vehicle controlling apparatus for controlling an in-vehicle apparatus; and a mobile apparatus which is being carried by a person demanding permission to utilize the in-vehicle apparatus, the mobile apparatus being adapted to perform communication with the in-vehicle controlling apparatus, wherein the mobile apparatus includes: biometric information obtaining means for obtaining biometric information indicative of the person demanding permission to utilize the in-vehicle apparatus; and transmitting means for transmitting the biometric information obtained by the biometric information obtaining means to the in-vehicle controlling apparatus, and the in-vehicle controlling apparatus includes: receiving means for receiving the biometric information from the mobile apparatus; storing means for storing user identification information partially constituted by biometric information indicative of a registered user having permission to utilize the automotive vehicle; biometric information obtaining means for obtaining biometric information indicative of the person demanding permission to utilize the in-vehicle apparatus; identifying means for judging whether or not the person is identical to the registered user having permission to utilize the automotive vehicle by establishing the verification of the biometric information obtained by the biometric information obtaining means with respect to the biometric information forming part of the user identification information stored by the storing means; and controlling means for controlling the in-vehicle apparatus on the basis of the judgment made by the identifying means, the identifying means being adapted to judge whether or not the person is identical to the registered user having permission to utilize the automotive vehicle by establishing the verification of the biometric information received by the receiving means with respect to the biometric information forming part of the user identification information stored by the storing means when the verification of the biometric information obtained by the biometric information obtaining means with respect to the biometric information forming part of the user identification information stored by the storing means is not normally established by the identifying means.

The in-vehicle apparatus controlling system thus constructed as previously mentioned can judge at a relatively high accuracy and reliability whether or not the person is identical to the registered user even if the biometric information obtaining means is in an accidental state to fail to obtain the biometric information, and control the in-vehicle apparatus without decreasing the security level of the automotive vehicle on the basis of the information about whether or not the person is identified as the registered user.

In the in-vehicle apparatus controlling system according to the present invention, the biometric information obtained by the biometric information obtaining means of the in-vehicle controlling apparatus may be substantially the same as the biometric information obtained by the biometric information obtaining means of the mobile apparatus.

The in-vehicle apparatus controlling system thus constructed as previously mentioned can reduce the size of the biometric information previously registered and stored by the storing means, and the size of an identifying program to be executed by the identifying means.

In the in-vehicle apparatus controlling system according to the present invention, the mobile apparatus ma be constituted by a cellular phone.

The in-vehicle apparatus controlling system thus constructed as previously mentioned can be reduced in production cost by receiving the biometric information from the cellular phone.

In the in-vehicle apparatus controlling system according to the present invention, the user identification information stored by the storing means of the in-vehicle controlling apparatus may include an identification code of a mobile apparatus owned by the registered user having permission to utilize the automotive vehicle. The mobile apparatus, carried by the person demanding permission to utilize the in-vehicle apparatus, further may include storing means for storing its own identification code. The transmitting means of the mobile apparatus may be adapted to transmit the biometric information obtained by the biometric information obtaining means and the identification code stored by the storing means to the in-vehicle controlling apparatus. The receiving means of the in-vehicle controlling apparatus ma be adapted to receive the biometric information and the identification code from the mobile apparatus. The identifying means of the in-vehicle controlling apparatus may be adapted to judge that the person is identical to the registered user having permission to utilize automotive vehicle by comparing the identification code received from the mobile apparatus with the identification code stored by the storing means of the in-vehicle controlling apparatus. The controlling means of the in-vehicle controlling apparatus may be adapted to prevent the in-vehicle apparatus from being utilized by the person when the judgment is made that the identification code received from the mobile apparatus is not the same as the identification code stored by the storing means of the in-vehicle controlling apparatus. The identifying means of the in-vehicle controlling apparatus may be adapted to judge that the person is identical to the registered user having permission to utilize automotive vehicle by establishing the verification of the biometric information received from the mobile apparatus with respect to the biometric information forming part of the user identification information when the judgment is made that the identification code received from the mobile apparatus is the same as the identification code stored by the storing means of the in-vehicle controlling apparatus.

The in-vehicle apparatus controlling system thus constructed as previously mentioned can enhance the security level of the automotive vehicle by judging not only whether or not the obtained biometric information is the same as the biometric information of the registered user, but also whether or not the received identification code of the cellular phone is the same as the registered identification code.

In the in-vehicle apparatus controlling system according to the present invention, the user identification information stored by the storing means of the in-vehicle controlling apparatus may include biometric information indicative of the registered user having permission to unlock one or more locking apparatuses.

The in-vehicle apparatus controlling system thus constructed as previously mentioned can change the security level of the automotive vehicle on the basis of the keys of the automotive vehicle.

In the in-vehicle apparatus controlling system according to the present invention, the locking apparatus and the in-vehicle controlling apparatus may be mounted on the automotive vehicle.

The in-vehicle apparatus controlling system thus constructed as previously mentioned can control locks of the automotive vehicle.

In the in-vehicle apparatus controlling system according to the present invention, the biometric information obtaining means of the mobile apparatus may be constituted by a camera unit for taking an image indicative of the face of the person demanding permission to utilize the in-vehicle apparatus, and obtaining, as the biometric information, image information indicative of the face of the person demanding permission to utilize the in-vehicle apparatus. The user identification information stored by the storing means of the in-vehicle controlling apparatus may include image information indicative of the face of the registered user having permission to utilize the automotive vehicle. The identifying means of the in-vehicle controlling apparatus may be adapted to judge whether or not the person is identical to the registered user having permission to utilize the automotive vehicle by establishing the verification of the image information obtained by the camera unit of the mobile apparatus with respect to the image information stored by the storing means of the in-vehicle controlling apparatus.

The in-vehicle apparatus controlling system thus constructed as previously mentioned can judge at a relatively high accuracy and reliability whether or not the person is identical to the registered user on the basis of the verification of the biometric information indicative of the biometric features of the face of the person demanding permission to utilize the automotive vehicle without decreasing the security level of the automotive vehicle.

In the in-vehicle apparatus controlling system according to the present invention, the biometric information obtaining means of the mobile apparatus may be constituted by a microphone unit for receiving a voice of the person demanding permission to utilize the in-vehicle apparatus, and obtaining, as the biometric information, voice pattern information from the voice of the person demanding permission to utilize the in-vehicle apparatus. The user identification information stored by the storing means of the in-vehicle controlling apparatus may include voice pattern information indicative of a voice of the registered user having permission to utilize the automotive vehicle. The identifying means of the in-vehicle controlling apparatus may be adapted to judge whether or not the person is identical to the registered user having permission to utilize the automotive vehicle by establishing the verification of the voice pattern information obtained by the microphone unit of the mobile apparatus with respect to the voice pattern information stored by the storing means of the in-vehicle controlling apparatus.

The in-vehicle apparatus controlling system thus constructed as previously mentioned can judge at a relatively high accuracy and reliability whether or not the person is identical to the registered user on the basis of the verification of the biometric information indicative of the voice pattern of the person demanding permission to utilize the automotive vehicle without decreasing the security level of the automotive vehicle.

In the in-vehicle apparatus controlling system according to the present invention, the biometric information obtaining means of the mobile apparatus may be constituted by a fingerprint pattern sensor for detecting a fingerprint of the person demanding permission to utilize the in-vehicle apparatus, and obtaining, as the biometric information, fingerprint pattern information indicative of the fingerprint of the person demanding permission to utilize the in-vehicle apparatus. The user identification information stored by the storing means of the in-vehicle controlling apparatus may be include fingerprint pattern information indicative of a fingerprint pattern of a registered user having permission to utilize the automotive vehicle. The identifying means of the in-vehicle controlling apparatus may be adapted to judge whether or not the person is identical to the registered user having permission to utilize the automotive vehicle by establishing the verification of the fingerprint pattern information obtained by the fingerprint pattern sensor of the mobile apparatus with respect to the fingerprint pattern information stored by the storing means of the in-vehicle controlling apparatus.

The in-vehicle apparatus controlling system thus constructed as previously mentioned can judge at a relatively high accuracy and reliability whether or not the person is identical to the registered user on the basis of the verification of the biometric information indicative of the fingerprint pattern of the person demanding permission to utilize the automotive vehicle without decreasing the security level of the automotive vehicle.

In the in-vehicle apparatus controlling system according to the present invention, the biometric information obtaining means of the mobile apparatus may be constituted by a camera unit for taking an image of an iris of the person demanding permission to utilize the in-vehicle apparatus, and obtaining, as the biometric information, iris pattern information indicative of the iris of the person demanding permission to utilize the in-vehicle apparatus. The user identification information stored by the storing means of the in-vehicle controlling apparatus may include iris pattern information indicative of an iris of a registered user having permission to utilize the automotive vehicle. The identifying means of the in-vehicle controlling apparatus may be adapted to judge whether or not the person is identical to the registered user having permission to utilize the automotive vehicle by establishing the verification of the iris pattern information obtained by the camera unit of the mobile apparatus with respect to the iris pattern information stored by the storing means of the in-vehicle controlling apparatus.

The in-vehicle apparatus controlling system thus constructed as previously mentioned can judge at a relatively high accuracy and reliability whether or not the person is identical to the registered user on the basis of the verification of the biometric information indicative of the iris pattern of the person demanding permission to utilize the automotive vehicle without decreasing the security level of the automotive vehicle.

In accordance with the present invention, there is provided an in-vehicle apparatus controlling system, comprising: an in-vehicle controlling apparatus for controlling an in-vehicle apparatus; and a mobile apparatus which is being carried by a person demanding permission to utilize the in-vehicle apparatus, wherein the mobile apparatus includes: storing means for storing user identification information indicative of the person demanding permission to utilize the in-vehicle apparatus and personal information according to the in-vehicle apparatus; and communication means for perform communication with the in-vehicle controlling apparatus, the in-vehicle controlling apparatus includes: communication means for perform communication with the mobile apparatus; storing means for storing user identification information indicative of a registered user having permission to utilize the automotive vehicle; identifying means for judging whether or not the person is identical to the registered user having permission to utilize the automotive vehicle by establishing the verification of the user identification information received by the communication means with respect to the user identification information stored by the storing means; and controlling means for controlling the in-vehicle apparatus on the basis of the judgment made by the identifying means and the personal information received form the mobile apparatus.

The in-vehicle apparatus controlling system thus constructed as previously mentioned can allow the personal information stored in the electronic key to be updated by the person identified as the registered user by reason that the electronic key has personal information stored therein, and the controlling means is adapted to control the in-vehicle apparatus on the basis of the personal information stored in the electronic key.

In the in-vehicle apparatus controlling system according to the present invention, the personal information may include information needed for the person to utilize a telephone provided as the in-vehicle apparatus in the automotive vehicle. The controlling means of the in-vehicle controlling apparatus may be adapted to control the telephone on the basis of the judgment made by the identifying means and the personal information stored by the storing means.

The in-vehicle apparatus controlling system thus constructed as previously mentioned can allow the personal information stored in the electronic key to be updated by the person identified as the registered user, the personal information being needed for the person identified as the registered user to efficiently utilize the in-vehicle telephone apparatus.

In the in-vehicle apparatus controlling system according to the present invention, the personal information may include information needed for the person to utilize an audio-visual apparatus provided as the in-vehicle apparatus in the automotive vehicle, and adapted to reproduce both a sound and an image, or either the sound or the image from data stored in memory media. The controlling means of the in-vehicle controlling apparatus may be adapted to control the audio-visual apparatus on the basis of the judgment made by the identifying means and the personal information stored by the storing means.

The in-vehicle apparatus controlling system thus constructed as previously mentioned can allow the personal information stored in the electronic key to be updated by the person identified as the registered user, the personal information being needed for the person identified as the registered user to efficiently utilize the in-vehicle audio-visual apparatus.

In the in-vehicle apparatus controlling system according to the present invention, the personal information may include information needed for the person to drive the automotive vehicle.

The in-vehicle apparatus controlling system thus constructed as previously mentioned can allow the automotive vehicle to be efficiently utilized by the person identified by the registered user on the basis of the personal information stored in the electronic key.

In the in-vehicle apparatus controlling system according to the present invention, the personal information may include information indicative of the current and previous physical condition of the person demanding permission to utilize the in-vehicle apparatus. The in-vehicle apparatus may be constituted by an emergency call apparatus provided in the automotive vehicle. The controlling means of the in-vehicle controlling apparatus may be adapted to control the emergency call apparatus on the basis of the judgment made by the identifying means and the personal information stored by the storing means.

The in-vehicle apparatus controlling system thus constructed as previously mentioned can allow the medical emergency apparatus to immediately call in the emergency medical center when the person identified as the registered user suddenly gets out of shape in the automotive vehicle, or the person identified as the registered user is involved in an automotive vehicle accident.

In the in-vehicle apparatus controlling system according to the present invention, the personal information may include information needed for the person to purchase one or more products through a vehicle-to-roadside communication apparatus provided, as the in-vehicle apparatus, in the automotive vehicle. The in-vehicle apparatus may be constituted by a vehicle-to-roadside communication apparatus provided in the automotive vehicle. The controlling means of the in-vehicle controlling apparatus may be adapted to control the vehicle-to-roadside communication apparatus on the basis of the judgment made by the identifying means and the personal information stored by the storing means.

The in-vehicle apparatus controlling system thus constructed as previously mentioned can allow the purchase information about the products previously purchased through the vehicle-to-roadside communication apparatus to be watched by the person identified as the registered user. On the other hand, the terminal apparatus provided in each store can allow the store staffs to provide services that satisfy their customers' needs on the basis of the managed customer information.

In the in-vehicle apparatus controlling system according to the present invention, the storing means of the mobile apparatus may include driving license information storing unit for storing driving license information according to the person demanding permission to utilize the in-vehicle apparatus.

In the in-vehicle apparatus controlling system thus constructed as previously mentioned, the electronic key of the automotive vehicle can have not only the personal information but also driving license information stored thereon. Therefore, the in-vehicle apparatus controlling system can allow the electronic key of the automotive vehicle to be utilized as the electronic driving license.

In accordance with the present invention, there is provided an in-vehicle apparatus controlling system, comprising: memory media having user identification information stored therein, the user identification information being indicative of a registered user having permission to utilize the automotive vehicle; registering and canceling means for registering user identification information indicative of a new user in the memory media to allow the new user to have permission to utilize the automotive vehicle, or canceling the user identification information indicative of the previously registered user to prevent the previously registered user from having permission to utilize the automotive vehicle; user identification information obtaining means for obtaining user identification information indicative of a person demanding permission to utilize the in-vehicle apparatus; identifying means for judging whether or not the person is identical to the registered user having permission to utilize the automotive vehicle by establishing the verification of the user identification information obtained by the user identification information obtaining means with respect to the user identification information stored in the memory media; controlling means for controlling the in-vehicle apparatus on the basis of the judgment made by the identifying means; and informing means for informing about the user identification information registered or cancelled by the registering and canceling means.

The in-vehicle apparatus controlling system thus constructed as previously mentioned can inform the registered user about the fact that the user identification information is cancelled or registered by an unregistered user not having permission to utilize the automotive vehicle when the in-vehicle controlling apparatus is operated by the unregistered user by reason that the informing means is adapted to inform the person identified as a registered user about the user identification information cancelled or registered by the unregistered user.

In the in-vehicle apparatus controlling system according to the present invention, the user identification information may include image information indicative of the face of the person demanding permission to utilize the in-vehicle apparatus. The user identification information may include image information indicative of the face of the registered user having permission to utilize the automotive vehicle. The user identification information obtaining means may be constituted by a camera unit for taking an image indicative of the person to obtain image information indicative of the face of the person. The identifying means may be adapted to judge whether or not the person is identical to the registered user having permission to utilize the automotive vehicle by establishing the verification of the image information obtained by the camera unit with respect to the image information stored in the memory media.

The in-vehicle apparatus controlling system thus constructed as previously mentioned can inform the registered user about the fact that the user identification information is cancelled or registered by an unregistered user not having permission to utilize the automotive vehicle when the in-vehicle controlling apparatus is operated by the unregistered user by reason that the informing means is adapted to inform the person identified as a registered user on the basis of the user identification information including the face information about the user identification information cancelled or registered by the unregistered user.

In the in-vehicle apparatus controlling system according to the present invention, the user identification information may include voice pattern information indicative of a voice of the person demanding permission to utilize the in-vehicle apparatus. The user identification information may include voice pattern information indicative of a voice of the registered user having permission to utilize the automotive vehicle. The user identification information obtaining means may be constituted by a microphone unit for receiving a voice of the person demanding permission to utilize the in-vehicle apparatus, and obtaining, as the biometric information, voice pattern information from the voice of the person demanding permission to utilize the in-vehicle apparatus. The identifying means may be adapted to judge whether or not the person is identical to the registered user having permission to utilize the automotive vehicle by establishing the verification of the voice pattern information obtained by the microphone unit with respect to the voice pattern information stored in the memory media.

The in-vehicle apparatus controlling system thus constructed as previously mentioned can inform the registered user about the fact that the user identification information is cancelled or registered by an unregistered user not having permission to utilize the automotive vehicle when the in-vehicle controlling apparatus is operated by the unregistered user by reason that the informing means is adapted to inform the person identified as a registered user on the basis of the user identification information including the voice pattern information about the user identification information cancelled or registered by the unregistered user.

In the in-vehicle apparatus controlling system according to the present invention, the user identification information may include fingerprint pattern information indicative of a fingerprint of the person demanding permission to utilize the in-vehicle apparatus. The user identification information may include fingerprint pattern information indicative of a fingerprint of the registered user having permission to utilize the automotive vehicle. The user identification information obtaining means may be constituted by a fingerprint pattern sensor for detecting the fingerprint of the person demanding permission to utilize the in-vehicle apparatus, and obtaining fingerprint pattern information indicative of the detected fingerprint, and the identifying means is adapted to judge whether or not the person is identical to the registered user having permission to utilize the automotive vehicle by establishing the verification of the fingerprint pattern information obtained by the fingerprint pattern sensor with respect to the fingerprint pattern information stored in the memory media.

The in-vehicle apparatus controlling system thus constructed as previously mentioned can inform the registered user about the fact that the user identification information is cancelled or registered by an unregistered user not having permission to utilize the automotive vehicle when the in-vehicle controlling apparatus is operated by the unregistered user by reason that the informing means is adapted to inform the person identified as a registered user on the basis of the user identification information including the fingerprint pattern information about the user identification information cancelled or registered by the unregistered user.

In the in-vehicle apparatus controlling system according to the present invention, the user identification information includes iris pattern information indicative of an iris of the person demanding permission to utilize the in-vehicle apparatus, the user identification information includes iris pattern information indicative of an iris of the registered user having permission to utilize the automotive vehicle, the user identification information obtaining means is constituted by a camera unit for taking an image indicative of the person demanding permission to utilize the in-vehicle apparatus, and obtaining iris pattern information indicative of the iris of the person, and the identifying means is adapted to judge whether or not the person is identical to the registered user having permission to utilize the automotive vehicle by establishing the verification of the iris pattern information obtained by the camera unit with respect to the iris pattern information stored in the memory media.

The in-vehicle apparatus controlling system thus constructed as previously mentioned can inform the registered user about the fact that the user identification information is cancelled or registered by an unregistered user not having permission to utilize the automotive vehicle when the in-vehicle controlling apparatus is operated by the unregistered user by reason that the informing means is adapted to inform the person identified as a registered user on the basis of the user identification information including the iris pattern information about the user identification information cancelled or registered by the unregistered user.

The in-vehicle apparatus controlling system according to the present invention may comprise an integrated circuit card having user identification information stored therein. The user identification information obtaining means may be adapted to obtain the user identification information from the integrated circuit card by performing communication with the integrated circuit card.

The in-vehicle apparatus controlling system thus constructed as previously mentioned can inform the registered user about whether or not the registered user identification information is cancelled or registered by the unregistered user by reason that the informing means is operative to inform the person identified on the basis of the user identification information including biometric information received from the cellular phone about whether or not the registered user identification information is cancelled or registered by the unregistered user.

In the in-vehicle apparatus controlling system according to the present invention, the integrated circuit card may be constituted by an electronic license card.

The in-vehicle apparatus controlling system thus constructed as previously mentioned can inform the registered user about whether or not the registered user identification information is cancelled or registered by the unregistered user by reason that the informing means is operative to inform the person identified as the registered user about whether or not the registered user identification information is cancelled or registered by the unregistered user.

In the in-vehicle apparatus controlling system according to the present invention, the informing means may be adapted to inform about the user identification information registered or cancelled by the registering and canceling means when the judgment is made by the identifying means that the person is identical to the registered user having permission to utilize the automotive vehicle.

The in-vehicle apparatus controlling system thus constructed as previously mentioned can enhance the convenience of the IC card by reason that the IC card has the user identification information with the driving license information such as for example an issue number of the driving license stored therein. This leads to the fact that the in-vehicle apparatus controlling system can easily specify a person who operates the in-vehicle controlling apparatus to have the in-vehicle controlling apparatus perform the irregular cancellation or registration of the user identification information.

The in-vehicle apparatus controlling system according to the present invention may further comprise in-vehicle apparatus immobilizing means for preventing the in-vehicle apparatus from being started when the judgment is made that the person is not identical to the user having permission to utilize the automotive vehicle.

The in-vehicle apparatus controlling system thus constructed as previously mentioned can allow the newly registered and cancelled user identification information to be watched by only so many users such as for example an owner. In other words, the in-vehicle apparatus controlling system thus constructed as previously mentioned can prevent the registered user identification information from being leaked by the unregistered user.

In the in-vehicle apparatus controlling system according to the present invention, the in-vehicle apparatus may include an engine controlling apparatus for allowing an engine of the automotive vehicle to be started.

The in-vehicle apparatus controlling system thus constructed as previously mentioned can prevent the in-vehicle apparatuses from being unnecessarily utilized by the person, when the automotive vehicle is temporarily leased for the person by the owner, by reason that the controlling means is adapted to allow the in-vehicle apparatus to be utilized by one or more specific persons each having permission to utilize the in-vehicle apparatus on the basis of the judgment made by the identifying means.

The in-vehicle apparatus controlling system according to the present invention, may further comprise start signal outputting means for outputting a start signal to the user identification information obtaining means in order to have the user identification information obtaining means started. The user identification information obtaining means may be adapted to assume an active state over a predetermined period in response to the start signal.

The in-vehicle apparatus controlling system thus constructed as previously mentioned can prevent the in-vehicle apparatuses from being unnecessarily utilized by the person, when the automotive vehicle is temporarily leased for the person by the owner, by reason that the controlling means is adapted to allow the in-vehicle apparatus to be utilized by one or more specific persons each having permission to utilize the in-vehicle apparatus on the basis of the judgment made by the identifying means.

In accordance with the present invention, there is provided an in-vehicle controlling apparatus, comprising: biometric information obtaining means for obtaining biometric information indicative of a person demanding permission to utilize an in-vehicle apparatus; storing means for storing user identification information which is partially constituted by biometric information indicative of a registered user having permission to utilize an automotive vehicle; identifying means for judging whether or not the person is identical to the registered user having permission to utilize the automotive vehicle by establishing the verification of the biometric information obtained by the biometric information obtaining means with respect to the biometric information stored by the storing means; controlling means for controlling the in-vehicle apparatus on the basis of the judgment made by the identifying means; and reading means for receiving the user identification information from a memory media, wherein the identifying means is adapted to judge whether or not the person is identical to the registered user having permission to utilize the automotive vehicle by establishing the verification of the biometric information received by the reading means with respect to the biometric information stored in the memory media when the verification of the biometric information obtained by the biometric information obtaining means with respect to the biometric information stored by the storing means is not normally established by the identifying means.

The in-vehicle controlling apparatus thus constructed as previously mentioned can judge at a relatively high accuracy and reliability whether or not the person is identical to the registered user without being affected by a bad weather, a dark place, and other environmental conditions by reason that the identifying means is adapted to judge whether or not the person is identical to the registered user on the basis of the biometric information obtained from the memory media when the judgment is made that the biometric information obtained by the biometric information obtaining means is accidentally unavailable for the identification of the person demanding permission to utilize the in-vehicle apparatus.

In the in-vehicle controlling apparatus according to the present invention, the biometric information obtaining means may be constituted by a camera unit for taking an image indicative of the face of the person demanding permission to utilize the in-vehicle apparatus, and obtaining, as the biometric information, image information indicative of the face of the person demanding permission to utilize the in-vehicle apparatus.

The in-vehicle controlling apparatus thus constructed as previously mentioned can judge at a relatively high accuracy and reliability whether or not the person is identical to the registered user without being affected by a bad weather, a dark place, the lens stained with dust, and other adverse conditions by reason that the identifying means is adapted to judge whether or not the person is identical to the registered user on the basis of the biometric information obtained from the memory media when the judgment is made that the biometric information obtained by the biometric information obtaining means is accidentally unavailable for the identification of the person demanding permission to utilize the in-vehicle apparatus.

In the in-vehicle controlling apparatus according to the present invention, the memory media may be constituted by an electronic license card. The biometric information obtaining means may be adapted to obtain the biometric information from the electronic license card.

The in-vehicle controlling apparatus thus constructed as previously mentioned can improve convenience and user-friendliness by judging at a relatively high accuracy and reliability whether or not the person is identical to the registered user on the basis of the verification of the biometric information received from the electronic license card when the judgment is made that the biometric information obtained by the biometric information obtaining means is accidentally unavailable for the identification of the person demanding permission to utilize the in-vehicle apparatus.

In the in-vehicle controlling apparatus according to the present invention, the memory media may be constituted by a non-contact type electronic license card. The biometric information obtaining means may be adapted to obtain the biometric information from the non-contact type electronic license card.

The in-vehicle controlling apparatus thus constructed as previously mentioned can provide an enhanced operationality by reason that the biometric information is wirelessly received from the IC card when the judgment is made that the biometric information obtained by the biometric information obtaining means is accidentally unavailable for the identification of the person demanding permission to utilize the in-vehicle apparatus.

In the in-vehicle controlling apparatus according to the present invention, the in-vehicle apparatus may be constituted by a door lock controlling apparatus provided in the automotive vehicle. The controlling means may be adapted to control the door lock controlling apparatus on the basis of the judgment made by the identifying means.

The in-vehicle controlling apparatus thus constructed as previously mentioned can judge at a relatively high accuracy and reliability whether or not the person is identical to the registered user without being affected by a bad weather, a dark place, and other environmental conditions, and allow the doors of the automotive vehicle to be unlocked by the person identified as the registered user.

In the in-vehicle controlling apparatus according to the present invention, the in-vehicle apparatus may be constituted by an engine starting apparatus provided in the automotive vehicle. The controlling means may be adapted to control the engine starting apparatus on the basis of the judgment made by the identifying means.

The in-vehicle controlling apparatus thus constructed as previously mentioned can judge at a relatively high accuracy and reliability whether or not the person is identical to the registered user without being affected by a bad weather, a dark place, and other environmental conditions, and allow the engine to be started by the person identified as the registered user.

In the in-vehicle controlling apparatus according to the present invention, the in-vehicle apparatus may be constituted by a telephone provided in the automotive vehicle. The controlling means may be adapted to control the telephone on the basis of the judgment made by the identifying means.

The in-vehicle controlling apparatus thus constructed as previously mentioned can judge at a relatively high accuracy and reliability whether or not the person is identical to the registered user without being affected by a bad weather, a dark place, and other environmental conditions, and allow the in-vehicle telephone apparatus to be utilized by the person identified as the registered user.

In the in-vehicle controlling apparatus according to the present invention, the in-vehicle apparatus may be constituted by an audio apparatus provided in the automotive vehicle. The controlling means may be adapted to control the audio apparatus on the basis of the judgment made by the identifying means.

The in-vehicle controlling apparatus thus constructed as previously mentioned can judge at a relatively high accuracy and reliability whether or not the person is identical to the registered user without being affected by a bad weather, a dark place, and other environmental conditions, and allow the in-vehicle audio apparatus to be utilized by the person identified as the registered user.

In the in-vehicle controlling apparatus according to the present invention, the in-vehicle apparatus may be constituted by an automotive instrument panel provided in the automotive vehicle. The controlling means may be adapted to control the automotive instrument panel on the basis of the judgment made by the identifying means.

The in-vehicle controlling apparatus thus constructed as previously mentioned can judge at a relatively high accuracy and reliability whether or not the person is identical to the registered user without being affected by a bad weather, a dark place, and other environmental conditions, and allow the automotive instrument panel to be started by the person identified as the registered user.

In the in-vehicle controlling apparatus according to the present invention, the in-vehicle apparatus may be constituted by an emergency call apparatus provided in the automotive vehicle. The controlling means may be adapted to control the emergency call apparatus on the basis of the judgment made by the identifying means.

The in-vehicle controlling apparatus thus constructed as previously mentioned can judge at a relatively high accuracy and reliability whether or not the person is identical to the registered user without being affected by a bad weather, a dark place, and other environmental conditions, and allow the medical emergency apparatus to be started by the person identified as the registered user.

In the in-vehicle controlling apparatus according to the present invention, the in-vehicle apparatus may be constituted by a vehicle-to-roadside communication apparatus provided in the automotive vehicle. The controlling means may be adapted to control the vehicle-to-roadside communication apparatus on the basis of the judgment made by the identifying means.

The in-vehicle controlling apparatus thus constructed as previously mentioned can judge at a relatively high accuracy and reliability whether or not the person is identical to the registered user without being affected by a bad weather, a dark place, and other environmental conditions, and allow the vehicle-to-roadside communication apparatus to be started by the person identified as the registered user.

In accordance with the present invention, there is provided an in-vehicle controlling apparatus, comprising: receiving means for receiving the judgment made by the identifying means from a mobile apparatus; and controlling means for controlling an in-vehicle apparatus on the basis of the judgment made by the identifying means.

The in-vehicle controlling apparatus thus constructed as previously mentioned can judge at a relatively high accuracy and reliability whether or not the person is identical to the registered user on the basis of the verification of the user identification information received from the IC card by the reading means of the mobile apparatus when the judgment is made that the reading means is in an accidental state to fail to receive the user identification information from the IC card. The in-vehicle controlling apparatus can control the in-vehicle apparatus on the basis of the information about whether or not the person is identified as the registered user.

In accordance with the present invention, there is provided an in-vehicle controlling apparatus, comprising: receiving means for receiving user identification information from a mobile apparatus; storing means for storing user identification information indicative of a registered user having permission to utilize an automotive vehicle; identifying means for judging whether or not a person is identical to the registered user having permission to utilize the automotive vehicle by establishing the verification of the biometric information received by the reading means with respect to the biometric information stored by the storing means; and controlling means for controlling an in-vehicle apparatus on the basis of the judgment made by the identifying means.

The in-vehicle controlling apparatus thus constructed as previously mentioned can judge at a relatively high accuracy and reliability whether or not the person is identical to the registered user on the basis of the verification of the user identification information received from the IC card by the reading means of the mobile apparatus when the judgment is made that the reading means is in an accidental state to fail to receive the user identification information from the IC card. The in-vehicle controlling apparatus can control the in-vehicle apparatus on the basis of the information about whether or not the person is identified as the registered user.

In the in-vehicle controlling apparatus according to the present invention, the user identification information stored in the memory media may be partially constituted by biometric information indicative of a person demanding permission to utilize the in-vehicle apparatus. The user identification information stored by the storing means of the in-vehicle controlling apparatus may be partially constituted by biometric information indicative of the registered user having permission to utilize the automotive vehicle. The identifying means of the in-vehicle controlling apparatus may be adapted to judge whether or not the person is identical to the registered user having permission to utilize the automotive vehicle by establishing the verification of the biometric information received by the reading means with respect to the biometric information stored by the storing means.

The in-vehicle controlling apparatus thus constructed as previously mentioned can judge at a relatively high accuracy and reliability whether or not the person is identical to the registered user on the basis of the verification of the biometric information received from the IC card by the reading means of the mobile apparatus when the judgment is made that the reading means is in an accidental state to fail to receive the biometric information from the IC card. The in-vehicle controlling apparatus can control the in-vehicle apparatus on the basis of the information about whether or not the person is identified as the registered user.

In the in-vehicle controlling apparatus according to the present invention, the memory media may be constituted by an electronic license card. The reading means of the mobile apparatus may be adapted to receive the user identification information from the electronic license card.

The in-vehicle controlling apparatus thus constructed as previously mentioned can judge at a relatively high accuracy and reliability whether or not the person is identical to the registered user on the basis of the verification of the user identification information received from the electronic driving license by the reading means of the mobile apparatus when the judgment is made that the reading means is in an accidental state to fail to receive the user identification information from the electronic driving license. The in-vehicle controlling apparatus can control the in-vehicle apparatus on the basis of the information about whether or not the person is identified as the registered user.

In the in-vehicle controlling apparatus according to the present invention, the memory media may be constituted by a non-contact type electronic license card. The reading means of the mobile apparatus may be adapted to receive the user identification information from the non-contact type electronic license card.

The in-vehicle controlling apparatus thus constructed as previously mentioned can judge at a relatively high accuracy and reliability whether or not the person is identical to the registered user on the basis of the verification of the user identification information received from the non-contact type electronic driving license by the reading means of the mobile apparatus when the judgment is made that the reading means is in an accidental state to fail to receive the user identification information from the non-contact type electronic driving license. The in-vehicle controlling apparatus can control the in-vehicle apparatus on the basis of the information about whether or not the person is identified as the registered user.

In the in-vehicle controlling apparatus according to the present invention, the in-vehicle apparatus may be constituted by a door lock controlling apparatus provided in the automotive vehicle. The controlling means of the in-vehicle controlling apparatus may be adapted to control the door lock controlling apparatus on the basis of the judgment made by the identifying means.

The in-vehicle controlling apparatus thus constructed as previously mentioned can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the door lock controlling apparatus on the basis of the information about whether or not the person is identified as the registered user.

In the in-vehicle controlling apparatus according to the present invention, the in-vehicle apparatus may be constituted by an engine starting apparatus provided in the automotive vehicle. The controlling means of the in-vehicle controlling apparatus may be adapted to control the engine starting apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the engine starting apparatus on the basis of the information about whether or not the person is identified as the registered user.

In the in-vehicle controlling apparatus according to the present invention, the in-vehicle apparatus may be constituted by a telephone provided in the automotive vehicle. The controlling means of the in-vehicle controlling apparatus may be adapted to control the telephone on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the in-vehicle telephone apparatus on the basis of the information about whether or not the person is identified as the registered user.

In the in-vehicle controlling apparatus according to the present invention, the in-vehicle apparatus may be constituted by an audio apparatus provided in the automotive vehicle. The controlling means of the in-vehicle controlling apparatus may be adapted to control the audio apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the in-vehicle audio apparatus on the basis of the information about whether or not the person is identified as the registered user.

In the in-vehicle controlling apparatus according to the present invention, the in-vehicle apparatus may be constituted by an automotive instrument panel provided in the automotive vehicle. The controlling means of the in-vehicle controlling apparatus may be adapted to control the automotive instrument panel on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the automotive instrument panel on the basis of the information about whether or not the person is identified as the registered user.

In the in-vehicle controlling apparatus according to the present invention, the in-vehicle apparatus may be constituted by an emergency call apparatus provided in the automotive vehicle. The controlling means of the in-vehicle controlling apparatus may be adapted to control the emergency call apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the medical emergency apparatus on the basis of the information about whether or not the person is identified as the registered user.

In the in-vehicle controlling apparatus according to the present invention, the in-vehicle apparatus may be constituted by a vehicle-to-roadside communication apparatus provided in the automotive vehicle. The controlling means of the in-vehicle controlling apparatus may be adapted to control the vehicle-to-roadside communication apparatus on the basis of the judgment made by the identifying means.

In the in-vehicle apparatus controlling system thus constructed as previously mentioned, the mobile apparatus or the in-vehicle controlling apparatus can judge at a relatively high accuracy and reliability whether or not the person is identical to the registered user on the basis of the verification of the user identification information received from the IC card by the reading means of the mobile apparatus when the judgment is made that the reading means of the in-vehicle controlling apparatus is in an accidental state to fail to receive the user identification information from the IC card. The in-vehicle controlling apparatus can control the vehicle-to-roadside communication apparatus on the basis of the information about whether or not the person is identified as the registered user.

In accordance with the present invention, there is provided an in-vehicle controlling apparatus, comprising: receiving means for receiving biometric information from a mobile apparatus which is being carried by a person demanding permission to utilize an in-vehicle apparatus, the biometric information being indicative of the person demanding permission to utilize the in-vehicle apparatus; storing means for storing user identification information partially constituted by biometric information indicative of a registered user having permission to utilize an automotive vehicle; biometric information obtaining means for obtaining biometric information indicative of the person demanding permission to utilize the in-vehicle apparatus; identifying means for judging whether or not the person is identical to the registered user having permission to utilize the automotive vehicle by establishing the verification of the biometric information obtained by the biometric information obtaining means with respect to the biometric information forming part of the user identification information stored by the storing means; and controlling means for controlling the in-vehicle apparatus on the basis of the judgment made by the identifying means, wherein the identifying means is adapted to judge whether or not the person is identical to the registered user having permission to utilize the automotive vehicle by establishing the verification of the biometric information received by the receiving means with respect to the biometric information forming part of the user identification information stored by the storing means when the verification of the biometric information obtained by the biometric information obtaining means with respect to the biometric information forming part of the user identification information stored by the storing means is not normally established by the identifying means.

In the in-vehicle apparatus controlling system thus constructed as previously mentioned, the in-vehicle controlling apparatus can judge at a relatively high accuracy and reliability whether or not the person is identical to the registered user even if the biometric information obtaining means is in an accidental state to fail to obtain the biometric information, and control the in-vehicle apparatus without decreasing the security level of the automotive vehicle on the basis of the information about whether or not the person is identified as the registered user.

In the in-vehicle controlling apparatus according to the present invention, the biometric information obtained by the biometric information obtaining means of the in-vehicle controlling apparatus may be substantially the same as the biometric information obtained by the biometric information obtaining means of the mobile apparatus.

The in-vehicle apparatus controlling system thus constructed as previously mentioned can reduce the size of the biometric information previously registered and stored by the storing means, and the size of an identifying program to be executed by the identifying means.

In the in-vehicle controlling apparatus according to the present invention, the mobile apparatus may be constituted by a cellular phone.

The in-vehicle apparatus controlling system thus constructed as previously mentioned can be reduced in production cost by receiving the biometric information from the cellular phone.

In the in-vehicle controlling apparatus according to the present invention, the user identification information stored by the storing means may include an identification code of a mobile apparatus which is being owned by the registered user having permission to utilize the automotive vehicle. The mobile apparatus, carried by the person demanding permission to utilize the in-vehicle apparatus, may further include storing means for storing its own identification code. The transmitting means of the mobile apparatus may be adapted to transmit the biometric information obtained by the biometric information obtaining means and the identification code stored by the storing means to the in-vehicle controlling apparatus. The receiving means of the in-vehicle controlling apparatus may be adapted to receive the biometric information and the identification code from the mobile apparatus. The identifying means of the in-vehicle controlling apparatus may be adapted to judge that the person is identical to the registered user having permission to utilize automotive vehicle by comparing the identification code received from the mobile apparatus with the identification code stored by the storing means of the in-vehicle controlling apparatus. The controlling means of the in-vehicle controlling apparatus may be adapted to prevent the in-vehicle apparatus from being utilized by the person when the judgment is made that the identification code received from the mobile apparatus is not the same as the identification code stored by the storing means of the in-vehicle controlling apparatus. The identifying means of the in-vehicle controlling apparatus may be adapted to judge that the person is identical to the registered user having permission to utilize automotive vehicle by establishing the verification of the biometric information received from the mobile apparatus with respect to the biometric information forming part of the user identification information when the judgment is made that the identification code received from the mobile apparatus is the same as the identification code stored by the storing means of the in-vehicle controlling apparatus.

The in-vehicle apparatus controlling system thus constructed as previously mentioned can enhance the security level of the automotive vehicle by judging not only whether or not the obtained biometric information is the same as the biometric information of the registered user, but also whether or not the received identification code of the cellular phone is the same as the registered identification code.

In the in-vehicle controlling apparatus according to the present invention, the user identification information stored by the storing means of the in-vehicle controlling apparatus may include biometric information indicative of the registered user having permission to unlock one or more locking apparatuses.

The in-vehicle apparatus controlling system thus constructed as previously mentioned can change the security level of the automotive vehicle on the basis of the keys of the automotive vehicle.

In the in-vehicle controlling apparatus according to the present invention, the locking apparatus and the in-vehicle controlling apparatus may be mounted on the automotive vehicle.

In the in-vehicle apparatus controlling system thus constructed as previously mentioned, the in-vehicle controlling apparatus can control locks of the automotive vehicle.

In the in-vehicle controlling apparatus according to the present invention, the biometric information obtaining means of the mobile apparatus may be constituted by a camera unit for taking an image indicative of the face of the person demanding permission to utilize the in-vehicle apparatus, and obtaining, as the biometric information, image information indicative of the face of the person demanding permission to utilize the in-vehicle apparatus. The user identification information stored by the storing means may include image information indicative of the face of the registered user having permission to utilize the automotive vehicle. The identifying means may be adapted to judge whether or not the person is identical to the registered user having permission to utilize the automotive vehicle by establishing the verification of the image information obtained by the camera unit of the mobile apparatus with respect to the image information stored by the storing means.

In the in-vehicle apparatus controlling system thus constructed as previously mentioned, the in-vehicle controlling apparatus can judge at a relatively high accuracy and reliability whether or not the person is identical to the registered user on the basis of the verification of the biometric information indicative of the biometric features of the face of the person demanding permission to utilize the automotive vehicle without decreasing the security level of the automotive vehicle.

In the in-vehicle controlling apparatus according to the present invention, the biometric information obtaining means of the mobile apparatus may be constituted by a microphone unit for receiving a voice of the person demanding permission to utilize the in-vehicle apparatus, and obtaining, as the biometric information, voice pattern information from the voice of the person demanding permission to utilize the in-vehicle apparatus. The user identification information stored by the storing means may include voice pattern information indicative of a voice of the registered user having permission to utilize the automotive vehicle. The identifying means may be adapted to judge whether or not the person is identical to the registered user having permission to utilize the automotive vehicle by establishing the verification of the voice pattern information obtained by the microphone unit of the mobile apparatus with respect to the voice pattern information stored by the storing means.

In the in-vehicle apparatus controlling system thus constructed as previously mentioned, the in-vehicle controlling apparatus can judge at a relatively high accuracy and reliability whether or not the person is identical to the registered user on the basis of the verification of the biometric information indicative of the voice pattern of the person demanding permission to utilize the automotive vehicle without decreasing the security level of the automotive vehicle.

In the in-vehicle controlling apparatus according to the present invention, the biometric information obtaining means of the mobile apparatus may be constituted by a fingerprint pattern sensor for detecting a fingerprint of the person demanding permission to utilize the in-vehicle apparatus, and obtaining, as the biometric information, fingerprint pattern information indicative of the fingerprint of the person demanding permission to utilize the in-vehicle apparatus. The user identification information stored by the storing means may include fingerprint pattern information indicative of a fingerprint pattern of a registered user having permission to utilize the automotive vehicle. The identifying means may be adapted to judge whether or not the person is identical to the registered user having permission to utilize the automotive vehicle by establishing the verification of the fingerprint pattern information obtained by the fingerprint pattern sensor of the mobile apparatus with respect to the fingerprint pattern information stored by the storing means.

In the in-vehicle apparatus controlling system thus constructed as previously mentioned, the in-vehicle controlling apparatus can judge at a relatively high accuracy and reliability whether or not the person is identical to the registered user on the basis of the verification of the biometric information indicative of the fingerprint pattern of the person demanding permission to utilize the automotive vehicle without decreasing the security level of the automotive vehicle.

In the in-vehicle controlling apparatus according to the present invention, the biometric information obtaining means of the mobile apparatus may be constituted by a camera unit for taking an image of an iris of the person demanding permission to utilize the in-vehicle apparatus, and obtaining, as the biometric information, iris pattern information indicative of the iris of the person demanding permission to utilize the in-vehicle apparatus. The user identification information stored by the storing means may include iris pattern information indicative of an iris of a registered user having permission to utilize the automotive vehicle. The identifying means may be adapted to judge whether or not the person is identical to the registered user having permission to utilize the automotive vehicle by establishing the verification of the iris pattern information obtained by the camera unit of the mobile apparatus with respect to the iris pattern information stored by the storing means.

In the in-vehicle apparatus controlling system thus constructed as previously mentioned, the in-vehicle controlling apparatus can judge at a relatively high accuracy and reliability whether or not the person is identical to the registered user on the basis of the verification of the biometric information indicative of the iris pattern of the person demanding permission to utilize the automotive vehicle without decreasing the security level of the automotive vehicle.

In accordance with the present invention, there is provided an in-vehicle controlling apparatus, comprising: communication means for receiving user identification information and personal information according to an in-vehicle apparatus from a mobile phone, the user identification information being indicative of a person demanding permission to utilize the in-vehicle apparatus; storing means for storing user identification information indicative of a registered user having permission to utilize an automotive vehicle; identifying means for judging whether or not the person is identical to the registered user having permission to utilize the automotive vehicle by establishing the verification of the user identification information received by the communication means with respect to the user identification information stored by the storing means; and controlling means for controlling the in-vehicle apparatus on the basis of the judgment made by the identifying means and the personal information received form the mobile apparatus.

The in-vehicle apparatus controlling system thus constructed as previously mentioned can allow the personal information stored in the electronic key to be updated by the person identified as the registered user by reason that the electronic key has personal information stored therein, and the controlling means is adapted to control the in-vehicle apparatus on the basis of the personal information stored in the electronic key.

In the in-vehicle controlling apparatus according to the present invention, the personal information may include information needed for the person to utilize a telephone provided as the in-vehicle apparatus in the automotive vehicle. The controlling means may be adapted to control the telephone on the basis of the judgment made by the identifying means and the personal information stored by the storing means.

The in-vehicle apparatus controlling system thus constructed as previously mentioned can allow the personal information stored in the electronic key to be updated by the person identified as the registered user, the personal information being needed for the person identified as the registered user to efficiently utilize the in-vehicle telephone apparatus.

In the in-vehicle controlling apparatus according to the present invention, the personal information may include information needed for the person to utilize an audio-visual apparatus provided as the in-vehicle apparatus in the automotive vehicle, the audio-visual apparatus being adapted to reproduce both a sound and an image, or either the sound or the image from data stored in memory media. The controlling means may be adapted to control the audio-visual apparatus on the basis of the judgment made by the identifying means and the personal information stored by the storing means.

The in-vehicle apparatus controlling system thus constructed as previously mentioned can allow the personal information stored in the electronic key to be updated by the person identified as the registered user, the personal information being needed for the person identified as the registered user to efficiently utilize the in-vehicle audio-visual apparatus.

In the in-vehicle controlling apparatus according to the present invention, the personal information may include information needed for the person to drive the automotive vehicle.

The in-vehicle apparatus controlling system thus constructed as previously mentioned can allow the automotive vehicle to be efficiently utilized by the person identified by the registered user on the basis of the personal information stored in the electronic key.

In the in-vehicle controlling apparatus according to the present invention, the personal information may include information indicative of the current and previous physical condition of the person demanding permission to utilize the in-vehicle apparatus. The controlling means may be adapted to control an emergency call apparatus provided as the in-vehicle apparatus in the automotive vehicle on the basis of the judgment made by the identifying means and the personal information stored by the storing means.

The in-vehicle apparatus controlling system thus constructed as previously mentioned can allow the medical emergency apparatus to immediately call in the emergency medical center when the person identified as the registered user suddenly gets out of shape in the automotive vehicle, or the person identified as the registered user is involved in an automotive vehicle accident.

In the in-vehicle controlling apparatus according to the present invention, the personal information may include information needed for the person to purchase one or more products through a vehicle-to-roadside communication apparatus provided as the in-vehicle apparatus in the automotive vehicle. The controlling means may be adapted to control a vehicle-to-roadside communication apparatus mounted, as the in-vehicle apparatus, on the automotive vehicle on the basis of the judgment made by the identifying means and the personal information stored by the storing means.

The in-vehicle apparatus controlling system thus constructed as previously mentioned can allow the purchase information about the products previously purchased through the vehicle-to-roadside communication apparatus to be watched by the person identified as the registered user. On the other hand, the terminal apparatus provided in each store can allow the store staffs to provide services that satisfy their customers' needs on the basis of the managed customer information.

In the in-vehicle controlling apparatus according to the present invention, the storing means of the mobile apparatus may include driving license information storing unit for storing driving license information according to the person demanding permission to utilize the in-vehicle apparatus.

In the in-vehicle controlling apparatus thus constructed as previously mentioned, the electronic key of the automotive vehicle can have not only the personal information but also driving license information stored thereon. Therefore, the in-vehicle apparatus controlling system can allow the electronic key of the automotive vehicle to be utilized as the electronic driving license.

In accordance with the present invention, there is provided an in-vehicle controlling apparatus, comprising: memory media having user identification information stored therein, the user identification information being indicative of a registered user having permission to utilize the automotive vehicle; registering and canceling means for registering user identification information indicative of a new user in the memory media to allow the new user to have permission to utilize the automotive vehicle, or canceling the user identification information indicative of the previously registered user to prevent the previously registered user from having permission to utilize the automotive vehicle; user identification information obtaining means for obtaining user identification information indicative of a person demanding permission to utilize the in-vehicle apparatus; identifying means for judging whether or not the person is identical to the registered user having permission to utilize the automotive vehicle by establishing the verification of the user identification information obtained by the user identification information obtaining means with respect to the user identification information stored in the memory media; controlling means for controlling the in-vehicle apparatus on the basis of the judgment made by the identifying means; and informing means for informing about the user identification information registered or cancelled by the registering and canceling means.

The in-vehicle controlling apparatus thus constructed as previously mentioned can inform the registered user about the fact that the user identification information is cancelled or registered by an unregistered user not having permission to utilize the automotive vehicle when the in-vehicle controlling apparatus is operated by the unregistered user by reason that the informing means is adapted to inform the person identified as a registered user about the user identification information cancelled or registered by the unregistered user.

In the in-vehicle controlling apparatus according to the present invention, the user identification information may include image information indicative of the face of the person demanding permission to utilize the in-vehicle apparatus. The user identification information may include image information indicative of the face of the registered user having permission to utilize the automotive vehicle. The user identification information obtaining means may be constituted by a camera unit for taking an image indicative of the person to obtain image information indicative of the face of the person. The identifying means may be adapted to judge whether or not the person is identical to the registered user having permission to utilize the automotive vehicle by establishing the verification of the image information obtained by the camera unit with respect to the image information stored in the memory media.

The in-vehicle controlling apparatus thus constructed as previously mentioned can inform the registered user about the fact that the user identification information is cancelled or registered by an unregistered user not having permission to utilize the automotive vehicle when the in-vehicle controlling apparatus is operated by the unregistered user by reason that the informing means is adapted to inform the person identified as a registered user on the basis of the user identification information including the face information about the user identification information cancelled or registered by the unregistered user.

In the in-vehicle controlling apparatus according to the present invention, the user identification information may include voice pattern information indicative of a voice of the person demanding permission to utilize the in-vehicle apparatus. The user identification information may include voice pattern information indicative of a voice of the registered user having permission to utilize the automotive vehicle. The user identification information obtaining means may be constituted by a microphone unit for receiving a voice of the person demanding permission to utilize the in-vehicle apparatus, and obtaining, as the biometric information, voice pattern information from the voice of the person demanding permission to utilize the in-vehicle apparatus. The identifying means may be adapted to judge whether or not the person is identical to the registered user having permission to utilize the automotive vehicle by establishing the verification of the voice pattern information obtained by the microphone unit with respect to the voice pattern information stored in the memory media.

The in-vehicle controlling apparatus thus constructed as previously mentioned can inform the registered user about the fact that the user identification information is cancelled or registered by an unregistered user not having permission to utilize the automotive vehicle when the in-vehicle controlling apparatus is operated by the unregistered user by reason that the informing means is adapted to inform the person identified as a registered user on the basis of the user identification information including the voice pattern information about the user identification information cancelled or registered by the unregistered user.

In the in-vehicle controlling apparatus according to the present invention, the user identification information may include fingerprint pattern information indicative of a fingerprint of the person demanding permission to utilize the in-vehicle apparatus. The user identification information may include fingerprint pattern information indicative of a fingerprint of the registered user having permission to utilize the automotive vehicle. The user identification information obtaining means may be constituted by a fingerprint pattern sensor for detecting the fingerprint of the person demanding permission to utilize the in-vehicle apparatus, and obtaining fingerprint pattern information indicative of the detected fingerprint. The identifying means may be adapted to judge whether or not the person is identical to the registered user having permission to utilize the automotive vehicle by establishing the verification of the fingerprint pattern information obtained by the microphone unit with respect to the fingerprint pattern information stored in the memory media.

The in-vehicle controlling apparatus thus constructed as previously mentioned can inform the registered user about the fact that the user identification information is cancelled or registered by an unregistered user not having permission to utilize the automotive vehicle when the in-vehicle controlling apparatus is operated by the unregistered user by reason that the informing means is adapted to inform the person identified as a registered user on the basis of the user identification information including the fingerprint pattern information about the user identification information cancelled or registered by the unregistered user.

In the in-vehicle controlling apparatus according to the present invention, the user identification information may include iris pattern information indicative of an iris of the person demanding permission to utilize the in-vehicle apparatus. The user identification information may include iris pattern information indicative of an iris of the registered user having permission to utilize the automotive vehicle. The user identification information obtaining means may be constituted by a camera unit for taking an image indicative of the person demanding permission to utilize the in-vehicle apparatus, and obtaining iris pattern information indicative of the iris of the person. The identifying means may be adapted to judge whether or not the person is identical to the registered user having permission to utilize the automotive vehicle by establishing the verification of the iris pattern information obtained by the camera unit with respect to the iris pattern information stored in the memory media.

The in-vehicle controlling apparatus thus constructed as previously mentioned can inform the registered user about the fact that the user identification information is cancelled or registered by an unregistered user not having permission to utilize the automotive vehicle when the in-vehicle controlling apparatus is operated by the unregistered user by reason that the informing means is adapted to inform the person identified as a registered user on the basis of the user identification information including the iris pattern information about the user identification information cancelled or registered by the unregistered user.

In the in-vehicle controlling apparatus according to the present invention, the user identification information obtaining means may be adapted to obtain the user identification information from an integrated circuit card by performing communication with the integrated circuit card.

The in-vehicle controlling apparatus thus constructed as previously mentioned can inform the registered user about whether or not the registered user identification information is cancelled or registered by the unregistered user by reason that the informing means is operative to inform the person identified on the basis of the user identification information including biometric information received from the cellular phone about whether or not the registered user identification information is cancelled or registered by the unregistered user.

In the in-vehicle controlling apparatus according to the present invention, the integrated circuit card may be constituted by an electronic license card.

The in-vehicle controlling apparatus thus constructed as previously mentioned can inform the registered user about whether or not the registered user identification information is cancelled or registered by the unregistered user by reason that the informing means is operative to inform the person identified as the registered user about whether or not the registered user identification information is cancelled or registered by the unregistered user.

In the in-vehicle controlling apparatus according to the present invention, the informing means may be adapted to inform about the user identification information registered or cancelled by the registering and canceling means when the judgment is made by the identifying means that the person is identical to the registered user having permission to utilize the automotive vehicle.

The in-vehicle controlling apparatus thus constructed as previously mentioned can enhance the convenience of the IC card by reason that the IC card has the user identification information with the driving license information such as for example an issue number of the driving license stored therein. This leads to the fact that the in-vehicle controlling apparatus can easily specify a person who operates the in-vehicle controlling apparatus to have the in-vehicle controlling apparatus perform the irregular cancellation or registration of the user identification information.

The in-vehicle controlling apparatus according to the present invention may further comprise in-vehicle apparatus immobilizing means for prevent the in-vehicle apparatus from being started when the judgment is made that the person is not identical to the user having permission to utilize the automotive vehicle.

The in-vehicle controlling apparatus thus constructed as previously mentioned can allow the newly registered and cancelled user identification information to be watched by only so many users such as for example an owner. In other words, the in-vehicle controlling apparatus thus constructed as previously mentioned can prevent the registered user identification information from being leaked by the unregistered user.

In the in-vehicle controlling apparatus according to the present invention, the in-vehicle apparatus may include an engine controlling apparatus for allowing an engine of the automotive vehicle to be started.

The in-vehicle controlling apparatus thus constructed as previously mentioned can prevent the in-vehicle apparatuses from being unnecessarily utilized by the person, when the automotive vehicle is temporarily leased for the person by the owner, by reason that the controlling means is adapted to allow the in-vehicle apparatus to be utilized by one or more specific persons each having permission to utilize the in-vehicle apparatus on the basis of the judgment made by the identifying means.

The in-vehicle controlling apparatus according to the present invention may further comprise start signal outputting means for outputting a start signal to the user identification information obtaining means in order to have the user identification information obtaining means started, and in which the user identification information obtaining means may be adapted to assume an active state over a predetermined period in response to the start signal.

The in-vehicle controlling apparatus thus constructed as previously mentioned can prevent the in-vehicle apparatuses from being unnecessarily utilized by the person, when the automotive vehicle is temporarily leased for the person by the owner, by reason that the controlling means is adapted to allow the in-vehicle apparatus to be utilized by one or more specific persons each having permission to utilize the in-vehicle apparatus on the basis of the judgment made by the identifying means.

In accordance with the present invention, there is provided an in-vehicle apparatus controlling method of controlling locks through steps of transmitting biometric information obtained by biometric information obtaining means provided in a mobile apparatus through communication means provided in the mobile apparatus, judging whether or not a person demanding permission to utilize the automotive vehicle is identical to a registered user having permission to utilize an automotive vehicle by establishing the verification of the biometric information received from the mobile apparatus with respect to biometric information previously registered by the biometric information registering means and indicative of a registered user having permission to utilize an automotive vehicle, or establishing the verification of biometric information obtained by biometric information obtaining means with respect to the biometric information previously registered by the biometric information registering means and indicative of the user having the permission to utilize the automotive vehicle.

The in-vehicle apparatus controlling method thus constructed as previously mentioned can provide an unlocking method of unlocking the doors of the automotive vehicle on the basis of the biometric information with a relatively high security.

### BRIEF DESCRIPTION OF THE DRAWINGS

The features and advantages of a system for, an apparatus for, and a method of controlling one or more in-vehicle apparatuses, according to the present invention, will be more clearly understood from the following description taken in conjunction with the accompanying drawings:
FIG. **1** is a block diagram showing a first embodiment of the in-vehicle controlling apparatus and the in-vehicle apparatus controlling system according to the present invention;
FIG. **2** is a block diagram showing a first embodiment of the in-vehicle controlling apparatus and the in-vehicle apparatus controlling system according to the present invention;
FIG. **3** is a block diagram showing a second embodiment of the in-vehicle controlling apparatus and the in-vehicle apparatus controlling system according to the present invention;
FIG. **4** is a block diagram showing a third embodiment of the in-vehicle controlling apparatus and the in-vehicle apparatus controlling system according to the present invention;
FIG. **5** is a block diagram showing a fourth embodiment of the in-vehicle controlling apparatus and the in-vehicle apparatus controlling system according to the present invention;
FIG. **6** is a block diagram showing a fifth embodiment of the in-vehicle controlling apparatus and the in-vehicle apparatus controlling system according to the present invention;
FIG. **7** is a block diagram showing a sixth embodiment of the in-vehicle controlling apparatus and the in-vehicle apparatus controlling system according to the present invention;
FIG. **8** is a block diagram showing a seventh embodiment of the in-vehicle controlling apparatus and the in-vehicle apparatus controlling system according to the present invention;
FIG. **9** is a block diagram showing an eighth embodiment of the in-vehicle controlling apparatus and the in-vehicle apparatus controlling system according to the present invention;
FIG. **10** is a flowchart showing an operation of the eighth embodiment of the in-vehicle controlling apparatus and the in-vehicle apparatus controlling system according to the present invention;
FIG. **11** is a block diagram showing a ninth embodiment of the in-vehicle controlling apparatus and the in-vehicle apparatus controlling system according to the present invention;
FIG. **12** is a flowchart showing an operation of the ninth embodiment of the in-vehicle controlling apparatus and the in-vehicle apparatus controlling system according to the present invention;
FIG. **13** is a block diagram showing a tenth embodiment of the in-vehicle controlling apparatus and the in-vehicle apparatus controlling system according to the present invention;
FIG. **14** is a flowchart showing an operation of the tenth embodiment of the in-vehicle controlling apparatus and the in-vehicle apparatus controlling system according to the present invention;
FIG. **15** is a flowchart showing an operation of the tenth embodiment of the in-vehicle controlling apparatus and the in-vehicle apparatus controlling system according to the present invention;
FIG. **16** is a block diagram showing an eleventh embodiment of the in-vehicle controlling apparatus and the in-vehicle apparatus controlling system according to the present invention;
FIG. **17** is a flowchart showing an operation of the eleventh embodiment of the in-vehicle controlling apparatus and the in-vehicle apparatus controlling system according to the present invention;
FIG. **18** is a block diagram showing a twelfth embodiment of the in-vehicle controlling apparatus and the in-vehicle apparatus controlling system according to the present invention;
FIG. **19** is a flowchart showing an operation of the twelfth embodiment of the in-vehicle controlling apparatus and the in-vehicle apparatus controlling system according to the present invention;
FIG. **20** is a flowchart showing an operation of the twelfth embodiment of the in-vehicle controlling apparatus and the in-vehicle apparatus controlling system according to the present invention;
FIG. **21** is a block diagram showing a thirteenth embodiment of the in-vehicle controlling apparatus and the in-vehicle apparatus controlling system according to the present invention;
FIG. **22** is a flowchart showing an operation of the thirteenth embodiment of the in-vehicle controlling apparatus and the in-vehicle apparatus controlling system according to the present invention;
FIG. **23** is a flowchart showing an operation of the thirteenth embodiment of the in-vehicle controlling apparatus and the in-vehicle apparatus controlling system according to the present invention;
FIG. **24** is a block diagram showing a fourteenth embodiment of the in-vehicle controlling apparatus and the in-vehicle apparatus controlling system according to the present invention;
FIG. **25** is a flowchart showing an operation of the fourteenth embodiment of the in-vehicle controlling apparatus and the in-vehicle apparatus controlling system according to the present invention;
FIG. **26** is a block diagram showing a fifteenth embodiment of the in-vehicle controlling apparatus and the in-vehicle apparatus controlling system according to the present invention;
FIG. **27** is a flowchart showing an operation of the fifteenth embodiment of the in-vehicle controlling apparatus and the in-vehicle apparatus controlling system according to the present invention;
FIG. **28** is a block diagram showing a sixteenth embodiment of the in-vehicle controlling apparatus and the in-vehicle apparatus controlling system according to the present invention;
FIG. **29** is a flowchart showing an operation of the sixteenth embodiment of the in-vehicle controlling apparatus and the in-vehicle apparatus controlling system according to the present invention;
FIG. **30** is a block diagram showing a seventeenth embodiment of the in-vehicle controlling apparatus and the in-vehicle apparatus controlling system according to the present invention;
FIG. **31** is a flowchart showing an operation of the seventeenth embodiment of the in-vehicle controlling apparatus and the in-vehicle apparatus controlling system according to the present invention;
FIG. **32** is a block diagram showing an eighteenth embodiment of the in-vehicle controlling apparatus and the in-vehicle apparatus controlling system according to the present invention;
FIG. **33** is a flowchart showing an operation of the eighteenth embodiment of the in-vehicle controlling apparatus and the in-vehicle apparatus controlling system according to the present invention;
FIG. **34** is a block diagram showing the conventional in-vehicle apparatus controlling system; and
FIG. **35** is a block diagram showing the conventional in-vehicle apparatus controlling system.

### DESCRIPTION OF THE PREFERRED EMBODIMENTS

### [First embodiment]

The preferred embodiments of the in-vehicle apparatus controlling system according to the present invention will now be described hereinafter in accordance with FIGS. **1** to **33** of accompanying drawings.

The constitution of the in-vehicle controlling apparatus and the in-vehicle apparatus controlling system according to the first embodiment of the present invention will be described hereinafter with reference to FIG. **1**.

As shown in FIG. **1,** the in-vehicle apparatus controlling system **100** comprises an in-vehicle controlling apparatus **101** for controlling an in-vehicle apparatus, and memory media having user identification information stored therein. The user identification information includes biometric information indicative of a person demanding permission to utilize the in-vehicle apparatus.

The in-vehicle controlling apparatus **101** includes biometric information obtaining means for obtaining biometric information indicative of the person demanding permission to utilize the in-vehicle apparatus, storing means for storing biometric information indicative of a registered user having permission to utilize the automotive vehicle, identifying means **30** for judging whether or not the person is identical to the registered user having permission to utilize the automotive vehicle by verifying whether or not the biometric information obtained by the biometric information obtaining means is the same as the user identification information stored by the storing means, controlling means for controlling the in-vehicle apparatus on the basis of the judgment made by the identifying means **30,** and reading means **20** for receiving the user identification information from the memory media.

The biometric information obtaining means is constituted by a camera unit **10** for obtaining biometric information indicative of the biometric features of the face of the person demanding permission to utilize the in-vehicle apparatus.

The memory media is constituted by an integrated circuit card (IC card), while the reading means **20** is adapted to receive the biometric information from the IC card.

The in-vehicle apparatus is constituted by a door lock controlling apparatus **2** for controlling door locks of the automotive vehicle. The controlling means is adapted to control the door lock controlling apparatus **2** on the basis of the judgment made by the identifying means **30.**

The identifying means **30** includes a memory unit **31** having user identification information stored therein. The user identification information includes biometric information indicative of the biometric features of the face of the registered user having permission to unlock the doors of the automotive vehicle, in other words, the biometric information being indicative of the biometric features of the registered user having permission to utilize the automotive vehicle. The identifying means **30** further includes a biometric information registering unit **32** for registering the biometric information stored in the memory unit **31,** the biometric information being indicative of biometric features of one or more faces of users each having permission to unlock the doors of the automotive vehicle, or canceling the biometric information indicative of biometric features of one or more faces of the registered users, and a user identification information processing unit **33** for processing the user identification information to judge whether or not the person is identical to the registered user having permission to utilize the automotive vehicle by verifying whether or not the biometric information obtained from the camera unit **10** or obtained from the IC card through the reading means **20** is the same as the biometric information stored in the memory unit **31.**

The identifying means **30** is adapted to judge whether or not the person is identical to the registered user having permission to utilize the automotive vehicle by verifying whether or not the biometric information obtained by the camera unit **10** is the same as the registered user identification information stored in the memory unit **31.** When the judgment is made that the verification of the biometric information obtained by the camera unit **10** is not normally established by the identifying means **30,** the identifying means **30** is adapted to judge whether or not the person is identical to the registered user having permission to utilize the automotive vehicle by verifying whether or not the biometric information received from the IC card by the reading means **20** is the same as the user identification information stored in the memory unit **31.**

The biometric information registering unit **32** is adapted to register the biometric information, i.e., image data in the memory unit **31.** The image data is indicative of biometric features of the face of the registered user having permission to unlock doors of the automotive vehicle.

Here, the IC card carried by the person demanding permission to utilize the in-vehicle apparatus has the biometric information stored therein, the biometric information being indicative of the biometric features of the face of the person demanding permission to unlock the doors of the automotive vehicle.

In this embodiment, the reading means **20** of the in-vehicle controlling apparatus **101** is adapted to receive the biometric information from the IC card. However, the reading means **20** of the in-vehicle controlling apparatus **101** may be adapted to receive the biometric information from the electronic driving license.

The operation of the in-vehicle apparatus controlling system **100** according to the first embodiment of the present invention will be described hereinafter with reference to FIG. **2.**

As shown in FIG. **2,** the judgment is firstly made by the door lock controlling apparatus **2** on whether or not one of doorknobs of the automotive vehicle is touched by the person demanding permission to unlock the doors of the automotive vehicle. When the judgment is made that one of door knobs of the automotive vehicle is touched by the person demanding permission to unlock the doors of the automotive vehicle, the identification request signal (identification trigger signal) indicative of request to judge whether or not the person is identical to the registered user having permission to utilize the automotive vehicle is transmitted to the identifying means **30** by the door lock controlling apparatus **2** (in the step **S111).**

The biometric information request signal indicative of request to have the camera unit **10** obtain the biometric information indicative of the person demanding permission to unlock the doors of the automotive vehicle is then transmitted to the camera unit **10** by the user identification information processing unit 33 of the identifying means **30** in response to the identification request signal received from the door lock controlling apparatus **2** (in the step **S112).**

The image information indicative of the face of the person demanding permission to unlock the doors of the automotive vehicle is then taken by the camera unit **10** in response to the biometric information request signal received from the user identification information processing unit **33** of the identifying means **30.** The image information is then transmitted, as biometric information, to the identifying means **30** (in the step **S113).** Here, the camera unit **10** is provided in the automotive vehicle to take an image indicative of the person touching the doorknob of the automotive vehicle, or demanding permission to unlock the doorknob of the automotive vehicle.

The biometric information is then obtained from the camera unit **10** by the user identification information processing unit **33** of the identifying means **30.** The biometric features such as for example eyes and a nose of the person demanding permission to unlock the doors of the automotive vehicle is then extracted from the biometric information by the user identification information processing unit **33** of the identifying means **30.** The judgment then is made (in the step **S114)** on whether or not the biometric features of the face of the person demanding permission to unlock the doors of the automotive vehicle is optimally obtained by the camera unit **10** without being deteriorated by the environmental conditions such as for example a bad weather and a dark place, without being unclearly taken through the lens stained with dust, and without being unclearly taken against a light, in other words, the biometric information obtained from the camera unit **10** is available for the identification of the person demanding permission to unlock the doors of the automotive vehicle.

When the judgment is made that the biometric information obtained from the camera unit **10** is available for the identification of the person demanding permission to unlock the doors of the automotive vehicle, the direction and other parameters of the face are analyzed on the basis of the biometric information obtained from the camera unit **10.** The similarity value of the biometric information obtained by the camera unit **10** to the biometric information stored in the memory unit **31** is then calculated by the user identification information processing unit **33** of the identifying means **30** (in the step **S115).** The judgment is then made (in the step **S116)** on whether or not the similarity value of the biometric information obtained by the camera unit **10** to the biometric information stored in the memory unit **31** is larger than, or equal to a predetermined threshold level.

When the judgment is made that the calculated similarity value of the biometric information obtained by the camera unit **10** to the biometric information stored in the memory unit **31** is larger than, or equal to the predetermined threshold level, in other words, the person demanding permission to unlock the door of the automotive vehicle is identical to the registered user having permission to unlock the doors of the automotive vehicle, the permission signal is outputted to the door lock controlling apparatus **2** (in the step **S117).**

When the permission signal is received by the door lock controlling apparatus **2** from the in-vehicle controlling apparatus **101,** the door lock controlling apparatus **2** allows the doors of the automotive vehicle to be opened by the person identified as the registered user.

When, on the other hand, the judgment is made that the calculated similarity value of the biometric information obtained by the camera unit **10** to the biometric information stored in the memory unit **31** is smaller than the predetermined threshold level, in other words, the person demanding permission to unlock the door of the automotive vehicle is not identical to the registered user having permission to unlock the doors of the automotive vehicle, the rejection signal is outputted to the door lock controlling apparatus **2** (in the step **S118).**

When the rejection signal is received by the door lock controlling apparatus **2** from the in-vehicle controlling apparatus **101,** the door lock controlling apparatus **2** prevents the doors of the automotive vehicle from being opened by the person identified as the unregistered user.

When, on the other hand, the judgment is made that the biometric information obtained from the camera unit **10** is unavailable for the identification of the person demanding permission to unlock the doors of the automotive vehicle, the biometric information request signal indicative of request to have the reading means **20** receive the biometric information from the IC card by the user identification information processing unit **33** of the identifying means **30** (in the step **S119**)**.**

The biometric information is received from the IC card by the reading means **20** in response to the biometric information request signal received from the user identification information processing unit **33** of the identifying means **30.** The biometric information received from the contact-type or non-contact type IC card is transmitted to the identifying means **30** (in the step **S120**)**.**

The similarity value of the biometric information received from the IC card through the reading means **20** to the biometric information stored in the memory unit **31** is then calculated by the user identification information processing unit **33** of the identifying means **30** (in the step **S121**)**.** The judgment is then made (in the step **S122**) on whether or not the similarity value of the biometric information received from the IC card through the reading means **20** to the biometric information stored in the memory unit **31** is larger than, or equal to a predetermined threshold level.

When the judgment is made that the calculated similarity value of the biometric information received from the IC card through the reading means **20** to the biometric information stored in the memory unit **31** is larger than, or equal to the predetermined threshold level, in other words, the person demanding permission to unlock the door of the automotive vehicle is identical to the registered user having permission to unlock the doors of the automotive vehicle, the permission signal is outputted to the door lock controlling apparatus **2** (in the step **S123).**

When the permission signal is received by the door lock controlling apparatus **2** from the in-vehicle controlling apparatus **101,** the door lock controlling apparatus **2** allows the doors of the automotive vehicle to be opened by the person identified as the registered user.

When, on the other hand, the judgment is made that the calculated similarity value of the biometric information received from the IC card through the reading means **20** to the biometric information stored in the memory unit **31** is smaller than the predetermined threshold level, in other words, the person demanding permission to unlock the door of the automotive vehicle is not identical to the registered user having permission to unlock the doors of the automotive vehicle, the rejection signal is outputted to the door lock controlling apparatus **2** (in the step **S124).**

When, on the other hand, the rejection signal is received by the door lock controlling apparatus **2** from the in-vehicle controlling apparatus **101,** the door lock controlling apparatus **2** prevents the doors of the automotive vehicle from being opened by the person identified as the unregistered user in response to the rejection signal received from the in-vehicle controlling apparatus **101.**

When, for example, the camera unit **10** fails to output the biometric information to the identifying means **30,** the biometric information is received from the IC card by the reading means **20.** The judgment is then made by the identifying means **30** on whether or not the person is identical to the registered user on the basis of the verification of the biometric information received from the IC card by the reading means **20** is performed by the identifying means **30.**

From the above detailed description, it will be understood that the in-vehicle controlling apparatus **101** and the in-vehicle apparatus controlling system **100** according to the first embodiment of the present invention can allow the door lock controlling apparatus **2** to be utilized by only the registered user by judging at a relatively high accuracy and reliability, without being affected by an environmental condition such as for example a bad weather and a dark place, or other adverse condition such as for example suddenly failure of the camera unit **10** and the lens stained with dust, whether or not the person demanding permission to utilize the door lock controlling apparatus **2** is identical to the registered user having permission to utilize the automotive vehicle by reason that the reading means **20** is adapted to receive the biometric information from the IC card when the judgment is made that the biometric information obtained by the camera unit **10** is not available for the identification of the person demanding permission to utilize the door lock controlling apparatus **2.**

The in-vehicle controlling apparatus **101** according to the first embodiment of the present invention is adapted to judge whether or not the person demanding permission to utilize the in-vehicle apparatus is identical to the registered user on the basis of the verification of the biometric information indicative of biometric features of the face of the person demanding permission to utilize the in-vehicle apparatus. However, the in-vehicle controlling apparatus may be adapted to judge whether or not the person demanding permission to utilize the in-vehicle apparatus is identical to the registered user on the basis of the verification of the biometric information indicative of the iris pattern, the fingerprint pattern, or the voice pattern of the person demanding permission to utilize the in-vehicle apparatus.

In this embodiment of the in-vehicle controlling apparatus **101** according to the present invention, the memory media having the biometric information stored therein is constituted by the IC card. However, the memory media having the biometric information stored therein may be constituted by the memory device different from the IC card.

### [Second Embodiment]

Although there has been described in the above about the first embodiment of the in-vehicle apparatus controlling system, the in-vehicle controlling apparatus, and the in-vehicle apparatus controlling method according to the present invention, this embodiment may be replaced by the second to eighteenth embodiments of the in-vehicle apparatus controlling system and the in-vehicle controlling apparatus according to the present invention in order to attain the objects of the present invention. The second to eighteenth embodiments of the in-vehicle apparatus controlling system and the in-vehicle controlling apparatus will then be described hereinafter.

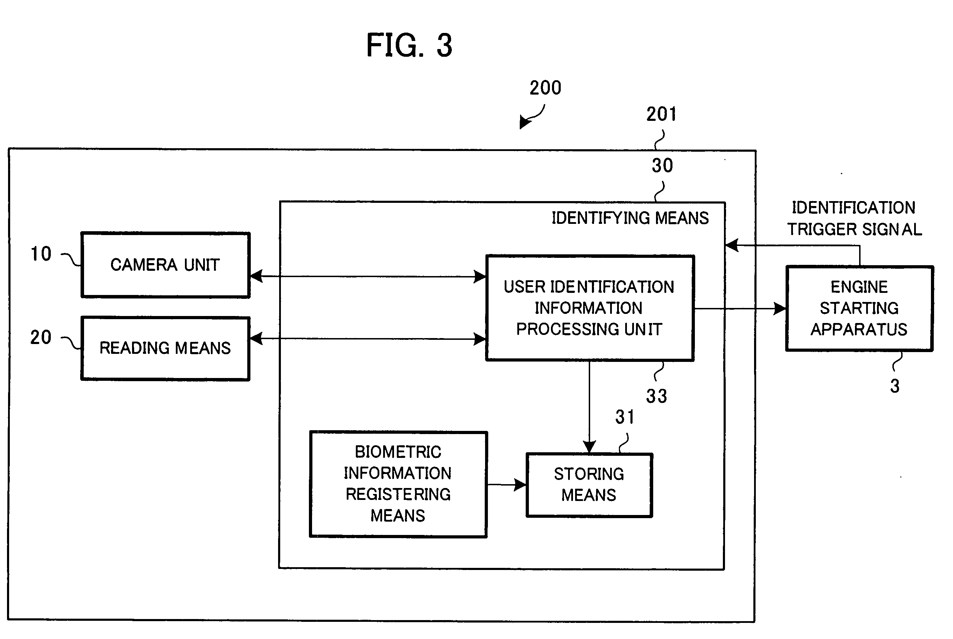

The constitutions of the in-vehicle apparatus controlling system and the in-vehicle controlling apparatus according to the second embodiment of the present invention will be described hereinafter with reference to FIG. **3.**

The constitutional elements of the second embodiment of the in-vehicle apparatus controlling system **200** the same as those of the first embodiment of the in-vehicle apparatus controlling system **100** will not be described but bear the same reference numerals as those of the first embodiment of the in-vehicle apparatus controlling system **100.**

The in-vehicle apparatus controlling system **200** is shown in FIG. **3** as comprising an engine starting apparatus **3** for controlling an engine mounted on an automotive vehicle to start or to stop the engine, and an in-vehicle controlling apparatus **201.**

The user identification information processing unit **33** of the identifying means **30** of the in-vehicle controlling apparatus **201** is adapted to process the user identification information to judge whether or not the person is identical to the registered user having permission to utilize the automotive vehicle in response to a request signal received from the engine starting apparatus **3,** and to allow the in-vehicle telephone apparatus **4** to be utilized by only the person identified as the registered user.

The operation of the in-vehicle apparatus controlling system **200** will be described hereinafter. When, for example, the judgment is made that an ignition switch or other switch of the engine starting apparatus **3** are operated by the person demanding permission to utilize the automotive vehicle, the request signal is transmitted to the in-vehicle controlling apparatus **201** as previously mentioned in the first embodiment with reference to FIG. **2.**

As previously mentioned in the first embodiment, the biometric information is firstly obtained from the camera unit **10.** The judgment is then made on whether or not the biometric information obtained by the camera unit **10** is available for the identification of the person demanding permission to utilize the automotive vehicle. When the biometric information obtained by the camera unit **10** is available for the identification of the person demanding permission to utilize the automotive vehicle, the judgment is made on whether or not the person is identical to the registered user having permission to utilize the automotive vehicle on the basis of the similarity value of the biometric information obtained by the camera unit **10** with respect to the biometric information stored in the memory unit **31.** When the person demanding permission to utilize the automotive vehicle is identified as the registered user, the permission signal is transmitted to the engine starting apparatus **3.** When, on the other hand, the person demanding permission to utilize the automotive vehicle is identified as the unregistered user, the rejection signal is transmitted to the engine starting apparatus **3.**

When, on the other hand, the biometric information obtained by the camera unit **10** is not available for the identification of the person demanding permission to utilize the automotive vehicle, the biometric information is received from the IC card. The judgment is then made on whether or not the person demanding permission to utilize the automotive vehicle is identical to the registered user having permission to utilize the automotive vehicle on the basis of the similarity value of the biometric information received from the IC card with respect to the biometric information stored in the memory unit **31.** When the person is identified as the registered user, the permission signal is transmitted to the engine starting apparatus **3.** When, on the other hand, the person is identified as the unregistered user, the rejection signal is transmitted to the engine starting apparatus **3.**

When the permission signal is received from the in-vehicle controlling apparatus **201** by the engine starting apparatus **3,** the person identified as the registered user is allowed to have the engine starting apparatus **3** start the engine of the automotive vehicle. When, on the other hand, the rejection signal is received from the in-vehicle controlling apparatus **301** by the engine starting apparatus **3,** the person identified as the unregistered user is prevented from having the engine starting apparatus **3** start the engine of the automotive vehicle.

From the above detailed description, it will be understood that the in-vehicle controlling apparatus **201** and the in-vehicle apparatus controlling system **200** according to the second embodiment of the present invention can allow the engine starting apparatus **3** to be utilized by only the registered user by judging at a relatively high accuracy and reliability, without being affected by an environmental condition such as for example a bad weather and a dark place, or other adverse condition such as for example suddenly failure of the camera unit **10** and the lens stained with dust, whether or not the person demanding permission to utilize the automotive vehicle is identified as the registered user having permission to utilize the automotive vehicle by reason that the reading means **20** is adapted to receive the biometric information from the IC card when the judgment is made that the biometric information obtained by the camera unit **10** is not available for the identification of the person demanding permission to utilize the automotive vehicle.

### [Third embodiment]

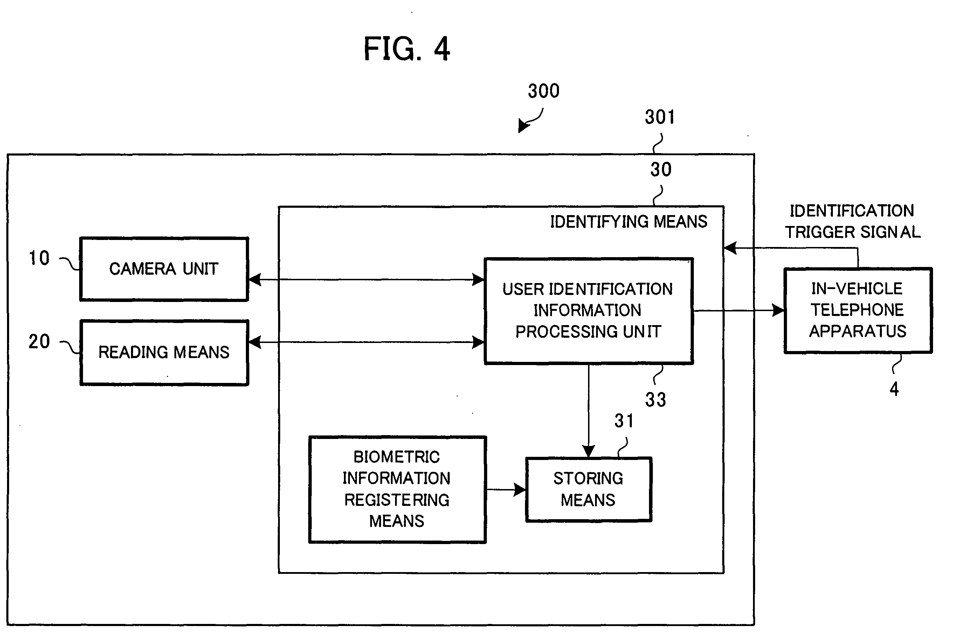

The constitution of the in-vehicle controlling apparatus and the in-vehicle apparatus controlling system according to the third embodiment of the present invention will be described hereinafter with reference to FIG. **4.**

The constitutional elements of the third embodiment of the in-vehicle apparatus controlling system **300** substantially the same as those of the first embodiment of the in-vehicle apparatus controlling system **100** will not be described but bear the same reference numerals as those of the first embodiment of the in-vehicle apparatus controlling system **100.**

As shown in FIG. **4,** the in-vehicle controlling apparatus **301** of the in-vehicle apparatus controlling system **300** according to the third embodiment of the present invention is adapted to perform communication with a telephone provided as an in-vehicle telephone apparatus **4** in an automotive vehicle. The in-vehicle telephone apparatus **4** is adapted to perform wireless communication with one or more telephones provided in other places. The user identification information processing unit **33** of the identifying means **30** of the in-vehicle controlling apparatus **301** is adapted to perform identification of a person demanding permission to utilize the in-vehicle telephone apparatus **4** in response to a request signal received from the in-vehicle telephone apparatus **4,** and to allow the in-vehicle telephone apparatus **4** to be utilized by the person on the basis of the judgment received from the user identification information processing unit **33.**

The operation of the in-vehicle apparatus controlling system **300** will be described hereinafter. When, for example, the judgment is made that the in-vehicle telephone apparatus **4** is powered on, or at least one operation key of the in-vehicle telephone apparatus **4** are operated by the person demanding permission to utilize the in-vehicle telephone apparatus **4,** the request signal is transmitted to the in-vehicle controlling apparatus **301** as previously mentioned in the first embodiment with reference to FIG. **2.**

As previously mentioned in the first embodiment, the biometric information is firstly obtained from the camera unit **10.** The judgment is then made on whether or not the biometric information obtained by the camera unit **10** is available for the identification of the person demanding permission to utilize the in-vehicle telephone apparatus **4.** When the biometric information obtained by the camera unit **10** is available for the identification of the person demanding permission to utilize the in-vehicle telephone apparatus **4,** the judgment is made on whether or not the person is identical to the registered user having permission to utilize the automotive vehicle on the basis of the similarity value of the biometric information obtained by the camera unit **10** with respect to the biometric information stored in the memory unit **31.** When the person demanding permission to utilize the in-vehicle telephone apparatus **4** is identified as the registered user, the permission signal is transmitted to the in-vehicle telephone apparatus **4.** When, on the other hand, the person demanding permission to utilize the in-vehicle telephone apparatus **4** is identified as the unregistered user, the rejection signal is transmitted to the in-vehicle telephone apparatus **4.**

When, on the other hand, the biometric information obtained by the camera unit **10** is not available for the identification of the person demanding permission to utilize the in-vehicle telephone apparatus **4,** the biometric information is received from the IC card. The judgment is then made on whether or not the person demanding permission to utilize the in-vehicle telephone apparatus **4** is identical to the registered user having permission to utilize the automotive vehicle on the basis of the similarity value of the biometric information received from the IC card with respect to the biometric information stored in the memory unit **31.** When the person is identified as the registered user, the permission signal is transmitted to the in-vehicle telephone apparatus **4.** When, on the other hand, the person is identified as the unregistered user, the rejection signal is transmitted to the in-vehicle telephone apparatus **4.**

When the permission signal is received from the in-vehicle controlling apparatus **301** by the in-vehicle telephone apparatus **4,** the person identified as the registered user is allowed to power the in-vehicle telephone apparatus **4,** the operation requested by the person identified as the registered user is then performed by the in-vehicle telephone apparatus **4.** When, on the other hand, the rejection signal is received from the in-vehicle controlling apparatus **301** by the in-vehicle telephone apparatus **4,** the person identified as the unregistered user is prevented from powering the in-vehicle telephone apparatus **4,** or the operation requested by the person identified as the unregistered user is not performed by the in-vehicle telephone apparatus **4.**

From the above detailed description, it will be understood that the in-vehicle controlling apparatus **301** and the in-vehicle apparatus controlling system **300** according to the third embodiment of the present invention can allow the in-vehicle telephone apparatus **4** to be utilized by only the registered user by judging at a relatively high accuracy and reliability, without being affected by an environmental condition such as for example a bad weather and a dark place, or other adverse condition such as for example suddenly failure of the camera unit **10** and the lens stained with dust, whether or not the person demanding permission to utilize the in-vehicle telephone apparatus **4** is identified as the registered user having permission to utilize the automotive vehicle by reason that the reading means **20** is adapted to receive the biometric information from the IC card when the judgment is made that the biometric information obtained by the camera unit **10** is not available for the identification of the person demanding permission to utilize the in-vehicle telephone apparatus **4.**

### [Fourth embodiment]

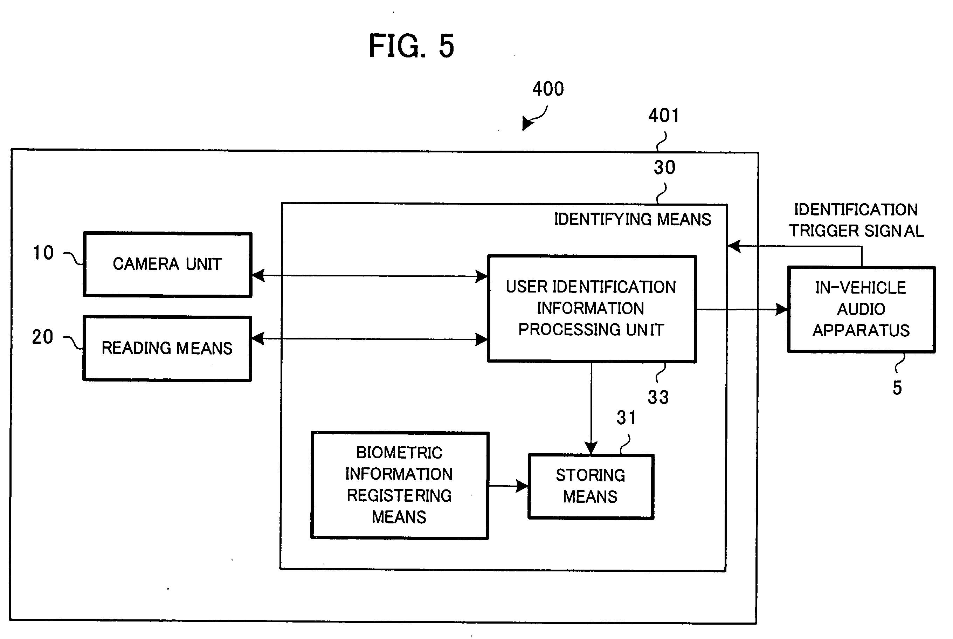

The constitution of the in-vehicle controlling apparatus and the in-vehicle apparatus controlling system according to the fourth embodiment of the present invention will be described hereinafter with reference to FIG. **5.**

The constitutional elements of the fourth embodiment of the in-vehicle apparatus controlling system **400** substantially the same as those of the first embodiment of the in-vehicle apparatus controlling system **100** will not be described but bear the same reference numerals as those of the first embodiment of the in-vehicle apparatus controlling system **100.**

As shown in FIG. **5,** the in-vehicle controlling apparatus **401** of the in-vehicle apparatus controlling system **400** according to the fourth embodiment of the present invention is adapted to perform communication with an audio apparatus provided as an in-vehicle audio apparatus **5** in an automotive vehicle. The user identification information processing unit **33** of the identifying means **30** of the in-vehicle controlling apparatus **401** is adapted to perform identification of a person demanding permission to utilize the in-vehicle audio apparatus **5** in response to an instruction issued by the in-vehicle audio apparatus **5.** The in-vehicle controlling apparatus **401** is adapted to allow the in-vehicle audio apparatus **5** to be utilized by the person demanding permission to utilize the in-vehicle audio apparatus **5** when the judgment is made that the person is identified as the registered user, and to prevent the in-vehicle audio apparatus **5** from being utilized by the person demanding permission to utilize the in-vehicle audio apparatus **5** when the judgment is made that the person is identified as the unregistered user.

When, for example, the judgment is made that the in-vehicle audio apparatus **5** is powered on, or at least one operation key of the in-vehicle audio apparatus **5** are operated by the person demanding permission to utilize the in-vehicle audio apparatus **5,** the request signal is transmitted to the in-vehicle controlling apparatus **401** as previously mentioned in the first embodiment with reference to FIG. **2.**

As previously mentioned in the first embodiment, the biometric information is firstly obtained from the camera unit **10.** The judgment is then made on whether or not the biometric information obtained by the camera unit **10** is available for the identification of the person demanding permission to utilize the in-vehicle audio apparatus **5.** When the biometric information obtained by the camera unit **10** is available for the identification of the person demanding permission to utilize the in-vehicle audio apparatus **5,** the judgment is made on whether or not the person is identical to the registered user having permission to utilize the automotive vehicle on the basis of the similarity value of the biometric information obtained by the camera unit **10** with respect to the biometric information stored in the memory unit **31.** When the person demanding permission to utilize the in-vehicle audio apparatus **5** is identified as the registered user, the permission signal is transmitted to the in-vehicle audio apparatus **5.** When, on the other hand, the person demanding permission to utilize the in-vehicle audio apparatus **5** is identified as the unregistered user, the rejection signal is transmitted to the in-vehicle audio apparatus **5.**

When, on the other hand, the biometric information obtained by the camera unit **10** is not available for the identification of the person demanding permission to utilize the in-vehicle audio apparatus **5,** the biometric information is received from the IC card. The judgment is then made on whether or not the person demanding permission to utilize the in-vehicle audio apparatus **5** is identical to the registered user having permission to utilize the automotive vehicle on the basis of the similarity value of the biometric information received from the IC card with respect to the biometric information stored in the memory unit **31.** When the person is identified as the registered user, the permission signal is transmitted to the in-vehicle audio apparatus **5.** When, on the other hand, the person is identified as the unregistered user, the rejection signal is transmitted to the in-vehicle audio apparatus **5.**

When the permission signal is received from the in-vehicle controlling apparatus **401** by the in-vehicle audio apparatus **5,** the person identified as the registered user is allowed to power the in-vehicle audio apparatus **5,** the operation requested by the person identified as the registered user is then performed by the in-vehicle audio apparatus **5.** When, on the other hand, the rejection signal is received from the in-vehicle controlling apparatus **401** by the in-vehicle audio apparatus **5,** the person identified as the unregistered user is prevented from powering the in-vehicle audio apparatus **5,** or the operation requested by the person identified as the unregistered user is not performed by the in-vehicle audio apparatus **5.**

From the above detailed description, it will be understood that the in-vehicle controlling apparatus **401** and the in-vehicle apparatus controlling system **400** according to the fourth embodiment of the present invention can allow the in-vehicle audio apparatus **5** to be utilized by only the registered user by judging at a relatively high accuracy and reliability, without being affected by an environmental condition such as for example a bad weather and a dark place, or other adverse condition such as for example suddenly failure of the camera unit **10** and the lens stained with dust, whether or not the person demanding permission to utilize the in-vehicle audio apparatus **5** is identified as the registered user having permission to utilize the automotive vehicle by reason that the reading means **20** is adapted to receive the biometric information from the IC card when the judgment is made that the biometric information obtained by the camera unit **10** is not available for the identification of the person demanding permission to utilize the in-vehicle audio apparatus **5.**

### [Fifth Embodiment]

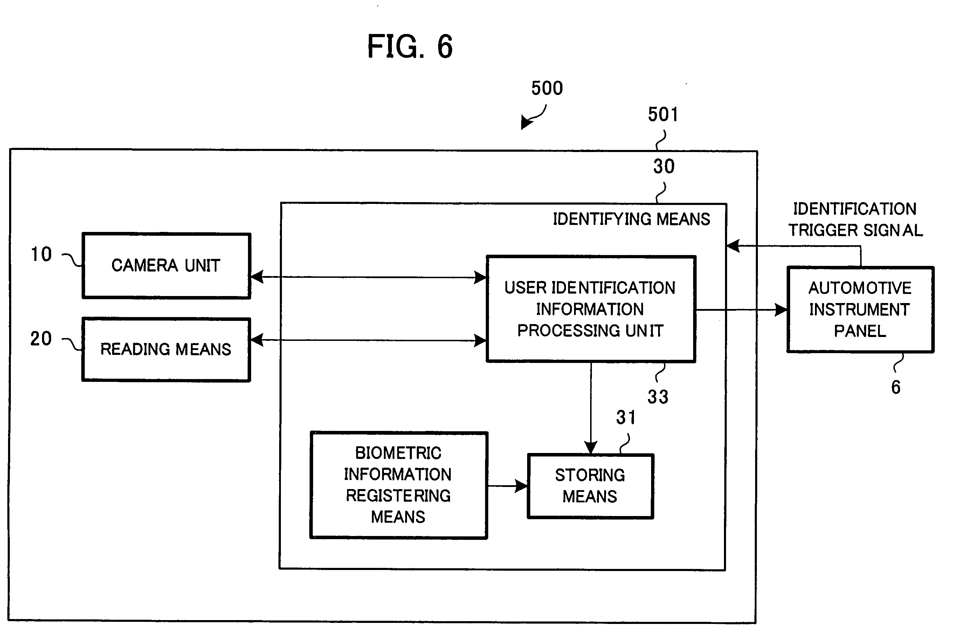

The constitution of the in-vehicle controlling apparatus and the in-vehicle apparatus controlling system according to the fifth embodiment of the present invention will be described hereinafter with reference to FIG. **6.**

The constitutional elements of the fifth embodiment of the in-vehicle apparatus controlling system **500** substantially the same as those of the first embodiment of the in-vehicle apparatus controlling system **100** will not be described but bear the same reference numerals as those of the first embodiment of the in-vehicle apparatus controlling system **100.**

As shown in FIG. **6,** the in-vehicle controlling apparatus **501** of the in-vehicle apparatus controlling system **500** according to the fifth embodiment of the present invention is adapted to perform communication with an automotive instrument panel **6** provided in an automotive vehicle. The user identification information processing unit **33** of the identifying means **30** of the in-vehicle controlling apparatus **501** is adapted to perform identification of a person demanding permission to utilize the automotive instrument panel **6** in response to a request signal received from the automotive instrument panel **6,** and to activate the automotive instrument panel **6** on the basis of the judgment received from the user identification information processing unit **33.**

When, for example, the judgment is made that the engine is started by the person demanding permission to utilize the automotive vehicle, the request signal is transmitted to the in-vehicle controlling apparatus **501** as previously mentioned in the first embodiment with reference to FIG. **2.**

As previously mentioned in the first embodiment, the biometric information is firstly obtained from the camera unit **10.** The judgment is then made on whether or not the biometric information obtained by the camera unit **10** is available for the identification of the person demanding permission to utilize the automotive instrument panel **6.** When the biometric information obtained by the camera unit **10** is available for the identification of the person demanding permission to utilize the automotive instrument panel **6,** the judgment is made on whether or not the person is identical to the registered user having permission to utilize the automotive vehicle on the basis of the similarity value of the biometric information obtained by the camera unit **10** with respect to the biometric information stored in the memory unit **31.** When the person demanding permission to utilize the automotive instrument panel **6** is identified as the registered user, the permission signal is transmitted to the automotive instrument panel **6.** When, on the other hand, the person demanding permission to utilize the automotive instrument panel **6** is identified as the unregistered user, the rejection signal is transmitted to the automotive instrument panel **6.**

When, on the other hand, the biometric information obtained by the camera unit **10** is not available for the identification of the person demanding permission to utilize the automotive instrument panel **6,** the biometric information is received from the IC card. The judgment is then made on whether or not the person demanding permission to utilize the automotive instrument panel **6** is identical to the registered user having permission to utilize the automotive vehicle on the basis of the similarity value of the biometric information received from the IC card with respect to the biometric information stored in the memory unit **31.** When the person is identified as the registered user, the permission signal is transmitted to the automotive instrument panel **6.** When, on the other hand, the person is identified as the unregistered user, the rejection signal is transmitted to the automotive instrument panel **6.**

When the permission signal is received from the in-vehicle controlling apparatus **501** by the in-vehicle audio apparatus **5,** the person identified as the registered user is allowed to power the in-vehicle audio apparatus **5,** the operation requested by the person identified as the registered user is then performed by the in-vehicle audio apparatus **5.** When, on the other hand, the rejection signal is received from the in-vehicle controlling apparatus **501** by the in-vehicle audio apparatus **5,** the person identified as the unregistered user is prevented from powering the in-vehicle audio apparatus **5,** or the operation requested by the person identified as the unregistered user is not performed by the in-vehicle audio apparatus **5.**

From the above detailed description, it will be understood that the in-vehicle controlling apparatus **501** and the in-vehicle apparatus controlling system **500** according to the fifth embodiment of the present invention can allow the automotive instrument panel **6** to be utilized by only the registered user by judging at a relatively high accuracy and reliability, without being affected by an environmental condition such as for example a bad weather and a dark place, or other adverse condition such as for example suddenly failure of the camera unit **10** and the lens stained with dust, whether or not the person demanding permission to utilize the automotive instrument panel **6** is identified as the registered user having permission to utilize the automotive vehicle by reason that the reading means **20** is adapted to receive the biometric information from the IC card when the judgment is made that the biometric information obtained by the camera unit **10** is not available for the identification of the person demanding permission to utilize the automotive instrument panel **6.**

### [Sixth Embodiment]

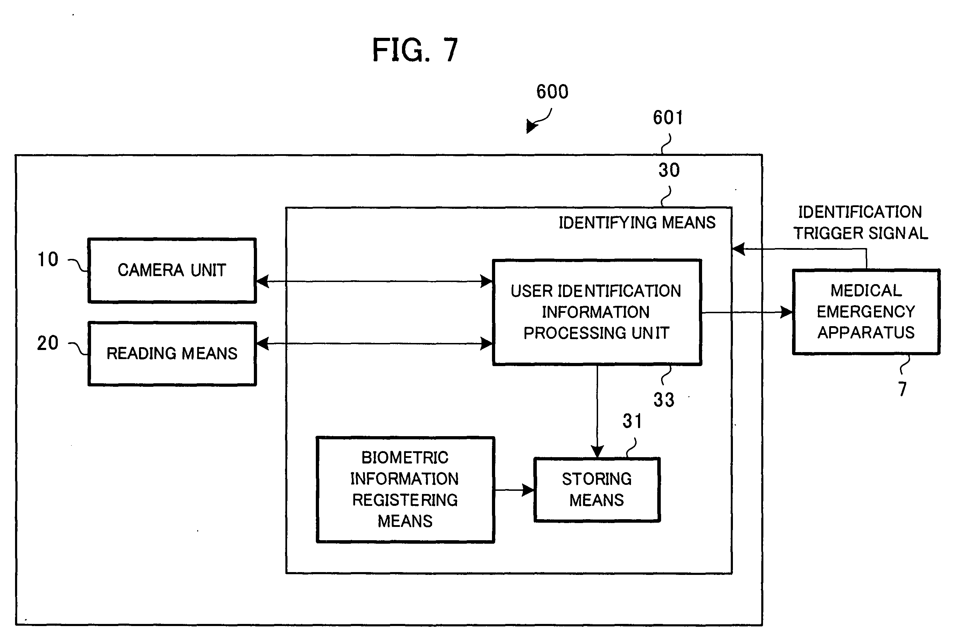

The constitution of the in-vehicle controlling apparatus and the in-vehicle apparatus controlling system according to the sixth embodiment of the present invention will be described hereinafter with reference to FIG. **7.**

The constitutional elements of the sixth embodiment of the in-vehicle apparatus controlling system **600** substantially the same as those of the first embodiment of the in-vehicle apparatus controlling system **100** will not be described but bear the same reference numerals as those of the first embodiment of the in-vehicle apparatus controlling system **100.**

As shown in FIG. **7,** the in-vehicle controlling apparatus **601** of the in-vehicle apparatus controlling system **600** according to the sixth embodiment of the present invention is adapted to perform communication with an emergency call apparatus **7,** provided in an automotive vehicle, for calling in an emergency medical center when the person identified as the registered user suddenly gets out of shape in the automotive vehicle, or the person identified as the registered user is involved in an automotive vehicle accident. The user identification information processing unit **33** of the identifying means **30** of the in-vehicle controlling apparatus **601** is adapted to perform identification of a person demanding permission to utilize the automotive vehicle in response to a request signal received from the emergency call apparatus **7,** and to activate the emergency call apparatus **7** on the basis of the judgment received from the user identification information processing unit **33.**

When, for example, the judgment is made by a detector that the person demanding permission to utilize the automotive vehicle is sitting on the driver's seat, the request signal is transmitted to the in-vehicle controlling apparatus **601** as previously mentioned in the first embodiment with reference to FIG. **2.**

As previously mentioned in the first embodiment, the biometric information is firstly obtained from the camera unit **10.** The judgment is then made on whether or not the biometric information obtained by the camera unit **10** is available for the identification of the person demanding permission to utilize the emergency call apparatus **7.** When the biometric information obtained by the camera unit **10** is available for the identification of the person demanding permission to utilize the emergency call apparatus **7,** the judgment is made on whether or not the person is identical to the registered user having permission to utilize the automotive vehicle on the basis of the similarity value of the biometric information obtained by the camera unit **10** with respect to the biometric information stored in the memory unit **31.** When the person demanding permission to utilize the emergency call apparatus **7** is identified as the registered user, the permission signal is transmitted to the emergency call apparatus **7.** When, on the other hand, the person demanding permission to utilize the emergency call apparatus **7** is identified as the unregistered user, the rejection signal is transmitted to the emergency call apparatus **7.**

When, on the other hand, the biometric information obtained by the camera unit **10** is not available for the identification of the person demanding permission to utilize the emergency call apparatus **7,** the biometric information is received from the IC card. The judgment is then made on whether or not the person demanding permission to utilize the emergency call apparatus **7** is identical to the registered user having permission to utilize the automotive vehicle on the basis of the similarity value of the biometric information received from the IC card with respect to the biometric information stored in the memory unit **31.** When the person is identified as the registered user, the permission signal is transmitted to the emergency call apparatus **7.** When, on the other hand, the person is identified as the unregistered user, the rejection signal is transmitted to the emergency call apparatus **7.**

When the permission signal is received from the in-vehicle controlling apparatus **601** by the emergency call apparatus **7,** the person identified as the registered user is allowed to power the emergency call apparatus **7,** the operation requested by the person identified as the registered user is then performed by the emergency call apparatus **7.** When, on the other hand, the rejection signal is received from the in-vehicle controlling apparatus **601** by the emergency call apparatus **7,** the person identified as the unregistered user is prevented from powering the emergency call apparatus **7,** or the operation requested by the person identified as the unregistered user is not performed by the emergency call apparatus **7.**

From the above detailed description, it will be understood that the in-vehicle controlling apparatus **601** and the in-vehicle apparatus controlling system **600** according to the sixth embodiment of the present invention can allow the emergency call apparatus **7** to be utilized by only the registered user by judging at a relatively high accuracy and reliability, without being affected by an environmental condition such as for example a bad weather and a dark place, or other adverse condition such as for example suddenly failure of the camera unit **10** and the lens stained with dust, whether or not the person demanding permission to utilize the emergency call apparatus **7** is identified as the registered user having permission to utilize the automotive vehicle by reason that the reading means **20** is adapted to receive the biometric information from the IC card when the judgment is made that the biometric information obtained by the camera unit **10** is not available for the identification of the person demanding permission to utilize the emergency call apparatus **7.**

### [Seventh Embodiment]

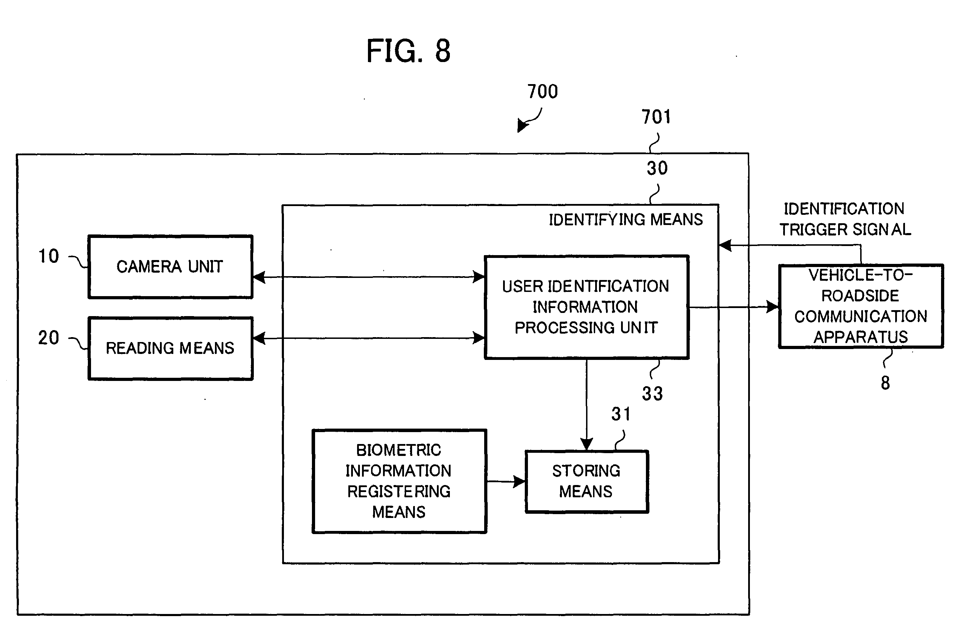

The constitution of the in-vehicle controlling apparatus and the in-vehicle apparatus controlling system according to the seventh embodiment of the present invention will be described hereinafter with reference **to** FIG. **8.**

The constitutional elements of the seventh embodiment of the in-vehicle apparatus controlling system **700** substantially the same as those of the first embodiment of the in-vehicle apparatus controlling system **100** will not be described but bear the same reference numerals as those of the first embodiment of the in-vehicle apparatus controlling system **100.**

As shown in FIG. **8,** the in-vehicle controlling apparatus **701** of the in-vehicle apparatus controlling system **700** according to the seventh embodiment of the present invention is adapted to perform communication with a vehicle-to-roadside communication apparatus **8,** provided in an automotive vehicle, for calling in an emergency medical center when the registered user suddenly gets out of shape in the automotive vehicle, or the registered user is involved in an automotive vehicle accident. The user identification information processing unit **33** of the identifying means **30** of the in-vehicle controlling apparatus **701** is adapted to perform identification of a person demanding permission to utilize the automotive vehicle in response to a request signal received from the vehicle-to-roadside communication apparatus **8,** and to activate the vehicle-to-roadside communication apparatus **8** on the basis of the judgment received from the user identification information processing unit **33.**

When, for example, the judgment is made that the engine is started by the person demanding permission to utilize the automotive vehicle, the request signal is transmitted to the in-vehicle controlling apparatus **701** as previously mentioned in the first embodiment with reference to FIG. **2.**

As previously mentioned in the first embodiment, the biometric information is firstly obtained from the camera unit **10.** The judgment is then made on whether or not the biometric information obtained by the camera unit **10** is available for the identification of the person demanding permission to utilize the vehicle-to-roadside communication apparatus **8.** When the biometric information obtained by the camera unit **10** is available for the identification of the person demanding permission to utilize the vehicle-to-roadside communication apparatus **8,** the judgment is made on whether or not the person is identical to the registered user having permission to utilize the automotive vehicle on the basis of the similarity value of the biometric information obtained by the camera unit **10** with respect to the biometric information stored in the memory unit **31.** When the person demanding permission to utilize the vehicle-to-roadside communication apparatus **8** is identified as the registered user, the permission signal is transmitted to the vehicle-to-roadside communication apparatus **8.** When, on the other hand, the person demanding permission to utilize the vehicle-to-roadside communication apparatus **8** is identified as the unregistered user, the rejection signal is transmitted to the vehicle-to-roadside communication apparatus 8.

When, on the other hand, the biometric information obtained by the camera unit **10** is not available for the identification of the person demanding permission to utilize the vehicle-to-roadside communication apparatus **8,** the biometric information is received from the IC card. The judgment is then made on whether or not the person demanding permission to utilize the vehicle-to-roadside communication apparatus **8** is identical to the registered user having permission to utilize the automotive vehicle on the basis of the similarity value of the biometric information received from the IC card with respect to the biometric information stored in the memory unit **31.** When the person is identified as the registered user, the permission signal is transmitted to the vehicle-to-roadside communication apparatus **8.** When, on the other hand, the person is identified as the unregistered user, the rejection signal is transmitted to the vehicle-to-roadside communication apparatus **8.**

When the permission signal is received from the in-vehicle controlling apparatus **701** by the vehicle-to-roadside communication apparatus **8,** the person identified as the registered user is allowed to power the vehicle-to-roadside communication apparatus **8,** the operation requested by the person identified as the registered user is then performed by the vehicle-to-roadside communication apparatus **8.** When, on the other hand, the rejection signal is received from the in-vehicle controlling apparatus **701** by the vehicle-to-roadside communication apparatus **8,** the person identified as the unregistered user is prevented from powering the vehicle-to-roadside communication apparatus **8,** or the operation requested by the person identified as the unregistered user is not performed by the vehicle-to-roadside communication apparatus **8.**

From the above detailed description, it will be understood that the in-vehicle controlling apparatus **701** and the in-vehicle apparatus controlling system **700** according to the seventh embodiment of the present invention can allow the vehicle-to-roadside communication apparatus **8** to be utilized by only the registered user by judging at a relatively high accuracy and reliability, without being affected by an environmental condition such as for example a bad weather and a dark place, or other adverse condition such as for example suddenly failure of the camera unit **10** and the lens stained with dust, whether or not the person demanding permission to utilize the vehicle-to-roadside communication apparatus **8** is identified as the registered user having permission to utilize the automotive vehicle by reason that the reading means **20** is adapted to receive the biometric information from the IC card when the judgment is made that the biometric information obtained by the camera unit **10** is not available for the identification of the person demanding permission to utilize the vehicle-to-roadside communication apparatus **8.**

### [Eighth Embodiment]

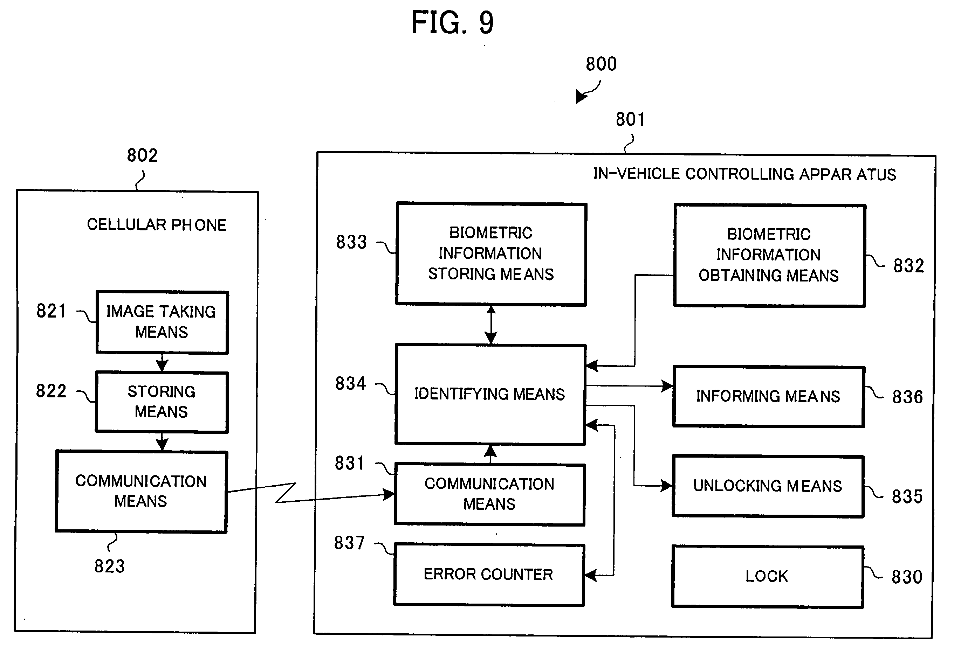

The constitution of the in-vehicle controlling apparatus and the in-vehicle apparatus controlling system according to the eighth embodiment of the present invention will be described hereinafter with reference to FIG. **9.**

The in-vehicle apparatus controlling system **800** is shown in FIG. **9** as comprising an in-vehicle controlling apparatus **801** and a cellular phone **802** for performing as a mobile communication apparatus. The in-vehicle controlling apparatus **801** includes a door lock 830 of an automotive vehicle, and lock controlling means **835** for controlling the door lock 830 on the basis of the biometric information indicative of a person demanding permission to utilize an in-vehicle apparatus.

The cellular phone **802** includes image taking means **821** for taking an image indicative of the person demanding permission to utilize the automotive vehicle, and for obtaining face information from the image, storing means **822** for storing the face information obtained by the image taking means **821,** communication means **823** for transmitting the face information stored by the storing means **822** to the in-vehicle controlling apparatus **801.** Here, the image taking means **821** is constituted by CCD camera built in the cellular phone **802.** The image taking means **821** functions as biometric information obtaining means.

On the other hand, the in-vehicle controlling apparatus **801** includes a door lock **830** of an automotive vehicle, communication means **831** for receiving the face information from the communication means **823** of the cellular phone **802,** biometric information obtaining means **832** for obtaining, as the biometric information, the face information from the image taken by CCD camera provided in the automotive vehicle, the face information being indicative of biometric features of the face of the person demanding permission to utilize the automotive vehicle, biometric information storing means **833** for registering biometric information indicative of at least one user having permission to utilize the automotive vehicle, identifying means **834** for judging whether or not the person is identical to the registered user on the basis of the comparison between the face information obtained by the biometric information obtaining means **832** and the face information registered by the biometric information storing means **833,** or the comparison between the face information received by the communication means **831** and the face information registered by the biometric information storing means **833,** unlocking means **835** for unlocking the doors of the automotive vehicle when the judgment is made that the person is identified as the registered user having permission to utilize the doors of the automotive vehicle, informing means **836** having a speaker unit, the informing means **836** being adapted to inform the person identified as the registered user through the speaker unit, an error counter **837** having the number of occurrences to be incremented when the judgment is made the person is identical to the registered user on the basis of the biometric information.

The biometric information storing means **833** is adapted to register the biometric information with an identification code of the cellular phone **802** owned by at least one user having permission to open the doors of the automotive vehicle.

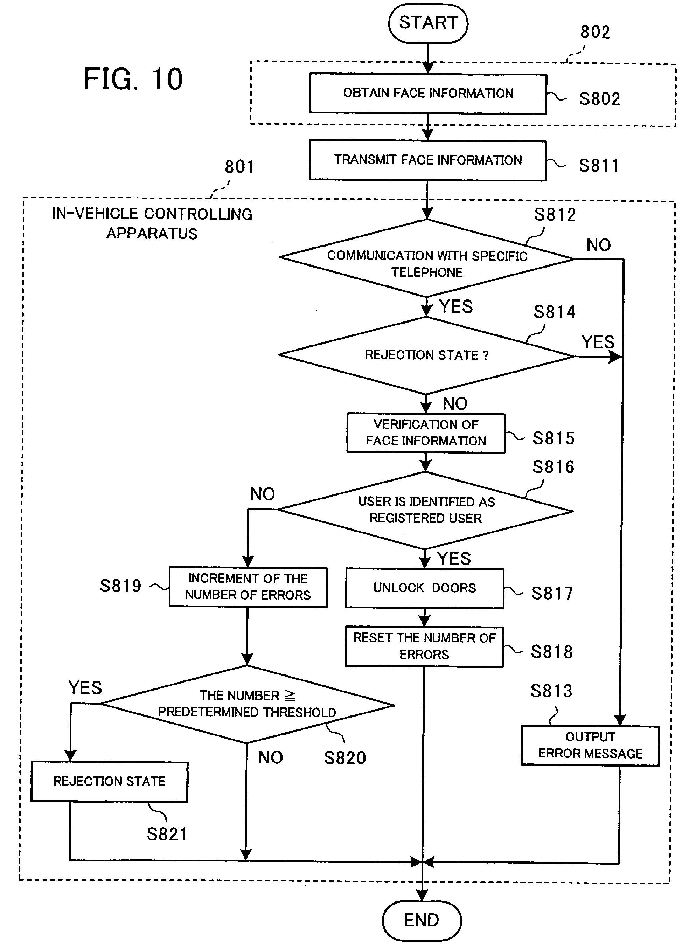

The operation of the in-vehicle apparatus controlling system **800** thus constructed will be described hereinafter with reference to FIG. **10.**

When the operation is normally performed by the in-vehicle apparatus controlling system **800,** the image indicative of the person demanding permission to unlock the door lock **830** of the automotive vehicle is taken by the biometric information obtaining means **832.** The biometric information indicative of the biometric features of the face of the person is obtained by the biometric information obtaining means **832,** and outputted to the identifying means **834.** Here, the judgment is made on whether or not the person demands permission to unlock the door lock **830** on the detection on whether or not the person is putting his or her hand on the door knob of the automotive vehicle.

The judgment is then made by the identifying means **834** on whether or not the person is identical to the registered user on the basis of the comparison between the biometric information obtained by the biometric information obtaining means **832** and the biometric information registered by the biometric information storing means **833.** When the judgment is made that the person is identified as the unregistered user, the unlocking means **835** fails to unlock the door lock **830** of the automotive vehicle. When, on the other hand, the judgment is made that the person is identified as the registered user, the unlocking means **835** unlocks the door lock **830** of the automotive vehicle. As a result, the person identified as the registered user opens the door of the automotive vehicle.

When, on the other hand, the judgment is made that the biometric information obtained by the biometric information obtaining means **832** is accidentally unavailable for the identification of the person demanding permission to utilize the in-vehicle apparatus, in other words, the biometric information is obtained in a bad weather or a dark place, or through the window badly stained with dust, the identification operation exemplified by the flowchart shown in FIG. **10** is performed in the in-vehicle apparatus controlling system.

The image indicative of the face of the person demanding permission to utilize the automotive vehicle is firstly obtained as the biometric information by the image taking means **821** of the cellular phone **802.** The obtained biometric information is then stored by the storing means **822** of the cellular phone **802** (in the step **S810).** The stored biometric information is then transmitted with the identification code such as for example its own telephone number to the communication means **831** of the in-vehicle controlling apparatus **801** by the communication means **823** of the cellular phone **802** (in the step **S811).**

When the biometric information and the identification code are received by the communication means **831,** the judgment is made by the identifying means **834** (in the step **S812)** on whether or not the received identification code is the same as the previously registered identification code of the specific telephone apparatus (specific cellular phone). When the answer in the step **S812** is in negative, i.e., the received identification code is not the same as the previously registered identification code, the error signal indicative of the fact that the received identification code is not the same as the previously registered identification code is transmitted to the informing means **836** by the identifying means **834.**

When, on the other hand, the answer in the step **S812** is in affirmative, i.e., the received identification code is the same as the previously registered identification code, the judgment is made by the identifying means **834** (in the step **S814)** on whether or not the lock controlling means **835** is in an refection state to prevent the automotive vehicle from being utilized by the person on the basis of the number of occurrences counted by the error counter **837.** This leads to the fact that the in-vehicle controlling apparatus **801** can prevent the door lock **830** of the automotive vehicle from being unlocked by a suspicious person through an apparatus for repeatedly transmitting fraudulent user identification information to the in-vehicle controlling apparatus **801** to access the in-vehicle controlling apparatus **801.**

When the judgment is made that the lock controlling means **835** is not in the refection state, in other words, the number of occurrences counted by the error counter is smaller than a predetermined threshold value, the comparison between the biometric information obtained through the communication means **831** and the biometric information stored by the biometric information storing means **833** is performed by the identifying means **834** (in the step **S815).** The judgment is then made by the identifying means **834** (in the step **S816)** on whether or not the person is identical to the registered user on the basis of the comparison between the biometric information obtained through the communication means **831** and the biometric information stored by the biometric information storing means **833.** When the answer in the step **S816** is in affirmative, i.e., the person is identical to the registered user, the permission signal is outputted to the lock controlling means **835** by the identifying means **834.** The lock controlling means **835** then unlocks the door lock **830** in response to the permission signal received from the identifying means **834** (in the step **S817).** The identifying means **834** then resets the error counter **837** (in the step **S818).**

When, on the other hand, the answer in the step **S816** is in negative, i.e., the person is not identical to the registered user, the number of occurrences is incremented, as an unfair request, by the error counter **837** (in the step **S819).** The judgment is then made (in the step **S820)** on whether or not the number of the occurrences counted by the error counter **837** is smaller than the predetermined threshold value. When the answer in the step **S820** is in affirmative, i.e., the number of the occurrences counted by the error counter **837** is smaller than the predetermined threshold value, the verification of the biometric information indicative of the person demanding permission to utilize the automotive vehicle is performed by the identifying means **834.** When, on the other hand, the answer in the step **S820** is in negative, i.e., the number of the occurrences counted by the error counter **837** is not smaller than the predetermined threshold value, the lock controlling means **835** assumes the rejection state to prevent the door lock **830** of the automotive vehicle from being unlocked by the person without having the identifying means **834** judge whether or not the person is identical to the registered user on the basis of the obtained biometric information (in the step **S821).**

From the above detailed description, it will be understood that the in-vehicle apparatus controlling system and the in-vehicle controlling apparatus according to the eighth embodiment of the present invention can improve convenience of unlocking the door lock **830** of the automotive vehicle without decreasing the security level of the automotive vehicle, and allow the automotive vehicle to be utilized by the person identified as the registered user by reason that the identifying means **834** is adapted to judge whether or not the person is identical to the registered user on the basis of the verification of the biometric information obtained by the biometric information obtaining means **832** when the judgment is made that the in-vehicle apparatus controlling system **800** functions normally, for example, the biometric information obtaining means **832** is in a normal state to obtain the biometric information indicative of the person demanding permission to utilize the automotive vehicle.

When, on the other hand, the judgment is made that the in-vehicle apparatus controlling system **800** is not functions normally, for example, the biometric information obtaining means **832** is in an accidental state to fail to obtain the biometric information indicative of the person demanding permission to utilize the in-vehicle apparatus, or the biometric information obtained by the biometric information obtaining means **832** is accidentally unavailable for the identification of the person demanding permission to utilize the in-vehicle apparatus, the biometric information obtained by the image taking means **821** of the cellular phone **802** is received by the in-vehicle apparatus controlling system **800.** The verification of the biometric information received from the cellular phone **802** is then performed by the identifying means **834.** The judgment is then made on whether or not the person is identical to the registered user on the basis of the verification of the biometric information received from the cellular phone **802.** As a result, the in-vehicle apparatus controlling system and the in-vehicle controlling apparatus according to the eighth embodiment of the present invention can unlock the door lock **830** of the automotive vehicle without decreasing the security level of the automotive vehicle.

The in-vehicle apparatus controlling system and the in-vehicle controlling apparatus according to the eighth embodiment of the present invention can be small in size of the stored biometric information without decreasing the security level of the automotive vehicle by reason that the type of the biometric information to be obtained by the image taking means **821** of the cellular phone **802** is predetermined on the basis of the biometric information registered by the biometric information storing means **833.** The identification program to be executed by the in-vehicle controlling apparatus can be small in program size by reason that the identifying means **834** is adapted to compare the obtained biometric information and the registered biometric information.

In this embodiment, the biometric information obtaining means **832** is provided in the inside of the automotive vehicle. However, the biometric information obtaining means **832** may be provided on the outside of the automotive vehicle.

When, for example, the lock controlling means **835** assumes the rejection state to prevent the lock of the automotive vehicle from being unlocked by the person without having the identifying means **834** judge whether or not the person is identical to the registered user on the basis of the obtained biometric information (in the step **S821),** the key may be put into the door lock **830** of the automotive vehicle. As a result of the fact the key is put into the door lock **830** of the automotive vehicle, the lock controlling means **835** is released from the rejection state. When, for example, the security code is inputted to the in-vehicle controlling apparatus mounted on the automotive vehicle, or the person operates in a predetermined manner the in-vehicle controlling apparatus, the lock controlling means **835** may be released from the rejection state. The information about the fact that the lock controlling means **835** assumes the rejection state, or the lock controlling means **835** is released form the rejection state may be transmitted to an external apparatus, and recorded in a memory media of the external apparatus.

Although the in-vehicle apparatus controlling system **800** according to the eighth embodiment of the present invention has been shown and described, is will be obvious in those skilled in the art that various changes and modifications may be made without departing from the spirit and scope of the present invention.

In the eighth embodiment of the in-vehicle apparatus controlling system **800,** the lock controlling means **835** is adapted to unlock the door lock of the automotive vehicle. However, the lock controlling means **835** may be adapted to unlock the lock of a bonnet, a trunk, a console box, and a glove box of the automotive vehicle. Additionally, the lock controlling means **835** may be adapted to unlock not only the lock of the automotive vehicle but also a lock of a dwelling house, or locks classified into other categories.

The identifying means may be adapted to judge in each lock whether or not the person is identical to the registered user having permission to unlock the respective lock on the basis of the biometric information independently registered in each lock. For example, the identifying means may be adapted to judge whether or not the person is identical to the registered user having permission to unlock the lock of the console box. The lock controlling means **835** may be adapted to unlock the lock of the console box when the judgment is made that the person is identical to the registered user having permission to unlock the lock of the console box. The in-vehicle apparatus controlling system thus constructed can the enhance the security level of the console box to ensure that his or her valuables is securely stored in the console box.

While there has been described in the this embodiment about the fact that the in-vehicle controlling apparatus **801** is adapted to receive the biometric information form the cellular phone **802,** the cellular phone **802** may be replaced by a mobile apparatus such as form example personal data assistance (PDA), or a camera-equipped communication apparatus specially made for the in-vehicle controlling apparatus **801.**

In this embodiment of the in-vehicle apparatus controlling system **800,** the in-vehicle controlling apparatus **801** is adapted to receive, as biometric information, the face information from the cellular phone **802.** The in-vehicle controlling apparatus **801** may further comprise a microphone unit for receiving a voice of the person demanding permission to utilize the automotive vehicle, and a fingerprint scanner for scanning a fingerprint pattern of the person demanding permission to utilize the automotive vehicle. The image taking means **821** may be replaced by a microphone unit, a fingerprint scanner, or other biometric sensor. The face information may be replaced by other biometric information such as for example voice information indicative of a voice pattern, fingerprint information indicative of a fingerprint pattern, or iris information indicative of an iris pattern.

More specifically, the biometric information obtaining means may be constituted by the microphone unit for obtaining voice information indicative of a voice pattern of the person demanding permission to utilize the automotive vehicle. The biometric information storing means may be adapted to register, as biometric information, voice information indicative of a voice pattern of the registered user having permission to utilize the automotive vehicle. In this case, the identifying means may be adapted to judge whether or not the person is identical to the registered user on the basis of the comparison between the obtained voice information and the registered voice information.

As another example, the biometric information obtaining means may be constituted by the fingerprint scanner for obtaining fingerprint information indicative of a fingerprint pattern of the person demanding permission to utilize the automotive vehicle. The biometric information storing means may be adapted to register, as biometric information, fingerprint information indicative of a fingerprint pattern of the registered user having permission to utilize the automotive vehicle. In this case, the identifying means may be adapted to judge whether or not the person is identical to the registered user on the basis of the comparison between the obtained fingerprint information and the registered fingerprint information.

As further example, the biometric information obtaining means may be constituted by the camera unit for obtaining iris information indicative of an iris pattern of the person demanding permission to utilize the automotive vehicle. The biometric information storing means may be adapted to register, as biometric information, iris information indicative of an iris pattern of the registered user having permission to utilize the automotive vehicle. In this case, the identifying means may be adapted to judge whether or not the person is identical to the registered user on the basis of the comparison between the obtained iris information and the registered iris information.

Additionally, the cellular phone **802** may further comprise identifying means for judging whether or not the person is identical to the registered user, and biometric information storing means for registering biometric information. The in-vehicle apparatus controlling system thus constructed can unlock the door lock **830** without decreasing the security level of the automotive vehicle by reason that the identifying means of the cellular phone **802** is adapted to judge whether or not the person is identical to the registered user on the basis of the biometric information obtained by the biometric information obtaining means of the cellular phone **802** when the identifying means of the in-vehicle controlling apparatus **801** is in an accidental state to fail to judge whether or not the person is identical to the registered user on the basis of the biometric information obtained by the biometric information obtaining means of the in-vehicle controlling apparatus **801,** the lock controlling means **835** is adapted to unlock the door lock **830** on the judgment made by the identifying means of the cellular phone **802.**

### [Ninth Embodiment]

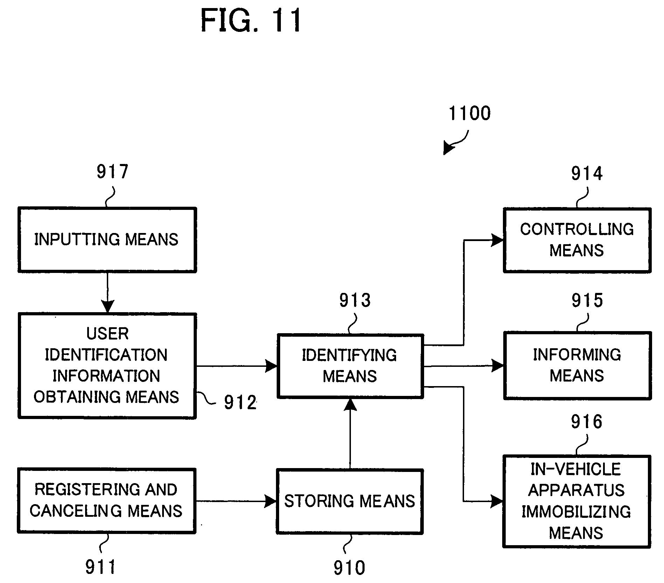

The constitution of the in-vehicle controlling apparatus and the in-vehicle apparatus controlling system according to the ninth embodiment of the present invention will be described hereinafter with reference to FIG. **11.**

The in-vehicle apparatus controlling system **900** is shown in FIG. **11** as comprising storing means **910** having user identification information stored therein, the user identification information being indicative of a registered user having permission to unlock locks provided in an automotive vehicle, registering means **911** for registering new user identification information in the storing means **910,** or canceling the user identification information previously stored in the storing means **910,** user identification information obtaining means **912** for obtaining biometric information indicative of biometric features of a person demanding permission to utilize an automotive vehicle, identifying means **913** for judging whether or not the person is identical to the registered user by verifying whether or not the biometric information obtained by the user identification information obtaining means **912** is the same as the user identification information stored in the storing means **910,** controlling means **914** for unlocking doors of the automotive vehicle when the biometric information obtained by the user identification information obtaining means **912** is identified by the identifying means **913,** and informing means **915** for informing the person identified as the registered user about the user identification information immorally registered or cancelled by the unregistered user when the biometric information obtained by the user identification information obtaining means **912** is identified by the identifying means **913.**

In this embodiment, the term "lock" is intended to indicate a locking device provided in the automotive vehicle, the locking device being adapted to lock doors of the automotive vehicle. However, the locking device may be adapted to lock a bonnet, a trunk, a console box, and a glove box of the automotive vehicle.

In this embodiment of the in-vehicle apparatus controlling system **900** and the in-vehicle controlling apparatus, the user identification information includes biometric information indicative of one or more biometric features such as for example fingerprint pattern, palm pattern iris pattern, voice pattern, ear, palm vein, and face. The user identification information obtaining means **912** is constituted by one or more biometric sensors for sensing respective biometric features of the person demanding permission to utilize the automotive vehicle.

The storing means **910** is constituted by a nonvolatile memory having the user identification information indicative of the registered user having permission to unlock the doors of the automotive vehicle.

As shown in FIG. **11,** the in-vehicle apparatus controlling system **900** further comprises in-vehicle apparatus immobilizing means **916** for preventing the in-vehicle apparatus from being utilized by the person identified as the unregistered user failing to have permission to utilize the in-vehicle apparatus. In this case, the storing means **910** may have the user identification information stored therein, the user identification information being registered in each of the in-vehicle apparatuses such as for example an engine starting apparatus, an in-vehicle telephone apparatus, an in-vehicle audio apparatus, an automotive instrument panel, an emergency call apparatus, a vehicle-to-roadside communication apparatus forming part of an electronic toll collection system, and a navigation apparatus. The user identification information is indicative of the registered user having permission in each of the in-vehicle apparatuses.

The user identification information stored in the storing means **910** includes previously registered user identification information indicative of the owner of the automotive vehicle. This user identification information indicative of the owner of the automotive vehicle can be previously registered in only an automobile plant, an automobile sales, and other limited agencies. The registered user identification information indicative of the owner of the automotive vehicle can be cancelled in only the automobile plant, the automobile sales, and other limited agencies. In another case, the previously registered user identification information indicative of the owner of the automotive vehicle may be cancelled in the automotive vehicle by the person identified as the registered user.

When the user identification information newly inputted through a crystal display apparatus equipped with a touch-sensitive panel, and mounted on the automotive vehicle, the registering means **911** is adapted to register the newly inputted user identification information to be stored by the storing means **910.** The registering means **911** is adapted to cancel the registered user identification information stored by the storing means **910.**

If, in the in-vehicle apparatus controlling system **900** mounted on the automotive vehicle, the user identification information obtaining means **912** is continuously in a standby state to wait to receive the biometric information, the in-vehicle apparatus controlling system **900** can't reduce electric power consumption in the standby state. In order to solve this problem, the in-vehicle apparatus controlling system **900** further comprises inputting means **917** for producing an operation signal indicative of an instruction to the user identification information obtaining means **912** to assume the standby state to wait to receive the biometric information.

In this case, the user identification information obtaining means **912** is adapted to assume the standby state to wait to receive the biometric information in response to the start signal inputted by the inputting means **917.** When the judgment is made that the waiting time exceeds a predetermined threshold value, the user identification information obtaining means **912** is adapted to stop waiting to receive the biometric information.

The identifying means **913** is adapted to compare the user identification information stored by the storing means **910** with the user identification information obtained by the user identification information obtaining means **912,** the stored user identification information being indicative of the registered user having permission to unlock the door lock of the automotive vehicle, the obtained user identification information being indicative of the person demanding permission to unlock the door lock of the automotive vehicle, and adapted to judge whether or not the person is identical to the registered user on the basis of the comparison between the stored user identification information and the obtained user identification information. When the judgment is made by the identifying means **913** that the obtained user identification is acceptable, in other words, the person is identical to the registered user, the controlling means **914** is adapted to unlock the door lock of the automotive vehicle.

The identifying means **913** is adapted to compare the user identification information stored by the storing means **910** with the user identification information obtained by the user identification information obtaining means **912,** the stored user identification information being indicative of the registered user having permission to utilize the in-vehicle apparatus, the obtained user identification information being indicative of the person demanding permission to utilize the in-vehicle apparatus, and adapted to judge in each of the in-vehicle apparatuses whether or not the person is identical to the registered user on the basis of the comparison between the stored user identification information and the obtained user identification information. When the judgment is made by the identifying means **913** that the obtained user identification is acceptable for the in-vehicle apparatus, in other words, the person is identical to the registered user having permission to utilize the in-vehicle apparatus, the controlling means **914** is adapted to allow the in-vehicle apparatus to be utilized by the person. When, on the other hand, the judgment is made by the identifying means **913** that the obtained user identification is not acceptable for the in-vehicle apparatus, in other words, the person is not identical to the registered user having permission to utilize the in-vehicle apparatus, the in-vehicle apparatus immobilizing means **916** is adapted to immobilize the in-vehicle apparatus to prevent the in-vehicle apparatus from being utilized by the person.

The informing means **915** is constituted by at least one of a crystal display apparatus, a speaker unit, and a lighting emitting device. The informing means **915** is adapted to inform the person identified as the registered user about the user identification information registered or cancelled by the registering means **911** with an image or characters displayed on its screen, a sound produced by the speaker unit, or a light emitted by the light emitting device.

Here, the person identified as the registered user is informed by the informing means **915** about the information having an identification code, one's name, a data and a time when the user identification information is registered or cancelled, the biometric features of the face of the person identified as the unregistered user. The user identification information is registered by the registering means **911,** and stored by the storing means **910.**

The person identified as the registered user may be informed by the informing means **915** about all of the user identification information stored by the storing means **910.** If, for example, the informing means **915** is constituted by the light emitting device, the light may be emitted by the light emitting device when the judgment is made that the user identification information is further registered or canceled by the registering means **911.** This leads to the fact that the person identified as the registered user can be informed by the light emitting device about the fact that the user identification information is further registered or canceled by the registering means **911.**

When the person is identified as the registered owner on the basis of the obtained user identification information, only the person identified as the registered owner may be informed by the informing means **915** about the fact that the user identification information is further registered or canceled by the registering means **911.** If the registration or cancellation of the user identification information is performed by the registering means **911,** the verification of the obtained user identification information may be repeatedly performed on the basis of the number of repetitions.

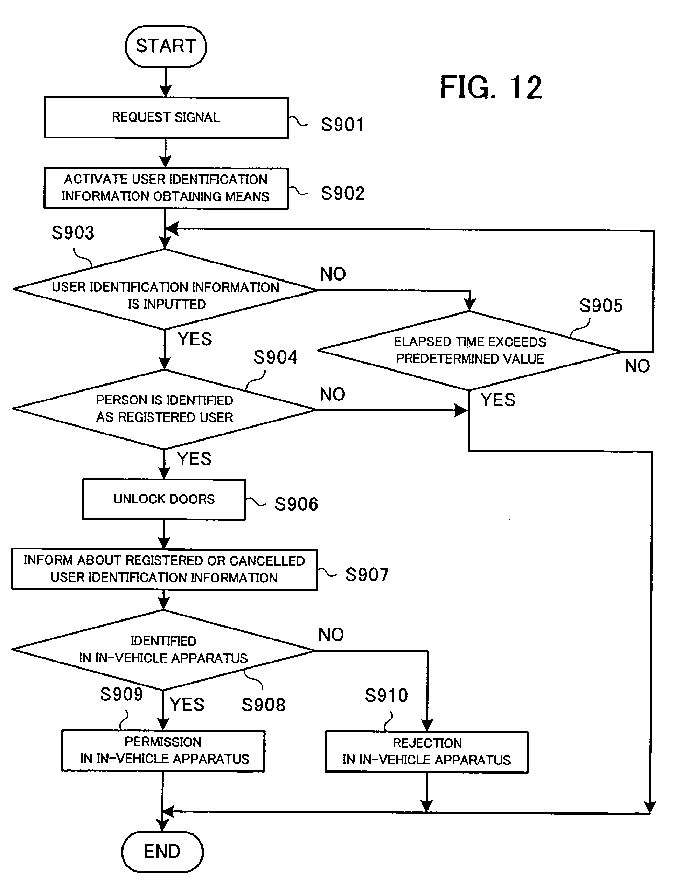

The operation of the ninth embodiment of the in-vehicle apparatus controlling system **900** according to the present invention will be described hereinafter with reference to FIG. **12.**

The operation signal is firstly inputted to the user identification information obtaining means **912** through the inputting means **917** by the person demanding permission to utilize the automotive vehicle (in the step **S901**)**,** while the operation is performed by the user identification information obtaining means **912** in response to the operation signal received through the inputting means **917** (in the step **S902**).

When the user identification information indicative of the person demanding permission to unlock the doors of the automotive vehicle is inputted to the identifying means **913** through the user identification information obtaining means **912** (in the step **S903**)**,** the judgment is made by the identifying means **913** (in the step **S914**) on whether or not the inputted user identification information is the same as the user identification information indicative of the registered user having permission to unlock the doors of the automotive vehicle. Additionally, the in-vehicle apparatus controlling system **900** starts to compute the elapsed time when the operation signal is inputted to the user identification information obtaining means **912.** The judgment is then made on whether or not the elapsed time exceeds a predetermined threshold level. When the judgment is made that the computed elapsed time exceeds the predetermined threshold level, the in-vehicle apparatus controlling system **900** completes the shut down procedure without allowing the in-vehicle apparatus to be utilized by the person identified as the unregistered user (in the step **S905**)**.**

When the judgment is made that the user identification information obtained by the user identification information obtaining means **912** is not the same as the user identification information indicative of the registered user having permission to unlock the doors of the automotive vehicle, the in-vehicle apparatus controlling system **900** completes the shut down procedure without allowing the in-vehicle apparatus to be utilized by the person identified as the unregistered user.

When, on the other hand, the judgment is made that the user identification information obtained by the user identification information obtaining means **912** is the same as the user identification information indicative of the registered user having permission to unlock the doors of the automotive vehicle, the doors of the automotive vehicle is unlocked by the controlling means **914** (in the step **S906**)**.** Each of the user identification information registered by the registering means 911 and the user identification information cancelled by the registering means **911** is then informed by the informing means **915** (in the step **S907**)**.**

The judgment is then made by the identifying means **913** (in the step **S908**) on whether or not the user identification information obtained by the user identification information obtaining means **912** is the same as the user identification information indicative of the registered user having permission to utilize the in-vehicle apparatus.

When the judgment is made that the user identification information obtained by the user identification information obtaining means **912** is the same as the user identification information indicative of the registered user having permission to utilize the in-vehicle apparatus, the controlling means **914** allows the in-vehicle apparatus to be utilized by the person identified as the registered user (in the step **S909**)**.**

When, on the other hand, the judgment is made that the user identification information obtained by the user identification information obtaining means **912** is not the same as the user identification information indicative of the registered user having permission to utilize the in-vehicle apparatus, the in-vehicle apparatus immobilizing means **916** prevents the in-vehicle apparatus from being utilized by the person identified as the unregistered user (in the step **S910**)**.**

In the operation of the in-vehicle apparatus controlling system **900** according to the ninth embodiment of the present invention, the person demanding permission to utilize the in-vehicle apparatuses may be identified as the registered user having permission to utilize the in-vehicle apparatuses in each in-vehicle apparatus through the steps **S908** to **S910.**

From the above detailed description, is will be understood that the in-vehicle apparatus controlling system **900** according to the ninth embodiment of the present invention can inform the registered user having permission to utilize the automotive vehicle about whether or not the user identification information is immorally registered or cancelled by the unregistered user failing to have permission to utilize the automotive vehicle by comprising informing means **915** for informing the person identified as the registered user about the user identification information immorally registered or cancelled by the unregistered user.

### [Tenth Embodiment]

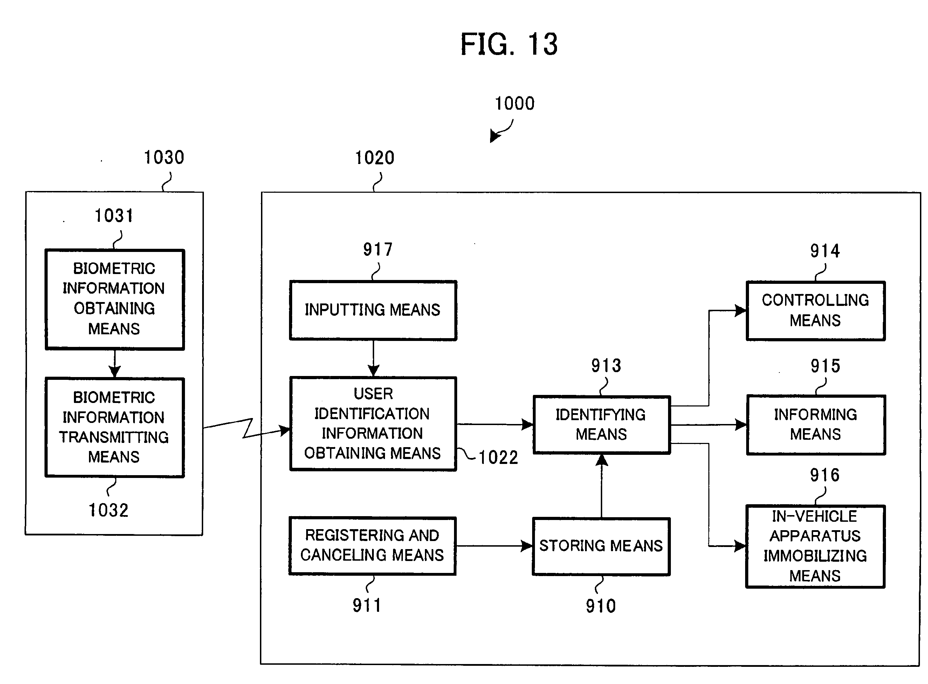

The constitution of the in-vehicle controlling apparatus and the in-vehicle apparatus controlling system according to the tenth embodiment of the present invention will be described hereinafter with reference to FIG. **13.**

The constitutional elements of the tenth embodiment of the in-vehicle apparatus controlling system **1000** substantially the same as those of the ninth embodiment of the in-vehicle apparatus controlling system **900** will not be described but bear the same reference numerals as those of the ninth embodiment of the in-vehicle apparatus controlling system **900.**

The in-vehicle apparatus controlling system **1000** is shown in FIG. **13** as comprising storing means **910,** deleting means **911,** identifying means **913,** controlling means **914,** and informing means **915.**

The in-vehicle apparatus controlling system **1000** further comprises user identification information obtaining means **1022** for obtaining user identification information indicative of a person demanding permission to utilize the automotive vehicle. The in-vehicle apparatus controlling system **1000** further comprises a mobile apparatus **1030** including biometric information obtaining means **1031** for obtaining biometric information indicative of a person demanding permission to utilize an automotive vehicle, and biometric information transmitting means **1032** for transmitting the obtained biometric information to the user identification information obtaining means **1022.**

The mobile apparatus **1030** is constituted by a communication apparatus such as for example a cellular phone. The user identification information obtaining means **1022** of the in-vehicle controlling apparatus **1020** is adapted to obtain, as the user identification information, the biometric information from the biometric information obtaining means **1031** of the mobile apparatus **1030,** the obtained biometric information being indicative of the person demanding permission to unlock the door locks of the automotive vehicle.

As will be seen from the ninth embodiment of the in-vehicle apparatus controlling system **900** according to the present invention, the in-vehicle apparatus controlling system **1000** according to the tenth embodiment of the present invention may further comprise in-vehicle apparatus immobilizing means **916** and inputting means **917.**

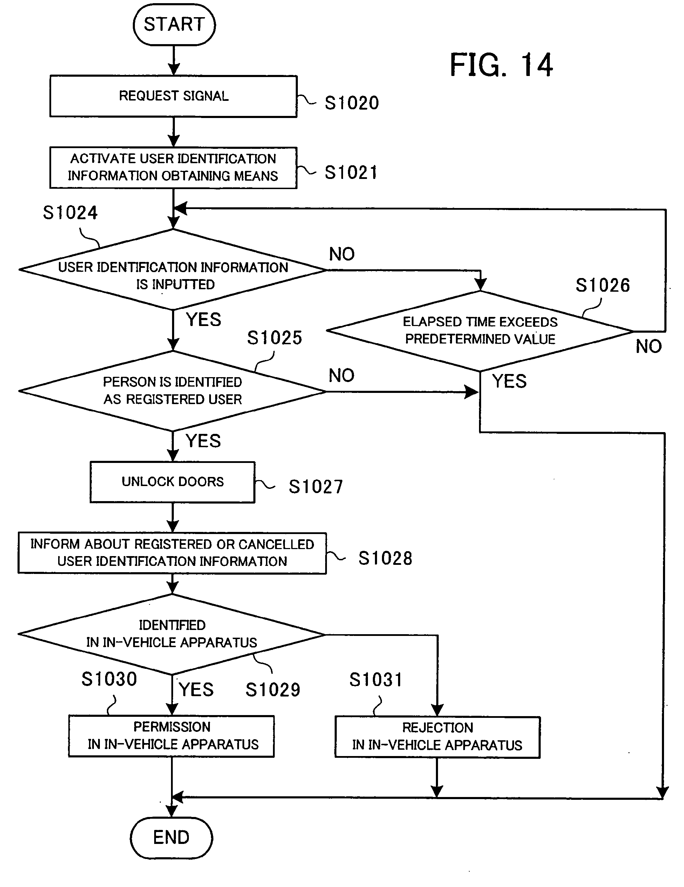

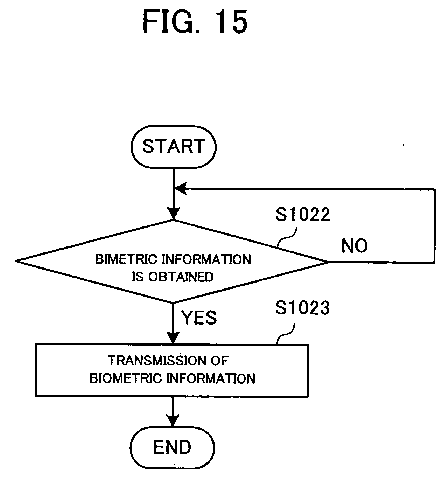

The operation of the tenth embodiment of the in-vehicle apparatus controlling system **1000** according to the present invention will be described hereinafter with reference to FIGS. **14** and **15.**

As shown in FIG. **15,** the operation signal is firstly inputted to the user identification information obtaining means **1022** through the inputting means **917** by the person demanding permission to utilize the automotive vehicle (in the step **S1020).** The operation is then performed by the user identification information obtaining means **1022** in response to the operation signal inputted through the inputting means **917** (in the step **S1021).**

When the biometric information indicative of the person demanding permission to utilize the automotive vehicle is inputted to the biometric information transmitting means **1032** of the mobile apparatus **1030** through the biometric information obtaining means **1031** of the mobile apparatus **1030,** the inputted user identification information is transmitted to the user identification information obtaining means **1022** of the in-vehicle controlling apparatus **1020** (in the step **S1023)** by the biometric information transmitting means **1032** of the mobile apparatus **1030.**

When the biometric information indicative of the person demanding permission to utilize the automotive vehicle is received as user identification information, as shown in FIG. 14, from the biometric information transmitting means **1032** of the mobile apparatus **1030** by the user identification information obtaining means **1022** of the in-vehicle controlling apparatus **1020** (in the step **S1024),** the judgment is made by the identifying means **913** (in the step **S1025)** on whether or not the user identification information received by the user identification information obtaining means **1022** of the in-vehicle controlling apparatus **1020** is the same as the user identification information indicative of the registered user having permission to unlock the doors of the automotive vehicle. Additionally, the in-vehicle apparatus controlling system **1000** starts to compute the elapsed time when the operation signal is inputted to the user identification information obtaining means **1022.** The judgment is then made on whether or not the computed elapsed time exceeds a predetermined threshold level. When the judgment is made that the computed elapsed time exceeds the predetermined threshold level, the in-vehicle apparatus controlling system **1000** completes the shut down procedure without allowing the in-vehicle apparatus to be utilized by the person identified as the unregistered user.

When the judgment is made that the user identification information obtained by the user identification information obtaining means **1022** is not the same as the user identification information indicative of the registered user having permission to unlock the doors of the automotive vehicle, the in-vehicle apparatus controlling system **1000** completes the shut down procedure without allowing the in-vehicle apparatus to be utilized by the person identified as the unregistered user.

When, on the other hand, the judgment is made that the user identification information obtained by the user identification information obtaining means **1022** is the same as the user identification information indicative of the registered user having permission to unlock the doors of the automotive vehicle, the doors of the automotive vehicle is unlocked by the controlling means **914** (in the step **S1027).** Each of the user identification information registered by the registering and canceling means **911** and the user identification information cancelled by the registering and canceling means **911** is then informed by the informing means **915** (in the step **S1028).**

The judgment is then made by the identifying means **913** (in the step **S1029)** on whether or not the user identification information obtained by the user identification information obtaining means **1022** is the same as the user identification information indicative of the registered user having permission to utilize the in-vehicle apparatus.

When the judgment is made that the user identification information obtained by the user identification information obtaining means **1022** is the same as the user identification information indicative of the registered user having permission to utilize the in-vehicle apparatus, the controlling means **914** allows the in-vehicle apparatus to be utilized by the person identified as the registered user (in the step **S1030).**

When, on the other hand, the judgment is made that the user identification information obtained by the user identification information obtaining means **1022** is not the same as the user identification information indicative of the registered user having permission to utilize the in-vehicle apparatus, the in-vehicle apparatus immobilizing means **916** prevents the in-vehicle apparatus from being utilized by the person identified as the unregistered user (in the step **S1031).**

In the operation of the in-vehicle apparatus controlling system **1000** according to the tenth embodiment of the present invention, the person demanding permission to utilize the in-vehicle apparatuses may be identified as the registered user having permission to utilize the in-vehicle apparatuses in each in-vehicle apparatus through the steps **S1029** to **S1031.**

From the above detailed description, is will be understood that the in-vehicle apparatus controlling system **1000** according to the tenth embodiment of the present invention can inform the registered user having permission to utilize the automotive vehicle about whether or not the user identification information is immorally registered or cancelled by the unregistered user failing to have permission to utilize the automotive vehicle by comprising informing means **915** for informing the person identified as the registered user about the user identification information immorally registered or cancelled by the unregistered user.

### [Eleventh Embodiment]

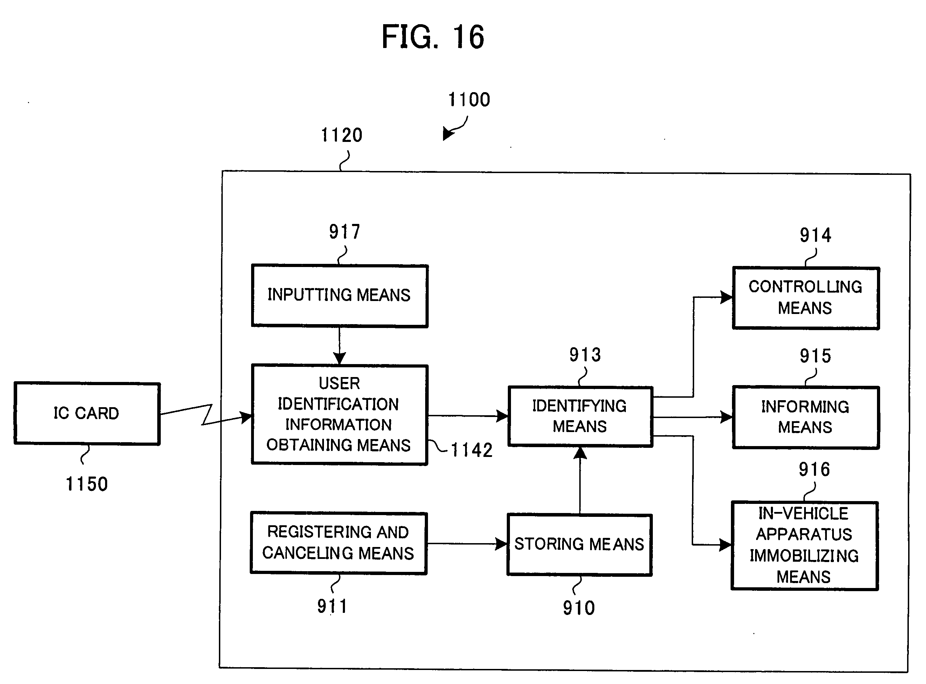

The constitution of the in-vehicle apparatus controlling system and the in-vehicle controlling apparatus according to the eleventh embodiment of the present invention will be described hereinafter with reference to FIG. **16.**

The constitutional elements of the eleventh embodiment of the in-vehicle apparatus controlling system **1100** substantially the same as those of the ninth embodiment of the in-vehicle apparatus controlling system **900** will not be described but bear the same reference numerals as those of the ninth embodiment of the in-vehicle apparatus controlling system **900.**

The in-vehicle apparatus controlling system **1100** is shown in FIG. **16** as comprising storing means **910,** registering and canceling means **911,** user identification information obtaining means **1142** for obtaining user identification information indicative of a person demanding permission to utilize an automotive vehicle, identifying means **1113,** and controlling means **914,** and informing means **915.** The in-vehicle apparatus controlling system **1100** further comprises IC card **1150** having user identification information stored therein, the user identification information being indicative of a person demanding permission to utilize the automotive vehicle.

The user identification information obtaining means **1142** is adapted to receive the user identification information from the IC card **1150.**

Here, the IC card **1150** may be constituted by a non-contact IC card. In this case, the user identification information obtaining means **1142** is adapted to have the non-contact IC card receive, as an electric power, an electromagnetic wave. On the other hand, the non-contact IC card is adapted to assume an operation state to transmit the previously stored user identification information to the user identification information obtaining means **1142** by receiving the electromagnetic wave from the user identification information obtaining means **1142.**

The IC card **1150** may be constituted by a driving license card. In this case, the driving license card is adapted to transmit the user identification information with an issue number of the driving license to the user identification information obtaining means **1142.**

As will be seen from the ninth embodiment of the in-vehicle apparatus controlling system **900** according to the present invention, the in-vehicle apparatus controlling system **1100** according to the eleventh embodiment of the present invention may further comprise in-vehicle apparatus immobilizing means **916** and inputting means **917.**

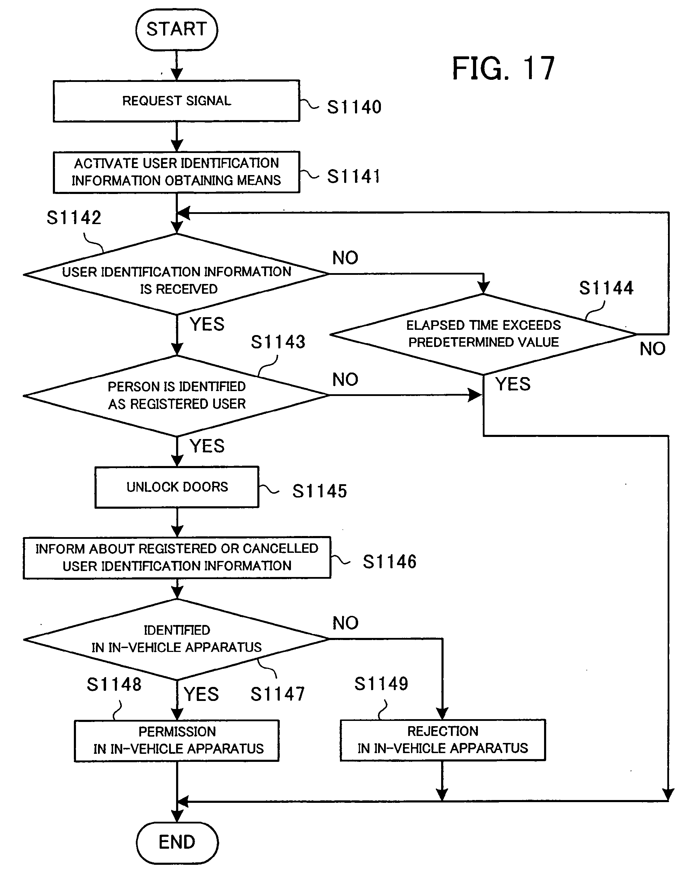

The operation of the eleventh embodiment of the in-vehicle apparatus controlling system **1100** according to the present invention will be described hereinafter with reference to FIG. **17.**

As shown in FIG. **15,** the operation signal is firstly inputted to the user identification information obtaining means **1142** through the inputting means **917** by the person demanding permission to utilize the automotive vehicle (in the step **S1140).** The operation starts is then performed by the user identification information obtaining means **1142** in response to the operation signal inputted through the inputting means **917** (in the step **S1141).**

The user identification information indicative of the person demanding permission to utilize the automotive vehicle is then received from the IC card **1150** (in the step **1142).** The judgment is then made by the identifying means **913** (in the step **S1143)** on whether or not the user identification information received from the IC card **1150** is the same as the user identification information indicative of the registered user having permission to unlock the doors of the automotive vehicle. Additionally, the in-vehicle apparatus controlling system **1100** starts to compute the elapsed time when the operation signal is inputted to the user identification information obtaining means **1142.** The judgment is then made on whether or not the computed elapsed time exceeds a predetermined threshold level. When the judgment is made that the computed elapsed time exceeds the predetermined threshold level, the in-vehicle apparatus controlling system **1100** completes the shut down procedure without allowing the in-vehicle apparatus to be utilized by the person identified as the unregistered user.

When the judgment is made that the user identification information obtained by the user identification information obtaining means **1142** is not the same as the user identification information indicative of the registered user having permission to unlock the doors of the automotive vehicle, the in-vehicle apparatus controlling system **1100** completes the shut down procedure without allowing the in-vehicle apparatus to be utilized by the person identified as the unregistered user.

When, on the other hand, the judgment is made that the user identification information obtained by the user identification information obtaining means **1142** is the same as the user identification information indicative of the registered user having permission to unlock the doors of the automotive vehicle, the doors of the automotive vehicle is unlocked by the controlling means **914** (in the step **S1145).** Each of the user identification information registered by the registering and canceling means **911** and the user identification information cancelled by the registering and canceling means **911** is then informed by the informing means **915** (in the step **S1146).**

The judgment is then made by the identifying means **913** (in the step **S1147)** on whether or not the user identification information obtained by the user identification information obtaining means **1142** is the same as the user identification information indicative of the registered user having permission to utilize the in-vehicle apparatus.

When the judgment is made that the user identification information obtained by the user identification information obtaining means **1142** is the same as the user identification information indicative of the registered user having permission to utilize the in-vehicle apparatus, the controlling means **914** allows the in-vehicle apparatus to be utilized by the person identified as the registered user (in the step **S1148).**

When, on the other hand, the judgment is made that the user identification information obtained by the user identification information obtaining means **1142** is not the same as the user identification information indicative of the registered user having permission to utilize the in-vehicle apparatus, the in-vehicle apparatus immobilizing means **916** prevents the in-vehicle apparatus from being utilized by the person identified as the unregistered user (in the step **S1149).**

In the operation of the in-vehicle apparatus controlling system **1100** according to the eleventh embodiment of the present invention, the person demanding permission to utilize the in-vehicle apparatuses may be identified as the registered user having permission to utilize the in-vehicle apparatuses in each in-vehicle apparatus through the steps **S1147** to **S1149.**

From the above detailed description, is will be understood that the in-vehicle apparatus controlling system **1100** according to the eleventh embodiment of the present invention can inform the registered user having permission to utilize the automotive vehicle about whether or not the user identification information is immorally registered or cancelled by the unregistered user failing to have permission to utilize the automotive vehicle by comprising informing means **915** for informing the person identified as the registered user about the user identification information immorally registered or cancelled by the unregistered user.

### [Twelfth Embodiment]

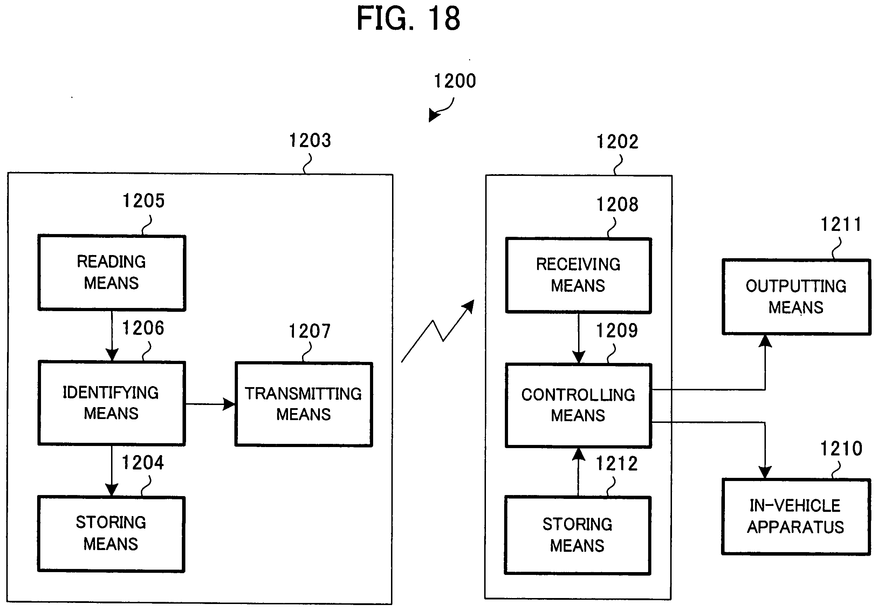

The constitution of the in-vehicle controlling apparatus and the in-vehicle apparatus controlling system according to the twelfth embodiment of the present invention will be described hereinafter with reference to FIG. **18.**

The in-vehicle apparatus controlling system **1200** is shown in FIG. **18** as comprising an in-vehicle controlling apparatus **1202** for controlling the in-vehicle apparatus **1210,** and a cellular phone **1203** for performing, as a mobile communication apparatus, communication with the in-vehicle controlling apparatus **1202.**

The IC card has user identification information stored therein, the user identification information being indicative of a person demanding permission to utilize the in-vehicle apparatus. On the other hand, the cellular phone **1203** includes storing means **1204** having user identification information stored therein, the user identification information being indicative of a registered user having permission to utilize the in-vehicle apparatus, reading means **1205** for receiving the user identification information from the IC card, identifying means **1206** for judging whether or not the person demanding permission to utilize the in-vehicle apparatus is identical to the registered user having permission to utilize the in-vehicle apparatus on the basis of the user identification information stored in the IC card and the user identification information stored by the storing means **1204,** and transmitting means **1207** for transmitting the judgment made by the identifying means **1206** to the in-vehicle controlling apparatus **1202.**

The following description will be then directed to the case that the in-vehicle apparatus **1210** is constituted by an unlocking apparatus for unlocking doors of the automotive vehicle. Here, the unlocking apparatus may be adapted to unlock a bonnet, a trunk, a console box, and a glove box of the automotive vehicle. In this embodiment, the in-vehicle controlling apparatus **1202** of the in-vehicle apparatus controlling system **1200** includes reading means for receive the user identification information from the IC card. However, the user identification information may be received by the reading means **1205** of the cellular phone **1203** when the reading means (not shown) of the in-vehicle controlling apparatus **1202** is in an accidental state to fail to receive the user identification information from the IC card.

The storing means **1204** is constituted by a nonvolatile memory media having user identification information previously stored therein. This user identification information is indicative of one registered user having permission to utilize the automotive vehicle. Here, this user identification information is indicative of two or more registered users each having permission to utilize the automotive vehicle.

The reading means **1205** is adapted to receive the user identification information from the IC card. Here, the IC card has a non-contact type IC device. This IC card may be constituted by an electronic driving license.

The identifying means **1206** is adapted to perform the verification of the user identification information received from the IC card with respect to the user identification information stored by the storing means **1204.** When the judgment is made that the user identification information received from the IC card is substantially the same as the user identification information stored by the storing means **1204,** the identifying means **1206** is adapted to judge whether or not the person is identical to the registered user, or one of the registered users.

The cellular phone **1203** has, as an identifier, its own telephone number. The transmitting means **1207** is adapted to transmit the information about the telephone number and the judgment made by the identifying means **1206.** When the judgment is made that the person is identified as an unregistered user, the transmitting means **1207** is adapted to transmit the user identification information of the person identified as the unregistered user.

The in-vehicle controlling apparatus **1202** includes receiving means **1208** for receiving the information from the transmitting means **1207** of the cellular phone **1203,** and controlling means **1209** for controlling the in-vehicle apparatus **1210** on the basis of the judgment made by the identifying means **1206.**

The receiving means **1208** has at least one telephone number of the registered telephone. When the judgment is made that the telephone number received from the cellular phone **1203** is the same as previously registered telephone number, the receiving means **1208** is adapted to receive the information from the cellular phone **1203.**

The controlling means **1209** is adapted to allow the number of occurrences to be incremented by one on the basis the judgment made by the identifying means **1206** of the cellular phone **1203.** More specifically, the controlling means **1209** is adapted to allow the number of occurrences to be incremented by one when the judgment is made by the identifying means **1206** that the person is not identical to the registered user on the basis of the identification of the user identification information received by the reading means **1205.** When the judgment is made that the number of occurrences is larger than, or equal to a predetermined threshold level, the controlling means **1209** is adapted to have the unlocking apparatus assume a rejection state to prevent the automotive vehicle from being utilized by the person identified as an unregistered user. When the judgment is made that the person is identical to the registered user without the number of occurrences being larger than, or equal to a predetermined threshold level, the controlling means **1209** is adapted to have the unlocking apparatus assume a permission state to allow the automotive vehicle to utilized by the person identified as the registered user. When the judgment is made that the person is identical to an unregistered user, the controlling means **1209** is adapted to have the unlocking apparatus assume a rejection state to prevent the automotive vehicle from being utilized by the person identified as an unregistered user.

The in-vehicle controlling apparatus **1202** further includes outputting means **1211** for outputting, as an error message, the information about the fact that the unlocking apparatus is in the rejection state to prevent the automotive vehicle from being utilized by the person identified as the unregistered user, and storing means **1212** for storing, as an unidentified person information, the obtained user identification information of the person identified as the unregistered user.

The outputting means **1211** is adapted to output, as an error message, a beep sound when the in-vehicle controlling apparatus **1202** assumes the rejection state.

When the judgment is made that the person is identical to the unregistered user on the basis of the obtained user identification information, the controlling means **1209** is adapted to allow the number of occurrences to be incremented by one when the judgment is made by the identifying means **1206** that the person is not identical to the registered user.

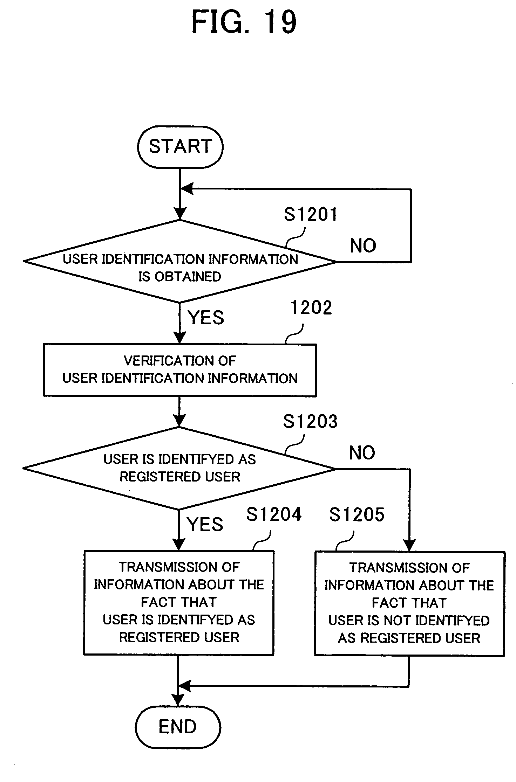

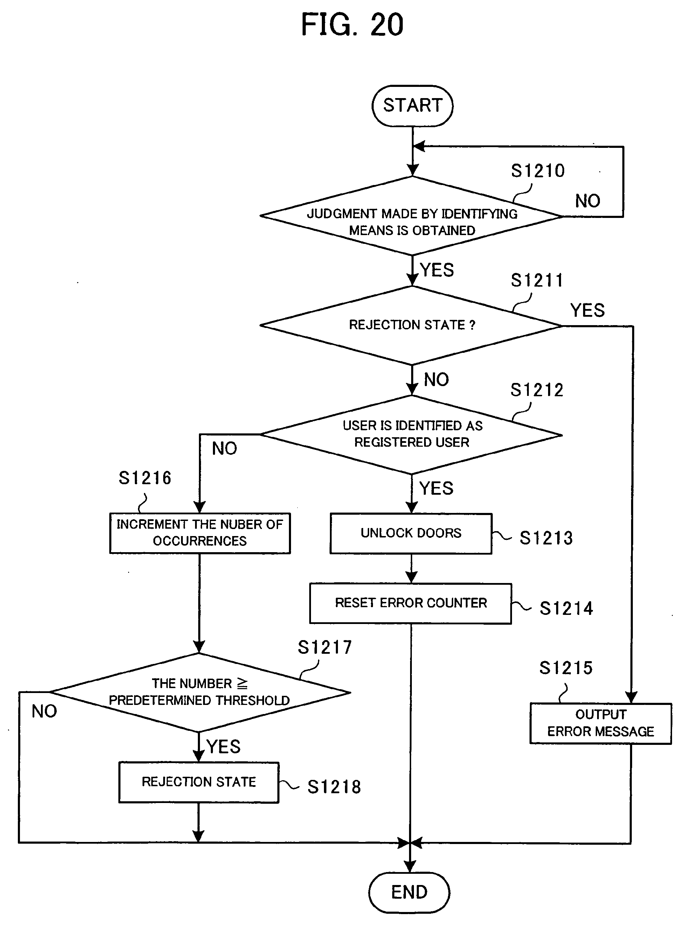

The operation of the twelfth embodiment of the in-vehicle apparatus controlling system **1200** according to the present invention will be described hereinafter with reference to FIGS. **19** and **20.**

As shown in FIG. **19,** the judgment is firstly made (in the step **S1201**) on whether or not the user identification information is received by the reading means **1205** from the IC card being carried by the person demanding permission to utilize the in-vehicle apparatus **1210.** When the judgment is made that the user identification information is received by the reading means **1205** from the IC card, the received user identification information is outputted to the identifying means **1206.** Here, the reading means **1205** is in a waiting state until the user identification information is received by the reading means **1205** from the IC card. The verification of the user identification information received by the reading means **1205** with respect to the user identification information stored by the storing means **1204** is then performed by the identifying means **1206** (in the step **S1202**)**.** The judgment is then made (in the step **S1203**) on whether or not the person is identical to the registered user. When the judgment is made that the person is identified as the registered user, the information about the fact that the person is identified as the registered user is transmitted to the in-vehicle controlling apparatus **1202** by the transmitting means **1207** (in the step **S1204**)**.** When, on the other hand, the judgment is made that the person is identified as the unregistered user, the information about the fact that the person is identified as the unregistered user is transmitted to the in-vehicle controlling apparatus **1202** by the transmitting means **1207** (in the step **S1205).**

As shown in FIG. **20,** the judgment is then made (in the step **S1210)** on whether or not the judgment made by the identifying means **1206** is received by the receiving means **1208.** Here, the receiving means **1208** is in a waiting state until the judgment made by the identifying means **1206** is received by the receiving means **1208.** When the judgment made by the identifying means **1206** is received by the receiving means **1208,** the judgment is made by the controlling means **1209** (in the step **S1211)** on whether or not the person is identified as the registered user. When the judgment is made that the person is identified as the unregistered user, the error message is outputted by the outputting means **1211** (in the step **S1215).** When, on the other hand, the judgment is made that the person is identified as the registered user, the controlling means **1209** allows the unlocking apparatus provided as the automotive vehicle **1210** in the automotive vehicle to unlock the doors of the automotive vehicle (in the step **S1213).** The information about the error times stored by the storing means **1212** is reset by the controlling means **1209.**

In this embodiment, the in-vehicle apparatus **1210** is constituted by an unlocking apparatus. Here, the in-vehicle apparatus **1210** may be replaced by an engine starting apparatus, an in-vehicle telephone apparatus, an in-vehicle audio apparatus, an automotive instrument panel, an emergency call apparatus, or a vehicle-to-roadside communication apparatus.

The engine starting apparatus is provided in the automotive vehicle, and adapted to start an engine mounted on the automotive vehicle. The controlling means **1209** is adapted to control the engine starting apparatus on the basis of the judgment made by the identifying means **1206.** More specifically, the controlling means **1209** is adapted to allow the engine starting apparatus to start the engine when the judgment is made that the person is identical to the registered user.

The in-vehicle telephone apparatus is provided in the automotive vehicle. The controlling means **1209** may be adapted to control the in-vehicle telephone apparatus on the basis of the judgment made by the identifying means **1206,** and received by the receiving means **1208.** More specifically, the controlling means **1209** is adapted to allow the in-vehicle telephone apparatus to be utilized by the person when the judgment is made that the person is identical to the registered user.

The controlling means **1209** may be adapted to control the in-vehicle audio apparatus on the basis of the judgment made by the identifying means **1206,** and received by the receiving means **1208.** More specifically, the controlling means **1209** is adapted to allow the in-vehicle audio apparatus to be utilized by the person when the judgment is made that the person is identical to the registered user.

The controlling means **1209** is adapted to control the automotive instrument panel on the basis of the judgment made by the identifying means **1206,** and received by the receiving means **1208.** More specifically, the controlling means **1209** is adapted to allow the automotive instrument panel to be utilized by the person when the judgment is made that the person is identical to the registered user.

The emergency call apparatus is adapted to call in the emergency medical center when, for example, the user suddenly gets out of shape in the automotive vehicle, or the user is involved in an automotive vehicle accident. The controlling means **1209** may be adapted to control the emergency call apparatus on the basis of the judgment made by the identifying means **1206,** and received by the receiving means **1208.** More specifically, the controlling means **1209** is adapted to allow the emergency call apparatus to be utilized by the person when the judgment is made that the person is identical to the registered user.

The vehicle-to-roadside communication apparatus is constituted as an in-vehicle apparatus such as for example an ETC in-vehicle apparatus forming part of an electronic toll collection system The controlling means **1209** is adapted to control the vehicle-to-roadside communication apparatus on the basis of the judgment made by the identifying means **1206,** and received by the receiving means **1208.** More specifically, the controlling means **1209** is adapted to allow the vehicle-to-roadside communication apparatus to be utilized by the person when the judgment is made that the person is identical to the registered user.

The above mentioned storing means **1204** may be adapted to store the user identification information received by the reading means **1205** from the IC card.

From the above detailed description, it will be understood that the in-vehicle apparatus controlling system **1200** according to the twelfth embodiment of the present invention can control the in-vehicle apparatus **1210** on the basis of the judgment made by the identifying means **1206** of the cellular phone **1203** by reason that the reading means **1205** of the cellular phone **1203** is adapted to receive the user identification information from the IC card when the reading means (not shown) of the in-vehicle controlling apparatus **1202** is in an accidental state to fail to receive the user identification information from the IC card, the identifying means **1206** of the cellular phone **1203** is adapted to judge whether or not the person is identical to the registered user.

The in-vehicle apparatus controlling system **1200** according to the twelfth embodiment of the present invention can control the in-vehicle apparatus **1210** on the basis of the judgment made by the identifying means **1206** of the cellular phone **1203** by reason that the information stored in the IC card is previously stored in the cellular phone **1203** even if the IC card fails to be carried on a daily basis by the person demanding permission to utilize the in-vehicle apparatus **1210.**

### [Thirteenth embodiment]

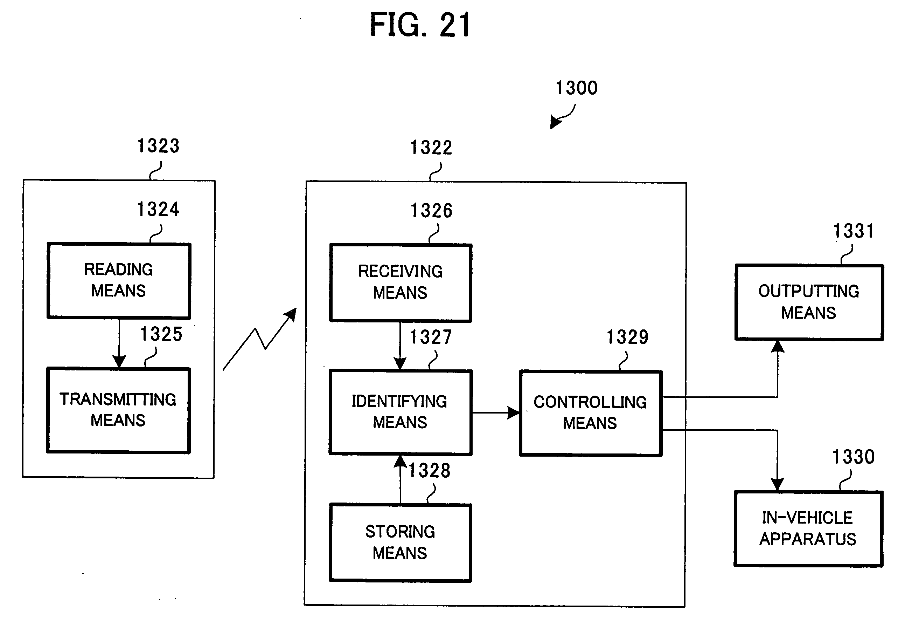

The constitution of the in-vehicle controlling apparatus and the in-vehicle apparatus controlling system according to the thirteenth embodiment of the present invention will be described hereinafter with reference to FIG. **21.**

The in-vehicle apparatus controlling system **1300** is shown in FIG. **21** as comprising an in-vehicle controlling apparatus **1322** for controlling the in-vehicle apparatus **1330,** and a cellular phone **1323** for performing, as a mobile communication apparatus, communication with the in-vehicle controlling apparatus **1322.**

The cellular phone **1323** includes reading means **1324** for receiving identification information from an integrated circuit card (IC card), the user identification information being indicative of a person demanding permission to utilize the in-vehicle apparatus **1330,** and transmitting means **1325** for transmitting the user identification information received by the reading means **1324** to the in-vehicle controlling apparatus **1322.**

In this embodiment, the in-vehicle controlling apparatus **1322** includes reading means (not shown) for receiving the user identification information from the IC card. When the judgment is made that the reading means of the in-vehicle controlling apparatus **1322** in an accidental state to fail to receive the user identification information from the IC card, the in-vehicle controlling apparatus **1322** is adapted to start the reading means **1324** of the cellular phone **1323.** Accordingly, the user identification information is received by either the reading means of the in-vehicle controlling apparatus **1322** or the reading means **1324** of the cellular phone **1323.**

The reading means **1324** is adapted to receive the unidentified user identification information from the IC card. Here, the IC card has a non-contact type integrated circuit. The IC card may constitute an electronic driving license.

The cellular phone **1323** has, as an identification code, a telephone number. The transmitting means **1325** is adapted to transmit the user identification information with the telephone number of the cellular phone **1323** to the in-vehicle controlling apparatus **1322.**

The in-vehicle controlling apparatus **1322** includes storing means **1328** for storing registered user identification information indicative of a registered user having permission to utilize the in-vehicle apparatus **1330,** receiving means **1326** for receiving the user identification information from the transmitting means **1325** of the cellular phone **1323,** identifying means **1327** for judging whether or not the person is identical to the registered user having permission to utilize the automotive vehicle on the basis of the received user identification information and the registered user identification information, and controlling means **1329** for controlling the in-vehicle apparatus **1330** on the basis of the judgment made by the identifying means **1327.**

The following description will be directed to the case that the in-vehicle apparatus **1330** is constituted by an unlocking apparatus for unlocking doors of the automotive vehicle. Here, the unlocking apparatus may be adapted to unlock a bonnet, a trunk, a console box, and a glove box of the automotive vehicle.

The storing means **1328** is constituted by a nonvolatile memory media having user identification information stored therein, the user identification information being indicative of at least one registered user having permission to utilize the automotive vehicle. Here, the user identification information stored in the storing means **1328** may be indicative of two or more users each having permission to utilize the automotive vehicle.

The receiving means **1326** has registered telephone number information indicative of at least one registered telephone number. When the judgment is made that the telephone number received with the user identification information from the cellular phone **1323** is the same as the registered telephone number, the receiving means **1326** is adapted to receive the user identification information from the cellular phone **1323.**

The identifying means **1327** is adapted to judge whether or not the person is identical to the registered user on the basis of the user identification information received by the receiving means **1326** and the user identification information stored by the storing means **1328.** When the judgment is made that the user identification information received by the receiving means **1326** is the same as the user identification information stored by the storing means **1328,** the identifying means **1206** is adapted to identify the person as the registered user, or one of the registered users.

The controlling means **1329** is adapted to allow the number of occurrences to be incremented by one in the event that the judgment is made by the identifying means **1327** that the person is not identical to the registered user. When the judgment is made that the number of occurrences is larger than, or equal to a predetermined threshold level, the controlling means **1329** is adapted to have the unlocking apparatus assume a rejection state to prevent the automotive vehicle from being utilized by the person identified as an unregistered user. When the judgment is made that the person is identical to the registered user without the number of occurrences being larger than, or equal to a predetermined threshold level, the controlling means **1329** is adapted to have the unlocking apparatus assume a permission state to allow the automotive vehicle to utilized by the person identified as the registered user. When the judgment is made that the person is identical to an unregistered user, the controlling means **1329** is adapted to have the unlocking apparatus assume a rejection state to prevent the automotive vehicle from being utilized by the person identified as an unregistered user.

The in-vehicle controlling apparatus **1322** further includes outputting means **1331** for outputting, as an error message, the information about the fact that the unlocking apparatus is in the rejection state to prevent the automotive vehicle from being utilized by the person identified as an unregistered user.

The outputting means **1331** is adapted to output, as an error message, a beep sound when the in-vehicle controlling apparatus **1322** assumes the rejection state.

When the judgment is made that the person is identical to the unregistered user, the storing means **1328** is adapted to store, as an unidentified person information, the user identification information indicative of the person identified as the unregistered user. The controlling means **1329** is adapted to allow the number of occurrences to be incremented by one when the judgment is made by the identifying means **1327** that the person is identical to the unregistered user.

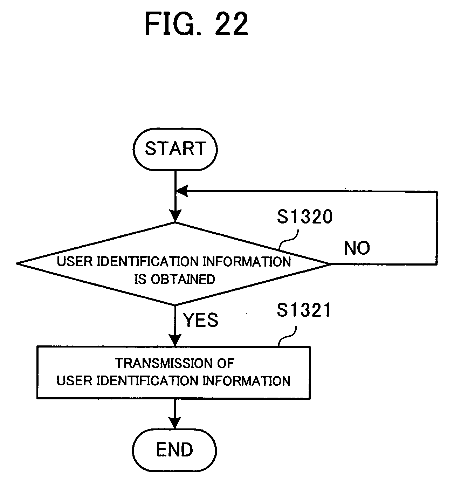

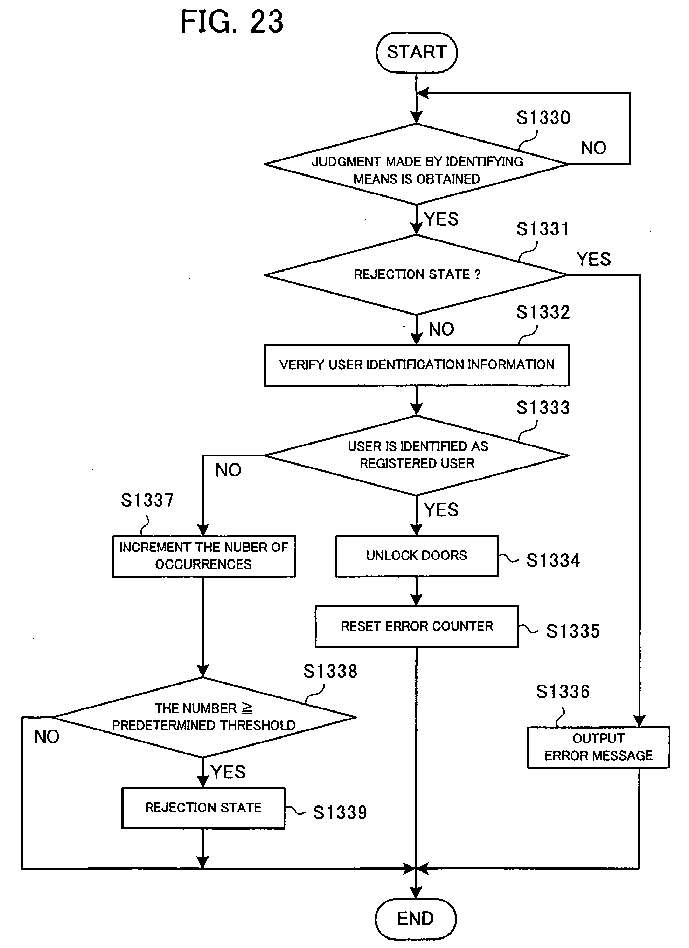

The operation of the thirteenth embodiment of the in-vehicle apparatus controlling system **1300** according to the present invention will be described hereinafter with reference to FIGS. **22** and **23.**

As shown in FIG. **22,** the judgment is firstly made (in the step **S1320)** on whether or not the user identification information is received by the reading means **1324** from the IC card being carried by the person demanding permission to utilize the in-vehicle apparatus **1330.** When the judgment is made that the user identification information is received by the reading means **1324** from the IC card, the received user identification information is outputted to the transmitting means **1325.** Here, the reading means **1324** is in a waiting state until the user identification information is received by the reading means **1324** from the IC card.

As shown in FIG. **23,** the judgment is made (in the step **S1330)** on whether or not the receiving means **1326** is in a waiting state to wait for the user identification information transmitted by the transmitting means **1325.** When the user identification information is received from the transmitting means **1325** by the receiving means **1326,** the judgment is made (in the step **S1331)** by the controlling means **1329** on whether or not the in-vehicle apparatus **1330** is in a rejection state. When the judgment is made that the receiving means **1326** is in the rejection state, the information about the fact that the in-vehicle apparatus **1330** is in the rejection state is outputted as the error message by the outputting means **1331** (in the step **S1336).** When, on the other hand, the judgment is made that the receiving means **1326** is not in the rejection state, the verification of the user identification information received by the receiving means **1326** is performed by the identifying means **1327** on the basis of the user identification information stored by the storing means **1328** (in the step **S1332).** The judgment is then made by the controlling means **1329** (in the step **S1333)** on whether or not the person is identical to the registered user on the basis of the verification of the user identification information received by the receiving means **1326.** When the judgment is made that the person is identical to the registered user, the unlocking apparatus constituted as the in-vehicle apparatus **1330** unlocks the doors of the automotive vehicle (in the step **S1334).** The number of occurrences stored by the storing means **1328** is then reset by the controlling means **1329** (in the step **S1335**)**.** When, on the other hand, the judgment is made that the person is identical to the registered user, the number of occurrences stored by the storing means **1328** is incremented by the controlling means **1329** (in the step **S1337).** The judgment is then made by the controlling means **1329** (in the step **S1338)** on whether or not the number of occurrences stored by the storing means **1328** is smaller than the predetermined threshold level. When the judgment is made that the number of occurrences is larger than, or equal to the predetermined threshold level, the controlling means **1329** has the unlocking apparatus assume the rejection state. When, on the other hand, the judgment is made that the number of occurrences stored by the storing means **1328** smaller than the predetermined threshold level, the in-vehicle apparatus controlling system **1300** completes the operation.

In this embodiment, the in-vehicle apparatus **1330** is constituted by an unlocking apparatus. Here, the in-vehicle apparatus **1330** may be replaced by an engine starting apparatus, an in-vehicle telephone apparatus, an in-vehicle audio apparatus, an automotive instrument panel, an emergency call apparatus, or a vehicle-to-roadside communication apparatus.

The engine starting apparatus is provided in the automotive vehicle, and adapted to start an engine mounted on the automotive vehicle. The controlling means **1329** is adapted to control the engine starting apparatus on the basis of the judgment made by the identifying means **1327.** More specifically, the controlling means **1329** is adapted to allow the engine starting apparatus to start the engine when the judgment is made that the person is identical to the registered user.

The in-vehicle telephone apparatus is provided in the automotive vehicle. The controlling means **1329** may be adapted to control the in-vehicle telephone apparatus on the basis of the judgment made by the identifying means **1327.** More specifically, the controlling means **1329** is adapted to allow the in-vehicle telephone apparatus to be utilized by the person when the judgment is made that the person is identical to the registered user.

The controlling means **1329** may be adapted to control the in-vehicle audio apparatus on the basis of the judgment made by the identifying means **1327.** More specifically, the controlling means **1329** is adapted to allow the in-vehicle audio apparatus to be utilized by the person when the judgment is made that the person is identical to the registered user.

The controlling means **1329** is adapted to control the automotive instrument panel on the basis of the judgment made by the identifying means **1327.** More specifically, the controlling means **1329** is adapted to allow the automotive instrument panel to be utilized by the person when the judgment is made that the person is identical to the registered user.

The emergency call apparatus is adapted to call in the emergency medical center when, for example, the user suddenly gets out of shape in the automotive vehicle, or the user is involved in an automotive vehicle accident. The controlling means **1329** may be adapted to control the emergency call apparatus on the basis of the judgment made by the identifying means **1327.** More specifically, the controlling means **1329** is adapted to allow the emergency call apparatus to be utilized by the person when the judgment is made that the person is identical to the registered user.

The vehicle-to-roadside communication apparatus is constituted as an in-vehicle apparatus such as for example an ETC in-vehicle apparatus forming part of an electronic toll collection system The controlling means **1329** is adapted to control the vehicle-to-roadside communication apparatus on the basis of the judgment made by the identifying means **1327.** More specifically, the controlling means **1329** is adapted to allow the vehicle-to-roadside communication apparatus to be utilized by the person when the judgment is made that the person is identical to the registered user.

From the above detailed description, it will be understood that the in-vehicle apparatus controlling system **1300** according to the thirteenth embodiment of the present invention can control the in-vehicle apparatus **1330** on the basis of the judgment made by the identifying means **1327** by reason that the identifying means **1327** is adapted to judge whether or not the person is identical to the registered user on the basis of the user identification information received from the IC card by the reading means of the cellular phone **1323** when the reading means of the in-vehicle controlling apparatus **1322** is in an accidental state to fail to receive the user identification information from the IC card.

Here, the cellular phone **1323** may have the user identification information stored therein. In this case, the in-vehicle apparatus controlling system **1300** according to the thirteenth embodiment of the present invention can control the in-vehicle apparatus **1330** on the basis of the user identification information received from the cellular phone **1323** even if the IC card is not carried on a daily basis.

### [Fourteenth Embodiment]

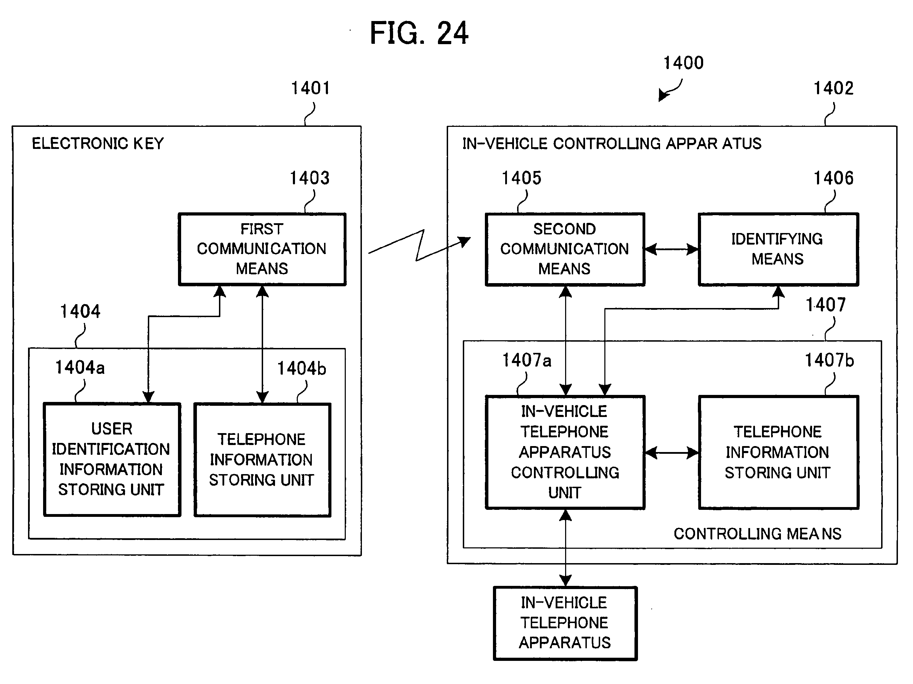

The constitution of the in-vehicle controlling apparatus and the in-vehicle apparatus controlling system according to the fourteenth embodiment of the present invention will be described hereinafter with reference to FIG. **24.**

The in-vehicle apparatus controlling system **1400** is shown in FIG. **24** as comprising an electronic key **1401,** and an in-vehicle controlling apparatus **1402** electrically connected to an in-vehicle telephone apparatus, and adapted to control the in-vehicle telephone apparatus.

The electronic key **1401** includes first communication means **1403** for performing communication with the in-vehicle controlling apparatus **1402,** and personal information storing means **1404** for storing user identification information indicative of a person demanding permission to utilize the in-vehicle telephone apparatus, and telephone information according to the in-vehicle telephone apparatus. On the other hand, the in-vehicle controlling apparatus **1402** includes second communication means **1405** for performing communication with the electronic key **1401,** identifying means **1406** for judging whether or not the person is identical to a registered user having permission to utilize the in-vehicle telephone apparatus, and controlling means **1407** for controlling the in-vehicle telephone apparatus on the basis of the judgment made by the identifying means **1406.** When the person is identified as the registered user, the controlling means **1407** is adapted to allow the in-vehicle telephone apparatus to be utilized by the person identified as the registered user on the basis of the telephone information.

Here, the user identification information, such as for example an identification code, indicative of the registered user having permission to utilize the automotive vehicle is previously stored in a memory unit of the identifying means **1406.** The telephone information includes a telephone number list, a record of incoming calls, and a record of outgoing calls.

Each of the first and second communication means **1403** and **1405** has a transmitting and receiving circuit and an antenna. The first and second communication means **1403** and **1405** are adapted to perform interactive communication with each other through an infrared light or a radio wave. The identifying means **1406** is constituted by electronic units such as for example a central processing unit (CPU) and a semiconductor memory unit. The identifying means **1406** is adapted to judge whether or not the person is identical to the registered user on the basis of the verification of the user identification information received from the electronic key **1401** with respect to the user identification information stored in the semiconductor memory unit.

The personal information storing means **1404** includes a user identification information storing unit **1404a** having user identification information such as for example an identification code stored therein, the user identification information being indicative of the person demanding permission to utilize the in-vehicle telephone apparatus, and a telephone information storing unit **1404b** having the telephone information stored therein. The personal information storing means **1404** is constituted by electronic units such as for example a central processing unit (CPU) and a semiconductor memory unit. The personal information storing means **1404** is adapted to transmit both the user identification information and the telephone information to the in-vehicle controlling apparatus **1402** through the first communication means **1403.** The telephone information storing unit **1404b** is constituted by an electronic unit such as for example a semiconductor memory unit.

The controlling means **1407** includes an in-vehicle telephone apparatus controlling unit **1407a** for controlling an in-vehicle telephone apparatus on the basis of the telephone information, and a telephone information storing unit **1407b** having the telephone information stored therein. The controlling means **1407** is constituted by electronic units such as for example a central processing unit (CPU), a semiconductor memory unit, and an information inputting and outputting unit. The controlling means **1407** is adapted to transmit the telephone information to the electronic key **1401.** The electronic key **1401** and the in-vehicle controlling apparatus **1402** are adapted to cooperatively control the in-vehicle telephone apparatus by reason that one of the electronic key **1401** and the in-vehicle controlling apparatus **1402** is adapted to transmit the telephone information to the other of the electronic key **1401** and the in-vehicle controlling apparatus **1402.**

The telephone information storing unit **1407b** is constituted by an electronic unit such as for example a semiconductor memory unit. Here, the telephone information stored in the telephone information storing unit **1407b** can be updated through the information inputting and outputting unit (not shown) of the controlling means **1407** by the person identified as the registered user.

The in-vehicle apparatus controlling system **1400** according to the fourteenth embodiment of the present invention is adapted to lock or to unlock the doors of the automotive vehicle, and to start or to stop the engine of the automotive vehicle. The in-vehicle apparatus controlling system **1400** according to the fourteenth embodiment of the present invention, however, may be adapted to control digital consumer electronics such as for example a telephone set, a television set, and a stereo set by performing wireless communication with the digital consumer electronics.

In this embodiment, the electronic key **1401** is utilized for the automotive vehicle. However the electronic key may be available for, for example, a dwelling house and a household-use safe. The personal information storing means **1404** may further include a driving license information storing unit having driving license information stored therein, the driving license information being indicative of driving license of the registered user having permission to utilize the automotive vehicle. The electronic key **1401** may be constituted as non-contact type driving license card.

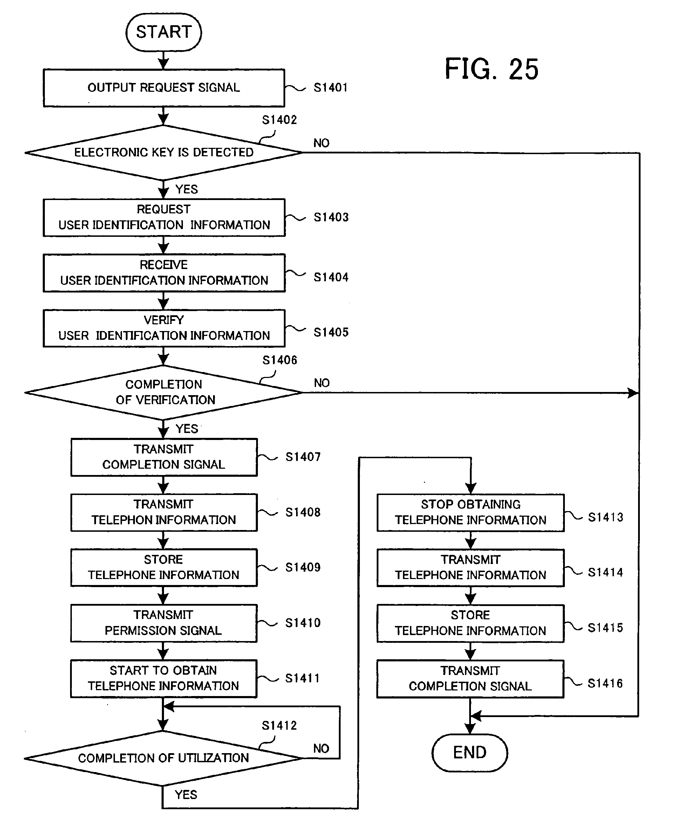

The operation of the fourteenth embodiment of the in-vehicle apparatus controlling system **1400** according to the present invention will be described hereinafter with reference to FIG. **25.**

As shown in FIG. **25,** the request signal indicative of request for permission to utilize the in-vehicle telephone apparatus is firstly transmitted to the in-vehicle telephone apparatus controlling unit 1407a of the controlling means 1407 (in the step S1401). When, for example, the in-vehicle telephone apparatus is picked up by the person demanding permission to utilize the in-vehicle telephone apparatus, the request signal is transmitted to the in-vehicle telephone apparatus controlling unit 1407a of the controlling means 1407. The term "request signal" herein described is intended to indicate an instruction to both the electronic key 1401 and the controlling means 1407 to cooperatively have the identifying means 1406 start to judge whether or not to allow the person to utilize the in-vehicle telephone apparatus.

The judgment is then made by the controlling means 1407 on whether or not the electronic key **1401** is within communication range (in the step **S1402**). For example, the in-vehicle controlling apparatus **1402** is firstly operated to transmit a predetermined signal. On the other hand, the reply signal is produced and transmitted to the in-vehicle controlling apparatus 1402 by the electronic key 1401 in response to the predetermined signal. When the reply signal is received from the electronic key 1401, the judgment is made that the electronic key 1401 is within communication range. When the judgment is made that the electronic key 1401 is within communication range in the step S1402, the in-vehicle controlling apparatus 1402 requires the electronic key 1401 to output the user identification information. When, on the other hand, the judgment is made that the electronic key 1401 is not within communication range in the step S1402, the in-vehicle controlling apparatus 1402 completes the operation without controlling the in-vehicle telephone apparatus with the electronic key 1401.

The user identification information stored in the user identification information storing unit **1404a** of the personal information storing means **1404** of the electronic key **1401** is then transmitted to the in-vehicle controlling apparatus **1402** through the first communication means **1403.** The user identification information is then received from the electronic key **1401** by the identifying means **1406** of the in-vehicle controlling apparatus **1402** through the second communication means **1405** (in the step **S1404**). The verification of the user identification information received from the electronic key **1401** is then performed on the basis of the user identification information stored in the memory unit of the identifying means 1406 (in the step S1405). The judgment is then made by the controlling means 1407 on whether or not the verification and identification of the user identification information received from the electronic key **1401** is normally established by the identifying means **1406** (in the step **S1406**).

When the judgment is made that the verification and identification of the user identification information received from the electronic key 1401 is normally established by the identifying means 1406, in other words, the person is successfully identified as the registered user having permission to utilize the automotive vehicle by the identifying means 1406 in the step S1406, the successful completion signal indicative of the information about the fact that the person is successfully identified as the registered user having permission to utilize the in-vehicle telephone apparatus is transmitted to the electronic key **1401** by the identifying means **1406** (in the step **S1407**). The permission signal indicative of the information about the fact that the person is allowed to utilize the in-vehicle telephone apparatus is transmitted to the in-vehicle telephone apparatus controlling unit 1407a by the identifying means 1406. More specifically, the successful completion signal is transmitted to the electronic key 1401 by the identifying means 1406 when the judgment is made that the user identification information obtained from the electronic key 1401 is the same as the user identification information stored in the memory unit of the identifying means 1406. When, on the other hand, the judgment is made that the verification and identification of the user identification information received from the electronic key 1401 is not normally established by the identifying means 1406, the in-vehicle controlling apparatus 1402 completes the operation without controlling the in-vehicle telephone apparatus with the electronic key 1401.

The telephone information stored in the telephone information storing unit 1404b of the personal information storing means 1404 is then transmitted to the in-vehicle controlling apparatus 1402 by the first communication means 1403 in response to the successful completion signal received from the in-vehicle controlling apparatus 1402, while the telephone information is received by the second communication means **1405** from the electronic key **1401** (in the step **S1408**). The telephone information is then stored in the telephone information storing unit **1407b** of the controlling means **1407** (in the step **S1409**). The in-vehicle telephone apparatus assumes an active state to be utilized by the person identified as the registered user in response to the permission signal received from the in-vehicle controlling apparatus **1402** (in the step **S1410**). The in-vehicle telephone apparatus can allow the telephone information stored in the telephone information storing unit 1407b to be utilized by the person identified as the registered user. When, for example, one of telephone numbers forming part of the telephone information stored in the telephone information storing unit 1407b is selected by the person identified as the registered user, the in-vehicle telephone apparatus dials the selected telephone number.

The controlling means **1407** then starts to obtain new telephone information (in the step **S1411**). When, for example, the in-vehicle telephone apparatus dials new telephone number unregistered as the telephone information, the controlling means **1407** obtains new telephone number as the new telephone information from the in-vehicle telephone apparatus. The obtained telephone number is then stored in the telephone information storing unit **1407b.**

The judgment is then made (in the step **S1402)** on whether or not the in-vehicle telephone apparatus is being utilized by the person identified as the registered user. When, for example, the engine of the automotive vehicle is stopped by the person identified as the registered user, the in-vehicle telephone apparatus may assume an inactive state to prevent from being utilized by the person identified as the registered user. The controlling means **1407** stops obtaining new telephone information from the in-vehicle telephone apparatus.

The telephone information is then received from the telephone information storing unit **1407b** by the controlling means **1407**. The received telephone information is transmitted through the second communication **1405**, and then received by the first communication means **1403** of the electronic key **1401** (in the step **S1414**). In the step **S1414,** only the new telephone information may be transmitted to the first communication means **1403** of the electronic key **1401.** The telephone information received by the first communication means **1403** is then stored in the telephone information storing unit **1404b** of the personal information storing means **1404** (in the step **S1415).** When the telephone information is stored in the telephone information storing unit **1404b** of the personal information storing means **1404,** the completion signal is produced and outputted by the personal information storing means **1404** to the controlling means **1407** through the first and second communication means **1403** and **1405** (in the step **S1416).** Finally, the electronic key **1401** and the in-vehicle controlling apparatus **1402** compete the cooperative controlling of the in-vehicle telephone apparatus.

Here, the usage-based record with respect to the in-vehicle telephone may be stored in the telephone information storing unit **1407b.** This leads to the fact that the judgment can be easily made on whether or not the in-vehicle apparatus controlling system **1400** is fraudulently utilized by the person identified as the unregistered user on the basis of the usage-based record with respect to the in-vehicle telephone.

From the above detailed description, it will be understood that the in-vehicle apparatus controlling system **1400** according to the fourteenth embodiment of the present invention can allow the person to update his or her own telephone information protected by the user identification information, and efficiently allow the person to utilize the in-vehicle telephone on the basis of the updated telephone information by reason that the electronic key **1401** and the in-vehicle controlling apparatus **1402** are adapted to cooperatively control the in-vehicle telephone, and the in-vehicle controlling apparatus **1402** is adapted to perform the interactive communication with the electronic key **1401** to receive the telephone information from the electronic key **1401.**

### [Fifteenth Embodiment]

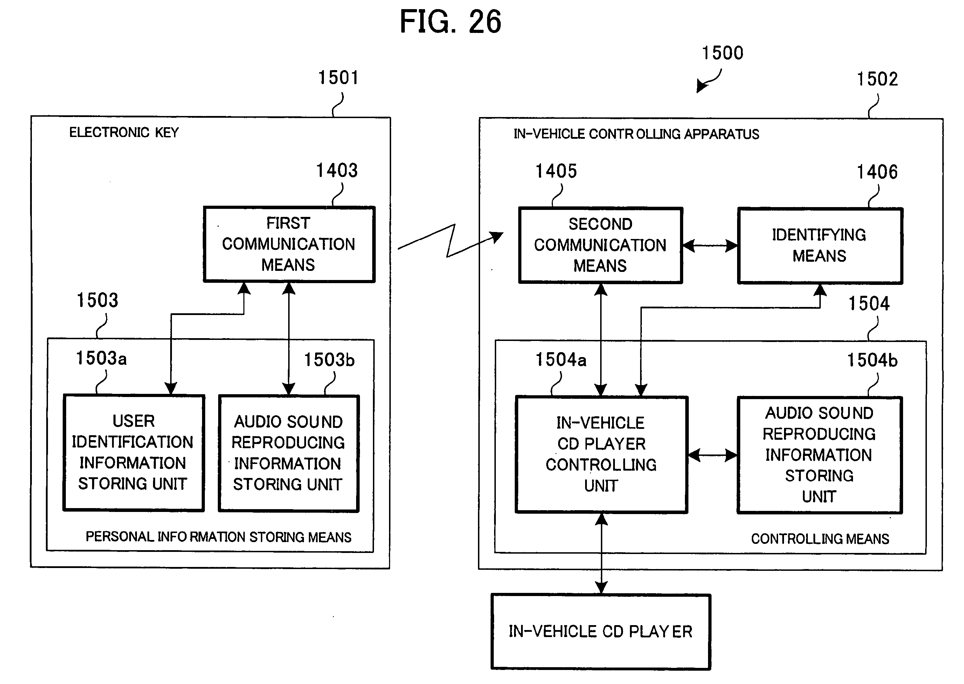

The constitution of the in-vehicle controlling apparatus and the in-vehicle apparatus controlling system according to the fifteenth embodiment of the present invention will be described hereinafter with reference to FIG. **26.**

The constitutional elements of the fifteenth embodiment of the in-vehicle apparatus controlling system **1500** substantially the same as those of the fourteenth embodiment of the in-vehicle apparatus controlling system **1400** will not be described but bear the same reference numerals as those of the fourteenth embodiment of the in-vehicle apparatus controlling system **1400.**

As shown in FIG. **26,** the constitution of the in-vehicle apparatus controlling system **1500** according to the fifteenth embodiment is the same as that of the in-vehicle apparatus controlling system **1400** according to the fourteenth embodiment with the exception of the fact that the personal information storing means **1404** and the controlling means **1407** are respectively replaced by personal information storing means **1503** and controlling means **1504** electrically connected to an in-vehicle compact disc player (in-vehicle CD player).

The personal information storing means **1503** includes a user identification information storing unit **1503a** having user identification information such as for example an identification code stored therein, the user identification information being indicative of the person demanding permission to utilize the in-vehicle CD player, and an audio sound reproducing operation information storing unit **1503b** having audio sound reproducing operation information stored therein, the audio sound reproducing operation information being required for the in-vehicle CD player to reproduce an audio sound from the audio data stored in a CD. The personal information storing means **1503** is constituted by electronic units such as for example a central processing unit (CPU) and a semiconductor memory unit. The personal information storing means **1503** is adapted to transmit both the user identification information and the audio sound reproducing operation information to the in-vehicle controlling apparatus 1502 through the first communication means **1403.** The audio sound reproducing operation information storing unit **1503b** is constituted by an electronic unit such as for example a semiconductor memory unit.

Here, the audio sound reproducing operation information includes, for example, setting information about order of the reproduction of the audio data stored in the CD, level of the reproduced audio sound, and surround-sound effect to be specified as soundscape.

The controlling means **1504** includes an in-vehicle CD player controlling unit **1504a** for controlling an in-vehicle CD player on the basis of the audio sound reproducing operation information, and an audio sound reproducing operation information storing unit **1504b** having the audio sound reproducing operation information stored therein. The controlling means **1504** is constituted by electronic units such as for example a central processing unit (CPU), a semiconductor memory unit, and an information inputting and outputting unit. The controlling means **1504** is adapted to transmit the audio sound reproducing operation information to the electronic key **1501.** The electronic key **1501** and the in-vehicle controlling apparatus **1502** are adapted to cooperatively control the in-vehicle CD player by reason that one of the electronic key **1501** and the in-vehicle controlling apparatus **1502** is adapted to transmit the audio sound reproducing operation information to the other of the electronic key **1501** and the in-vehicle controlling apparatus **1502.**

The audio sound reproducing operation information storing unit **1407b** is constituted by an electronic unit such as for example a semiconductor memory unit. The audio sound reproducing operation information stored in the audio sound reproducing operation information storing unit **1407b** can be updated through the information inputting and outputting unit (not shown) of the controlling means **1504** by the person identified as the registered user.

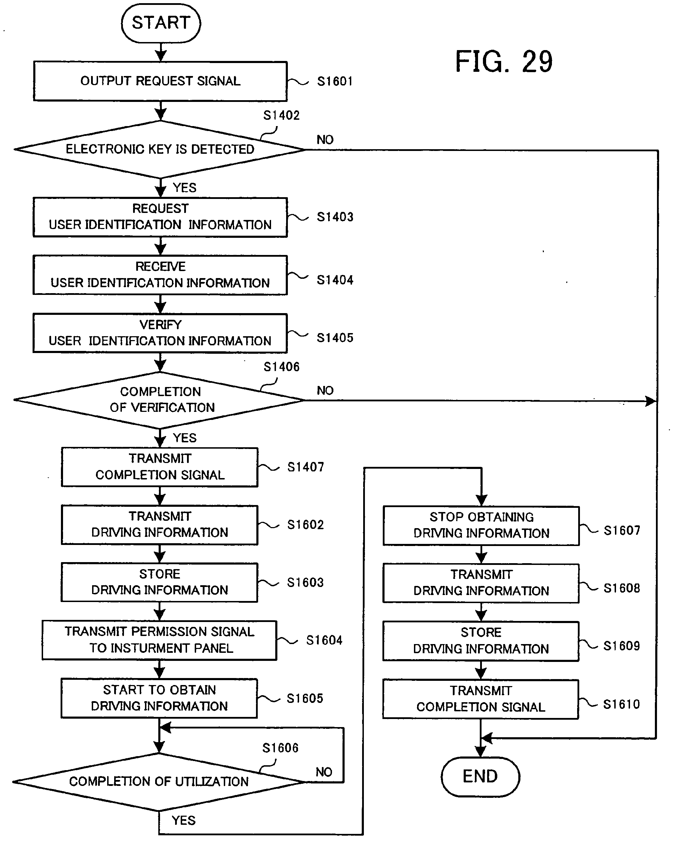

The operation of the fifteenth embodiment of the in-vehicle apparatus controlling system **1500** according to the present invention will be described hereinafter with reference **to** FIG. **29.**

Here, the steps of the fifteenth embodiment of the in-vehicle apparatus controlling system **1500** the same as those of the fourteenth embodiment of the in-vehicle apparatus controlling system **1400** will not be described hereinafter.

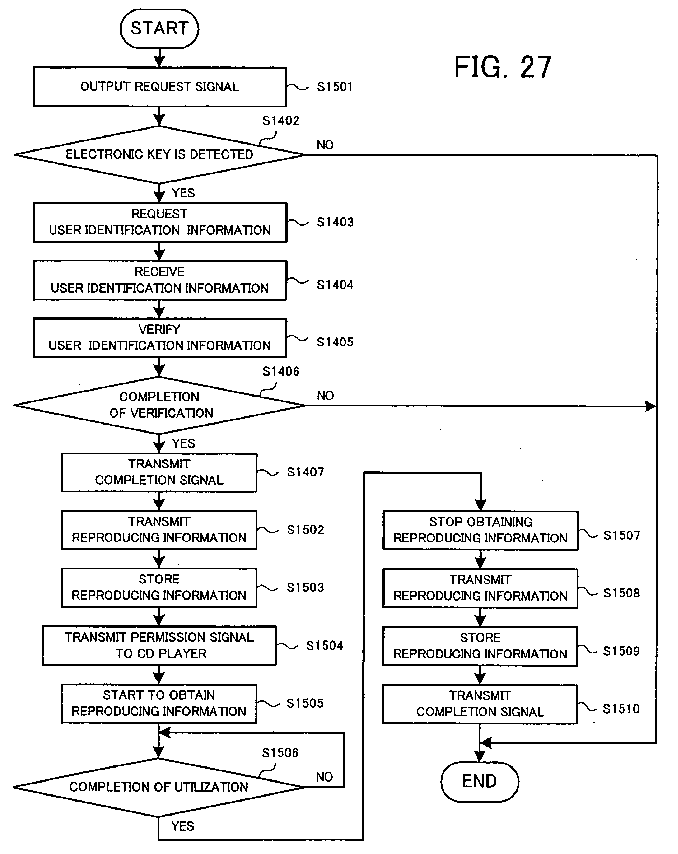

As shown in FIG. **27,** the request signal indicative of request for permission to utilize the in-vehicle CD player is firstly transmitted to the in-vehicle CD player controlling unit **1504a** of the controlling means **1504** (in the step **S1501).** When, for example, the in-vehicle CD player is powered on by the person demanding permission to the in-vehicle CD player, the request signal is transmitted to the in-vehicle CD player controlling unit **1504a** of the controlling means **1504.** The term "request signal" herein described is intended to indicate an instruction for both the electronic key **1501** and the controlling means **1504** to collectively have the identifying means **1406** start to judge whether or not to allow the person to utilize the in-vehicle CD player.

Here, the steps **S1502** to **S1507** of the fifteenth embodiment of the in-vehicle apparatus controlling system **1500** the same as those of the fourteenth embodiment of the in-vehicle apparatus controlling system **1400** will not be described hereinafter.

The successful completion signal indicative of the information about the fact that the person is successfully identified as the registered user having permission to utilize the automotive vehicle is then transmitted to the electronic key **1501** by the identifying means **1406.** The audio sound reproducing operation information stored by the audio sound reproducing operation information storing unit **1503b** is transmitted to the second communication means **1405** through the first communication means **1403** in response to the successful completion signal (in the step **S1502).** The audio sound reproducing operation information received by the second communication means **1405** from the electronic key **1501** is then stored by the audio sound reproducing operation information storing unit **1504b** (in the step **S1503).** The permission signal indicative of the information about the fact that the person identified as the registered user is allowed to utilize the in-vehicle CD player is then transmitted to the audio sound reproducing operation information by the audio sound reproducing operation information controlling unit **1504a** (in the step **S1504).** The audio sound reproducing operation information controlling unit **1504a** allows the in-vehicle CD player to be utilized by the person identified as the registered user. Therefore, the audio sound reproducing operation information controlling unit **1504a** can allow the in-vehicle CD player to reproduce audio sounds from the audio data stored in the CD on the basis of the setting information about order of the reproduction of the audio data stored in the CD.

When the in-vehicle CD player is utilized by the person identified as the registered user, the new audio sound reproducing operation information is obtained by the controlling means **1504** (in the step **S1505).** When, for example, the setting information about order of the reproduction of the audio data stored in the CD is updated by the person identified as the registered user, the setting information is newly obtained by the controlling means **1504.** The newly obtained setting information is then stored in the audio sound reproducing operation information storing unit **1504b.**

The judgment is then made by the controlling means **1504** (in the step **S1506)** on whether or not the utilization of the in-vehicle CD player is complete. When, for example, the engine of the automotive vehicle is stopped, the judgment may be made that the utilization of the in-vehicle CD player is complete. The controlling means **1504** completes a task of newly obtaining the automotive vehicle driving information (in the step **S1507).**

The audio sound reproducing operation information stored in the audio sound reproducing operation information storing unit **1504b** of the controlling means **1504** is then transmitted to the electronic key **1501** by the second communication means **1405** of the in-vehicle controlling apparatus **1502,** while the audio sound reproducing operation information is received by the first communication means **1403** of the electronic key **1501** (in the step **S1508).** Here, only the new audio sound reproducing operation information may be transmitted to the electronic key **1501.** The audio sound reproducing operation information is then stored in the audio sound reproducing operation information **1503b** of the personal information storing means **1503** (in the step **S1409).** When the audio sound reproducing operation information is stored in the audio sound reproducing operation information **1503b** of the personal information storing means **1503,** the completion signal is produced and outputted by the personal information storing means **1503** to the controlling means **1504** through the first and second communication means **1403** and **1405** (in the step **S1510).** Finally, the electronic key **1501** and the in-vehicle controlling apparatus **1502** compete the cooperative controlling of the in-vehicle CD player.

Here, the usage-based record with respect to the in-vehicle CD player may be stored in the setting information memory unit **1407b** when the electronic key **1501** and the in-vehicle controlling apparatus **1502** compete the cooperative controlling of the in-vehicle CD player. This leads to the fact that the judgment can be easily made on whether or not the in-vehicle apparatus controlling system **1500** is fraudulently utilized by the person identified as the unregistered user on the basis of the usage-based record with respect to the in-vehicle CD player. In this embodiment, the controlling means **1504** is electrically connected to the in-vehicle CD player. However, the controlling means **1504** may be electrically connected to a digital versatile disc player provided in the automotive vehicle (in-vehicle DVD player) to reproduce either an audio sound or an image, or both the audio sound and the image from the audio-visual data stored in DVD on the basis of the setting information. Additionally, the controlling means **1504** may be electrically and detachably connected to a portable CD player, or a portable DVD player.

From the above detailed description, it will be understood that the in-vehicle apparatus controlling system **1500** according to the fifteenth embodiment of the present invention can allow the person to update his or her own setting information protected by the user identification information, and efficiently allow the person to utilize the in-vehicle CD player on the basis of the updated setting information by reason that the electronic key **1501** and the in-vehicle controlling apparatus **1502** are adapted to cooperatively control the in-vehicle CD player, and the in-vehicle controlling apparatus **1502** is adapted to perform the interactive communication with the electronic key **1501** to receive the setting information from the electronic key **1501.**

### [Sixteenth Embodiment]

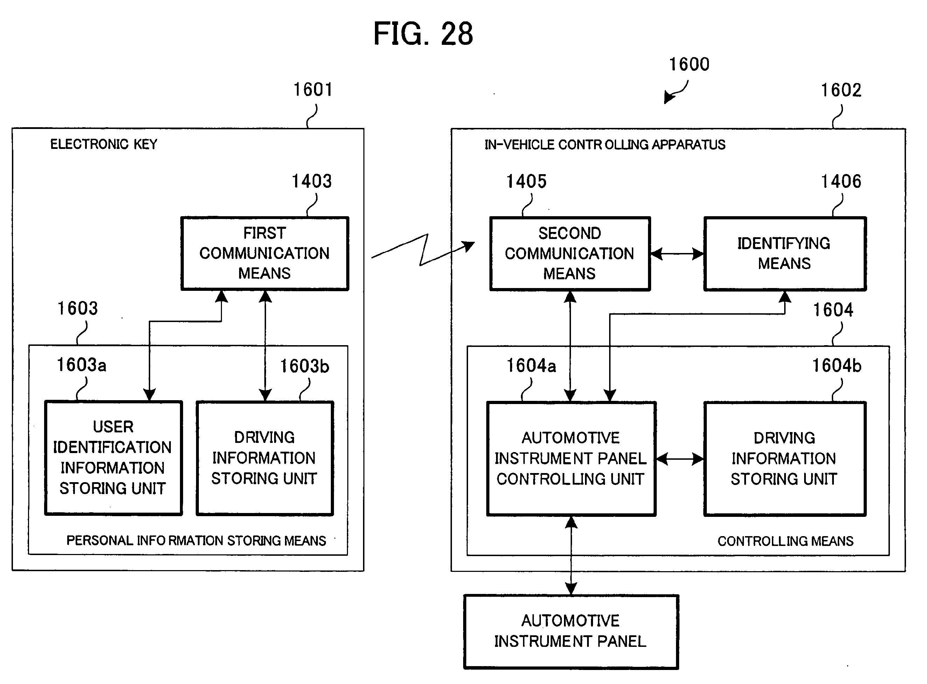

The constitution of the in-vehicle controlling apparatus and the in-vehicle apparatus controlling system according to the sixteenth embodiment of the present invention will be described hereinafter with reference to FIG. **28.**

The constitutional elements of the sixteenth embodiment of the in-vehicle apparatus controlling system 1600 substantially the same as those of the fourteenth embodiment of the in-vehicle apparatus controlling system **1400** will not be described but bear the same reference numerals as those of the fourteenth embodiment of the in-vehicle apparatus controlling system **1400.**

As shown in FIG. **28,** the constitution of the in-vehicle apparatus controlling system **1600** according to the sixteenth embodiment is the same as that of the in-vehicle apparatus controlling system **1400** according to the fourteenth embodiment with the exception of the fact that the personal information storing means **1404** and the controlling means **1407** are respectively replaced by personal information storing means **1603** and controlling means **1604** electrically connected to an automotive instrument panel provided in a movable body such as for example an automotive vehicle, a two wheeled motor vehicle, a ship, and an airplane. The automotive instrument panel has a traveling speed meter, a travel distance meter, a rotating speed meter, a fuel level meter, and an indicator for indicating a state of a gear shifter.

The personal information storing means **1603** includes a user identification information storing unit **1603a** having user identification information such as for example an identification code stored therein, the user identification information being indicative of the person demanding permission to utilize the automotive vehicle, and an automotive vehicle driving information storing unit **1603b** having automotive vehicle driving information stored therein, the automotive vehicle driving information being required for the automotive vehicle. The personal information storing means **1603** is constituted by electronic units such as for example a central processing unit (CPU) and a semiconductor memory unit. The personal information storing means **1603** is adapted to transmit both the user identification information and the automotive vehicle driving information to the in-vehicle controlling apparatus **1602** through the first communication means **1403.** The automotive vehicle driving information storing unit **1603b** is constituted by an electronic unit such as for example a semiconductor memory unit.

The term "automotive vehicle driving information" herein described is intended to indicate information required for the controlling means when the automotive vehicle is driven by the person identified as the registered user. The automotive vehicle driving information includes information such as for example a travel distance of the automotive vehicle, an acceleration pattern, a speed reduction pattern, starting and ending times on each traveling, remaining fuel level, and a state of a gear shifter.

The controlling means **1604** includes an automotive instrument panel controlling unit **1604a** for controlling an automotive instrument panel on the basis of the automotive vehicle driving information, and an automotive vehicle driving information storing unit **1604b** having the automotive vehicle driving information stored therein. The controlling means **1604** is constituted by electronic units such as for example a central processing unit (CPU), a semiconductor memory unit, and an information inputting and outputting unit. The controlling means **1604** is adapted to transmit the automotive vehicle driving information to the electronic key **1601.** The electronic key **1601** and the in-vehicle controlling apparatus **1602** are adapted to cooperatively control the automotive instrument panel by reason that one of the electronic key **1601** and the in-vehicle controlling apparatus **1602** is adapted to transmit the automotive vehicle driving information to the other of the electronic key **1601** and the in-vehicle controlling apparatus **1602.**

The automotive vehicle driving information storing unit **1604b** is constituted by an electronic unit such as for example a semiconductor memory unit. The automotive vehicle driving information stored in the automotive vehicle driving information storing unit **1603b** of the personal information storing means **1603** can be updated through the information inputting and outputting unit (not shown) of the controlling means **1604** by the person identified as the registered user.

The operation of the sixteenth embodiment of the in-vehicle apparatus controlling system **1600** according to the present invention will be described hereinafter with reference to FIG. **29.**

Here, the steps of the sixteenth embodiment of the in-vehicle apparatus controlling system **1600** the same as those of the fourteenth embodiment of the in-vehicle apparatus controlling system **1400** will not be described hereinafter.

As shown in FIG. **29,** the request signal indicative of request for permission to utilize the automotive instrument panel is firstly transmitted to the automotive instrument panel controlling unit **1604a** of the controlling means **1604** (in the step **S1601).** When, for example, the engine of the automotive vehicle is started by the person demanding permission to the automotive instrument panel, the request signal is transmitted to the automotive instrument panel controlling unit **1604a** of the controlling means **1604.** The term "request signal" herein described is intended to indicate an instruction for both the electronic key 1601 and the controlling means **1604** to collectively have the identifying means **1406** start to judge whether or not to allow the person to utilize the automotive instrument panel.

Here, the steps **S1602** to **S1607** of the sixteenth embodiment of the in-vehicle apparatus controlling system **1600** the same as those of the fourteenth embodiment of the in-vehicle apparatus controlling system **1400** will not be described hereinafter.

The successful completion signal indicative of the information about the fact that the person is successfully identified as the registered user having permission to utilize the automotive vehicle is then transmitted to the electronic key **1601** by the identifying means **1406.** The automotive vehicle driving information stored by the automotive vehicle driving information storing unit **1603b** is transmitted to the second communication means **1405** through the first communication means **1403** in response to the successful completion signal (in the step **S1602).** The automotive vehicle driving information received by the second communication means **1405** from the electronic key **1601** is then stored by the automotive vehicle driving information storing unit **1604b** (in the step **S1603).** The permission signal indicative of the information about the fact that the person identified as the registered user is allowed to utilize the automotive instrument panel is then transmitted to the automotive vehicle driving information by the automotive vehicle driving information controlling unit **1604a** (in the step **S1604).** The automotive vehicle driving information controlling unit **1604a** allows the automotive instrument panel to be utilized by the person identified as the registered user. When, for example, the person identified as the registered user wants to know the previously recorded automotive vehicle driving information, in other words, an instruction to a screen to have the previously recorded automotive vehicle driving information displayed thereon is inputted by the operation keys of the information inputting and outputting unit of the controlling means **1604,** the previously recorded automotive vehicle driving information is displayed on the screen.

When the automotive vehicle is utilized by the person identified as the registered user, the new automotive vehicle driving information is obtained by the controlling means **1604** over a driving period (in the step **S1605).** For example, the traveling information of the automotive vehicle is newly obtained over a driving period. The newly obtained traveling information is stored in the automotive vehicle driving information storing unit **1604b.**

The judgment is then made by the controlling means **1604** (in the step **S1606)** on whether or not the utilization of the automotive instrument panel is complete. When, for example, the engine of the automotive vehicle is stopped, the judgment may be made that the utilization of the automotive instrument panel is complete. The controlling means **1604** completes a task of newly obtaining the automotive vehicle driving information (in the step **S1607).**

The automotive vehicle traveling information is then received by the first communication means **1603** from the automotive vehicle driving information storing unit **1604b** through the second communication means **1405** (in the step **S1608).** Here, only the newly obtained automotive vehicle traveling information may be received by the first communication means **1603** from the automotive vehicle driving information storing unit **1604b** through the second communication means **1405.** The received automotive vehicle driving information is then stored by the automotive vehicle driving information storing unit **1603b** (in the step **S1609).** The judgment is made that the received automotive vehicle driving information is then stored by the automotive vehicle driving information storing unit **1603b,** the successful completion signal indicative of the information about the fact that the received automotive vehicle driving information is then stored by the automotive vehicle driving information storing unit **1603b** is transmitted to the second communication means **1405** through the first communication means **1404** (in the step **S1610).** The electronic key **1601** and the in-vehicle controlling apparatus **1602** collectively complete the task of cooperatively controlling the automotive instrument panel.

Here, the history information about whether the automotive instrument panel is utilized by the person identified as the registered or unregistered user may be stored by the automotive vehicle driving information controlling unit **1604a** when the electronic key **1601** and the in-vehicle controlling apparatus **1602** collectively complete the task of cooperatively controlling the automotive instrument panel. The in-vehicle apparatus controlling system **1600** can easily judge whether the in-vehicle apparatus is utilized by the person identified as the registered or unregistered user on the basis of the history information stored by the automotive vehicle driving information controlling unit **1604a.**

For, example, the auto track can be easily managed on the basis of the automotive vehicle driving information received from the electronic key **1601.**

The electronic key **1601** and the in-vehicle controlling apparatus **1602** can cooperatively control the automotive instrument panel on the basis of the information about the habit in driving stored in the electronic key **1601.** The in-vehicle controlling apparatus **1602** can collectively control the automotive instrument panel to have the automotive instrument panel inform the person identified as the registered user about the fact that the automotive vehicle is traveling above the speed limit. The information about speed-up and speed reduction pattern in driving by the person identified as the registered user is obtained on the basis of the revolution speed information of the engine. When the person having an inclination to slam his or her brakes is driving the automotive vehicle, the in-vehicle controlling apparatus can inform the person about whether or not the road is in slippery conditions.

Additionally, the in-vehicle controlling apparatus **1602** can allow the person identified as the registered user to safety the automotive vehicle irrespective of type of automotive vehicle, one's own or others' automotive vehicle by reason that the electronic key **1601** and the in-vehicle controlling apparatus **1602** cooperatively controls the automotive instrument panel on the basis of the information about the habit in driving stored in the electronic key **1601.**

From the above detailed description, it will be understood that the in-vehicle apparatus controlling system **1600** according to the sixteenth embodiment of the present invention can allow the person to update his or her own automotive vehicle driving information protected by the user identification information, and efficiently allow the person to utilize the automotive instrument panel on the basis of the updated automotive vehicle driving information by reason that the electronic key **1601** and the in-vehicle controlling apparatus **1602** are adapted to cooperatively control the automotive instrument panel, and the in-vehicle controlling apparatus **1602** is adapted to perform the interactive communication with the electronic key **1601** to receive the automotive vehicle driving information from the electronic key **1601.**

### [Seventeenth Embodiment]

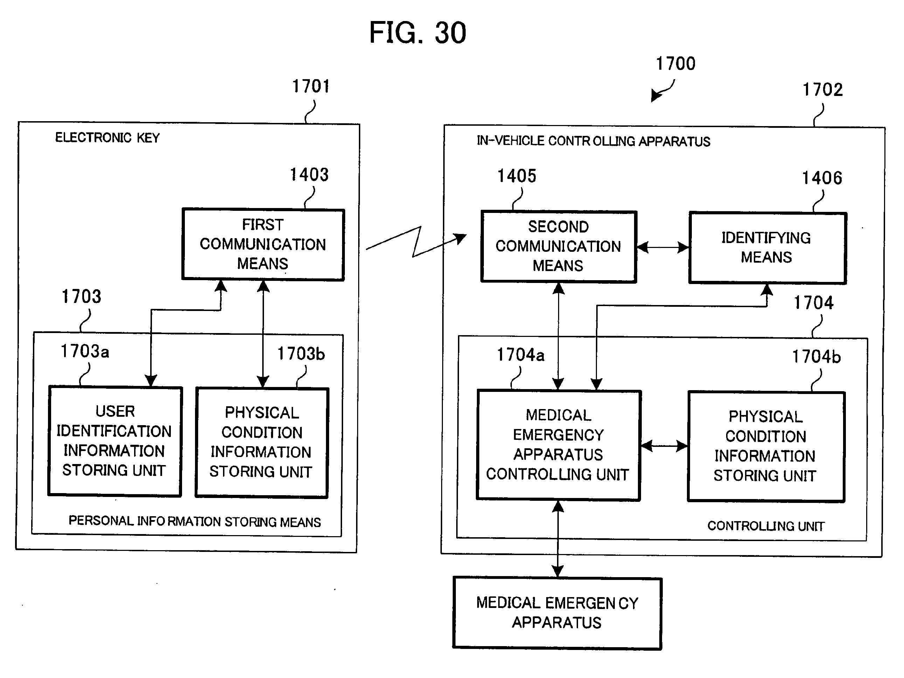

The constitution of the in-vehicle controlling apparatus and the in-vehicle apparatus controlling system according to the seventeenth embodiment of the present invention will be described hereinafter with reference to FIG. **30.**

The constitutional elements of the seventeenth embodiment of the in-vehicle apparatus controlling system **1700** substantially the same as those of the fourteenth embodiment of the in-vehicle apparatus controlling system **1400** will not be described but bear the same reference numerals as those of the fourteenth embodiment of the in-vehicle apparatus controlling system **1400.**

As shown in FIG. **30,** the constitution of the in-vehicle apparatus controlling system **1700** according to the seventeenth embodiment is the same as that of the in-vehicle apparatus controlling system **1400** according to the fourteenth embodiment with the exception of the fact that the personal information storing means **1404** and the controlling means **1407** are respectively replaced by personal information storing means **1703** and controlling means **1704** electrically connected to an emergency call apparatus which allow the registered user to immediately call an emergency medical center when the registered user suddenly gets out of shape in the automotive vehicle.

The personal information storing means **1703** includes a user identification information storing unit **1703a** having user identification information such as for example an identification code stored therein, the user identification information being indicative of the person demanding permission to utilize the automotive vehicle, and an physical condition information storing unit **1703b** having physical condition information stored therein, the physical condition information being required for the emergency call apparatus, and indicative of current and previous physical conditions of the person. The personal information storing means **1703** is constituted by electronic units such as for example a central processing unit (CPU) and a semiconductor memory unit. The personal information storing means **1703** is adapted to transmit both the user identification information and the physical condition information to the in-vehicle controlling apparatus **1702** through the first communication means **1403.** The physical condition information storing unit **1703b** is constituted by an electronic unit such as for example a semiconductor memory unit.

The term "physical condition information" herein described is intended to indicate information such as for example a disease which one had in the past, a disease under treatment, a hospital or a clinic in which one is receiving regular outpatient treatment, medication one is currently taking, and one's blood type.

The controlling means **1704** includes an emergency call apparatus controlling unit **1704a** for controlling the emergency call apparatus on the basis of the physical condition information, and a physical condition information memory unit **1703b** having physical condition information stored therein. The emergency call apparatus controlling unit **1704a** is constituted by electronic units such as for example a central processing unit (CPU) and a semiconductor memory unit. The second communication means **1405** of the in-vehicle controlling apparatus **1702** is adapted to transmit last physical condition information to the first communication means **1403** of the electronic key **1701.** The electronic key **1701** and the in-vehicle controlling apparatus **1702** are cooperatively adapted to control the emergency call apparatus on the basis of the physical condition information received through the communication to allow the emergency call apparatus to be utilized by the person identified as the registered user.

Here, the physical condition information memory unit **1704b** may be constituted by a semiconductor memory element.

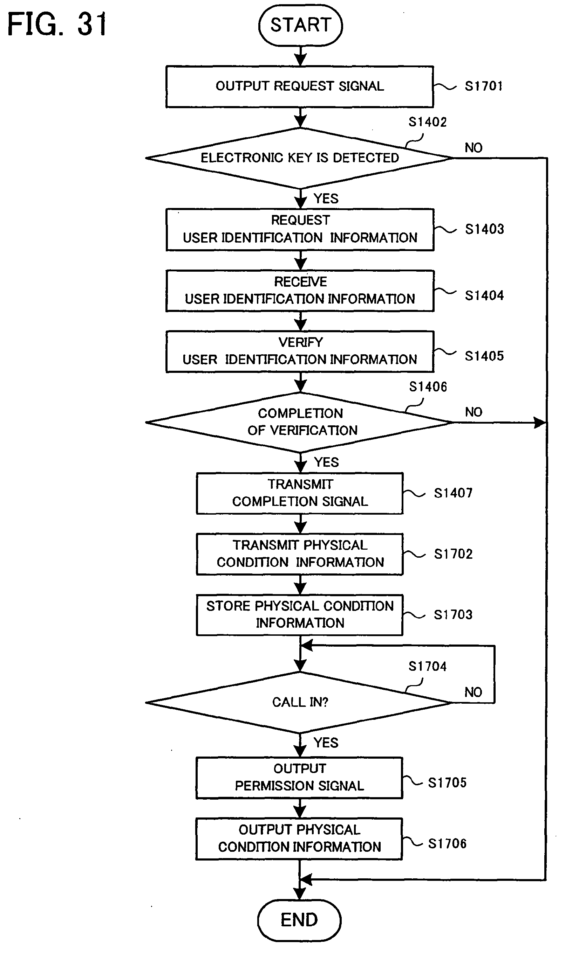

The operation of the seventeenth embodiment of the in-vehicle apparatus controlling system **1700** according to the present invention will be described hereinafter with reference to FIG. **31.**

Here, the steps of the seventeenth embodiment of the in-vehicle apparatus controlling system **1700** the same as those of the fourteenth embodiment of the in-vehicle apparatus controlling system **1400** will not be described hereinafter.

As shown in FIG. **31,** the request signal indicative of request for permission to utilize the emergency call apparatus is firstly transmitted to the emergency call apparatus controlling unit **1704a** of the controlling means **1704** (in the step **S1701).** When, for example, the engine of the automotive vehicle is started by the person demanding permission to the emergency call apparatus, the request signal is transmitted to the emergency call apparatus controlling unit **1704a** of the controlling means **1704.** The term "request signal" herein described is intended to indicate an instruction for both the electronic key **1701** and the controlling means **1704** to collectively have the identifying means **1406** start to judge whether or not to allow the person to utilize the emergency call apparatus.

Here, the steps **S1402** to **S1407** of the seventeenth embodiment of the in-vehicle apparatus controlling system **1700** the same as those of the fourteenth embodiment of the in-vehicle apparatus controlling system **1400** will not be described hereinafter.

The successful completion signal indicative of the information about the fact that the person is successfully identified as the registered user having permission to utilize the automotive vehicle is then transmitted to the electronic key **1701** by the identifying means **1406.** The physical condition information stored by the physical condition information storing unit **1703b** is transmitted to the second communication means **1405** through the first communication means **1403** in response to the successful completion signal (in the step **S1702).** The physical condition information received by the second communication means **1405** from the electronic key **1701** is then stored by the physical condition information storing unit **1704b** (in the step **S1703).**

The judgment is then made by the controlling means **1704** (in the step **S1704)** on whether or not the person identified as the registered user is in need of emergency care. When the judgment is made in the step **S1704** that the person identified as the registered user is in need of emergency care, the permission signal is outputted to the emergency call apparatus by the emergency call apparatus controlling unit **1704a** (in the step **S1705).** The physical condition information is then outputted to the emergency call apparatus from the physical condition information storing unit **1703b** (in the step **S1706).** The emergency call apparatus immediately call an emergency medical center in response to the permission signal. The physical condition information indicative of the current physical condition of the person identified as the registered user is then transmitted to the emergency medical center. When, for example, the person identified as the registered user suddenly gets out of shape in the automotive vehicle, the in-vehicle apparatus controlling system can have the emergency call apparatus immediately call an ambulance, and transmit the physical condition information to the emergency medical center. In other words, the person identified as the registered user receives first aid on the basis of the physical condition information.

When, on the other hand, the judgment is made that the person identified as the registered user is in need of emergency care, the emergency call apparatus is in a waiting state until the person identified as the registered user is in need of emergency care. In other words, the judgment is repeatedly made in the step **S1704** whether or not the person identified as the registered user is in need of emergency care.

The in vehicle controlling apparatus further comprises a mechanical shock sensor mounted on the automotive vehicle. The mechanical shock sensor is adapted to detect whether or not the automotive vehicle is involved in an automotive vehicle accident. When the judgment is made that the automotive vehicle is involved in an automotive vehicle accident, the in-vehicle apparatus controlling system can have the emergency call apparatus immediately inform the police about the automotive vehicle accident, and call in the emergency medical center, and transmit the physical condition information to the emergency medical center. This leads to the fact that the person identified as the registered user receives first aid on the basis of the physical condition information.

From the above detailed description, it will be understood that the in-vehicle apparatus controlling system **1700** according to the seventeenth embodiment of the present invention can immediately call in the emergency medical center to when the person identified as the registered user suddenly gets out of shape in the automotive vehicle, or the person identified as the registered user is involved in an automotive vehicle accident by reason that the electronic key **1701** and the in-vehicle controlling apparatus **1702** are adapted to cooperatively control the emergency call apparatus, and the in-vehicle controlling apparatus **1702** is adapted to perform the interactive communication with the electronic key **1501** to receive the setting information from the electronic key **1701.**

### [Eighteenth Embodiment]

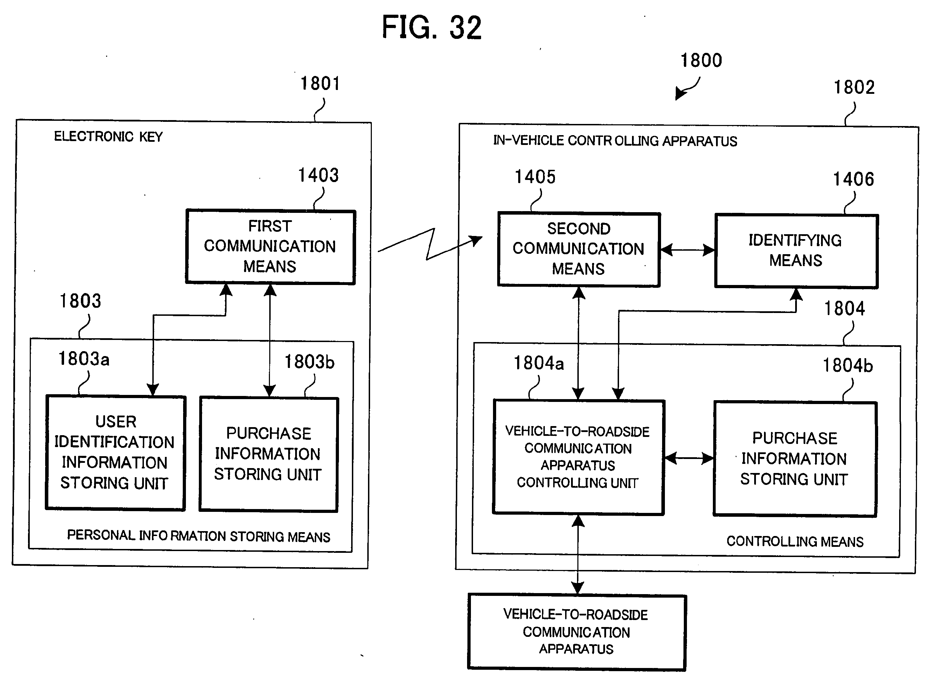

The constitution of the in-vehicle controlling apparatus and the in-vehicle apparatus controlling system according to the eighteenth embodiment of the present invention will be described hereinafter with reference to FIG. **32.**

The constitutional elements of the eighteenth embodiment of the in-vehicle apparatus controlling system **1800** substantially the same as those of the fourteenth embodiment of the in-vehicle apparatus controlling system **1400** will not be described but bear the same reference numerals as those of the fourteenth embodiment of the in-vehicle apparatus controlling system **1400.**

As shown in FIG. **32,** the constitution of the in-vehicle apparatus controlling system **1800** according to the eighteenth embodiment is the same as that of the in-vehicle apparatus controlling system **1400** according to the fourteenth embodiment with the exception of the fact that the personal information storing means **1404** and the controlling means **1407** are respectively replaced by personal information storing means **1803** and controlling means **1804** electrically connected to a vehicle-to- roadside communication apparatus.

The term "vehicle-to-roadside communication apparatus" herein described is intended to indicate a communication apparatus provided as part of an vehicle-to-roadside communication system in an automotive vehicle. The communication apparatus is adapted to perform communication with at least one terminal apparatus provided as part of an vehicle-to-roadside communication at a store through a communication apparatus provided as part of an vehicle-to-roadside communication on the roadside (hereinafter simply referred to as "roadside-to-vehicle communication apparatus"). When, for example, one or more products are purchased at the store, the terminal apparatus is adapted to transmit purchase information about that or those products purchased at the store to the roadside-to-vehicle communication apparatus, while the vehicle-to-roadside communication apparatus is adapted to receive the purchase information from the roadside-to-vehicle communication apparatus. On the other hand, the vehicle-to-roadside communication apparatus is adapted to transmit purchase information about one or more products previously purchased at that store to the terminal apparatus through the roadside-to-vehicle communication apparatus. The products previously purchased by the person can be checked through the terminal apparatus by a store staff.

The personal information storing means **1803** includes a user identification information storing unit **1803a** having user identification information such as for example an identification code stored therein, the user identification information being indicative of the person demanding permission to utilize the automotive vehicle, and a purchase information storing unit **1803b** having purchase information about the previously purchased products stored therein. The personal information storing means **1803** is constituted by electronic units such as for example a central processing unit (CPU) and a semiconductor memory unit. The personal information storing means **1803** is adapted to transmit both the user identification information and the purchase information to the in-vehicle controlling apparatus **1802** through the first communication means **1403.** The purchase information storing unit **1803b** is constituted by an electronic unit such as for example a semiconductor memory unit.

The term "purchase information" herein described is intended to indicate information such as for example names and quantity of the products previously purchased at the store in which the terminal apparatus of the vehicle-to-roadside communication system is provided, store's name, and year, month and day of purchase. This purchase information may include not only information about the previously purchased products but also information such as for example an expense of an automobile inspection, failure records of the automotive vehicle, and maintenance records of the automotive vehicle.

The controlling means **1804** includes a vehicle-to-roadside communication apparatus controlling unit **1804a** for controlling the vehicle-to-roadside communication apparatus on the basis of the purchase information when the vehicle-to-roadside communication apparatus is utilized by the person identified as the registered user, and a personal information memory unit **1703b** having personal information stored therein. The vehicle-to-roadside communication apparatus controlling unit **1704a** is constituted by electronic units such as for example a central processing unit (CPU) and a semiconductor memory unit. The second communication means **1405** of the in-vehicle controlling apparatus **1802** is adapted to transmit the personal information to the first communication means **1403** of the electronic key **1801.** The electronic key **1801** and the in-vehicle controlling apparatus **1802** are cooperatively adapted to control the vehicle-to-roadside communication apparatus on the basis of the personal information received through the communication to allow the vehicle-to-roadside communication apparatus to be utilized by the person identified as the registered user.

Here, the purchase information storing unit **1804b** may be constituted by a semiconductor memory element.

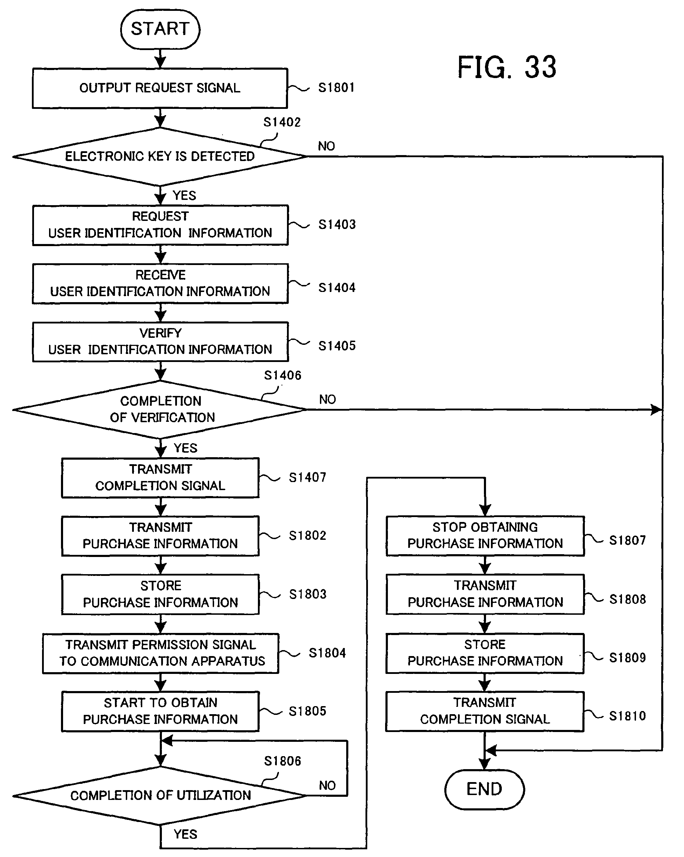

The operation of the eighteenth embodiment of the in-vehicle apparatus controlling system **1800** according to the present invention will be described hereinafter with reference to FIG. **33.**

Here, the steps of the eighteenth embodiment of the in-vehicle apparatus controlling system **1800** the same as those of the fourteenth embodiment of the in-vehicle apparatus controlling system **1400** will not be described hereinafter.

As shown in FIG. **33,** the request signal indicative of request for permission to utilize the vehicle-to-roadside communication apparatus is firstly transmitted to the vehicle-to-roadside communication apparatus controlling unit **1804a** of the controlling means **1804** (in the step **S1801).** When, for example, the person demanding permission to the vehicle-to-roadside communication apparatus starts the engine of the automotive vehicle, the request signal is transmitted to the vehicle-to-roadside communication apparatus controlling unit **1804a** of the controlling means **1804.** The term "request signal" herein described is intended to indicate an instruction for both the electronic key **1801** and the controlling means **1804** to collectively have the identifying means **1406** start to judge whether or not to allow the person to utilize the vehicle-to-roadside communication apparatus.

Here, the steps **S1402** to **S1407** of the eighteenth embodiment of the in-vehicle apparatus controlling system **1800** the same as those of the fourteenth embodiment of the in-vehicle apparatus controlling system **1400** will not be described hereinafter.

The successful completion signal indicative of the information about the fact that the person is successfully identified as the registered user having permission to utilize the automotive vehicle is then transmitted to the electronic key **1801** by the identifying means **1406.** The purchase information stored by the purchase information storing unit **1803b** is transmitted to the second communication means **1405** through the first communication means **1403** in response to the successful completion signal (in the step **S1802).** The purchase information received by the second communication means **1405** from the electronic key **1801** is then stored by the purchase information storing unit **1804b** (in the step **S1803**). The permission signal indicative of the information about the fact that the person identified as the registered user is allowed to utilize the vehicle-to-roadside communication apparatus is then transmitted to the vehicle-to-roadside communication apparatus by the vehicle-to-roadside communication apparatus controlling unit **1804a** (in the step **S1804**). The vehicle-to-roadside communication apparatus controlling unit **1804a** allows vehicle-to-roadside communication apparatus to be utilized by the person identified as the registered user. When, for example, the person stops at a drive-through store, the purchase information previously purchased at the drive-through store is transmitted to the terminal apparatus provided in the drive-through store.

The controlling means **1804** begins a task of obtaining the purchase information about the newly purchased products (in the step **S1805**). The purchase information stored by the purchase information storing unit **1804b** is then updated on the basis of the obtained purchase information about the newly purchased products.

The judgment is then made by the controlling means **1804** (in the step **S1806**) on whether or not the person identified as the registered user finishes his or her shopping through the vehicle-to-roadside communication apparatus. When, for example, the person identified as the registered user stops the engine of the automotive vehicle, the judgment is made that the person identified as the registered user finishes his or her shopping through the vehicle-to-roadside communication apparatus. The controlling means 1804 completes the task of obtaining the purchase information about the newly purchased products (in the step **S1807**).

The updated purchase information is then received by the second communication means **1405** from the purchase information storing unit **1804b.** The updated purchase information received by the second communication means **1405** is transmitted to the first communication means **1403** (in the step **S1808**). Here, the purchase information about the newly purchased products may be received by the first communication means **1403** from the second communication means **1405**. The updated purchase information is then stored by the purchase information storing unit **1803b** (in the step **S1809**). When the updated purchase information is stored by the purchase information storing unit **1803b**, the completion signal indicative of the information about the fact that the updated purchase information is then stored by the purchase information storing unit **1803b** is transmitted to the controlling means **1804** through the first communication means **1403** and the second communication means **1405** (in the step **S1810).** The electronic key **1801** and the in-vehicle controlling apparatus **1802** collectively complete the task of cooperatively controlling the vehicle-to-roadside communication apparatus.

Here, the history information about whether the vehicle-to-roadside communication apparatus is utilized by the person identified as the registered or unregistered user may be stored by the purchase information memory unit **1804b** when the electronic key **1801** and the in-vehicle controlling apparatus **1802** collectively complete the task of cooperatively controlling the vehicle-to-roadside communication apparatus. The in-vehicle apparatus controlling system **1800** can easily judge whether the in-vehicle apparatus is utilized by the person identified as the registered or unregistered user on the basis of the history information stored by the purchase information memory unit **1804b.**

From the above detailed description, it will be understood that the in-vehicle apparatus controlling system **1800** according to the eighteenth embodiment of the present invention can allow the purchase information about the previously purchased products to be watched by the person identified as the registered user on the basis of the judgment made by the identifying means **1406** by reason that one of the electronic key **1801** and the in-vehicle controlling apparatus **1802** is adapted to transmit the updatable purchase information to the other of the electronic key **1801** and the in-vehicle controlling apparatus **1802,** the electronic key **1801** and the in-vehicle controlling apparatus **1802** are adapted to cooperatively control the vehicle-to-roadside communication apparatus provided in the automotive vehicle. On the other hand, the terminal apparatus provided in each store can allow the store staffs to provide services that satisfy their customers' needs on the basis of the managed customer information.

## Claims

1. An in-vehicle apparatus controlling system, comprising:
an in-vehicle controlling apparatus for controlling an in-vehicle apparatus, said in-vehicle controlling apparatus being provided in an automotive vehicle; and
memory media having user identification information stored therein; said user identification information being partially constituted by biometric information indicative of a person demanding permission to utilize said in-vehicle apparatus, wherein
said in-vehicle controlling apparatus includes: biometric information obtaining means for obtaining biometric information indicative of said person demanding permission to utilize said in-vehicle apparatus; storing means for storing user identification information which is partially constituted by biometric information indicative of a registered user having permission to utilize said automotive vehicle; identifying means for judging whether or not said person is identical to said registered user having permission to utilize said automotive vehicle by establishing the verification of said biometric information obtained by said biometric information obtaining means with respect to said biometric information stored by said storing means; controlling means for controlling said in-vehicle apparatus on the basis of the judgment made by said identifying means; and reading means for receiving said user identification information from said memory media, said identifying means being adapted to judge whether or not said person is identical to said registered user having permission to utilize said automotive vehicle by establishing the verification of said biometric information received by said reading means with respect to said biometric information stored in said memory media when the verification of said biometric information obtained by said biometric information obtaining means with respect to said biometric information stored by said storing means is not normally established by said identifying means.

2. An in-vehicle apparatus controlling system as set forth in claim 1, in which said biometric information obtaining means is constituted by a camera unit for taking an image indicative of the face of said person demanding permission to utilize said in-vehicle apparatus, and obtaining, as said biometric information, image information indicative of said face of said person demanding permission to utilize said in-vehicle apparatus.

3. An in-vehicle apparatus controlling system as set forth in claim 1 or claim 2, in which
said memory media is constituted by an electronic license card, and
said biometric information obtaining means is adapted to obtain said biometric information from said electronic license card.

4. An in-vehicle apparatus controlling system as set forth in claim 1 or claim 2, in which
said memory media is constituted by a non-contact type electronic license card, and
said biometric information obtaining means is adapted to obtain said biometric information from said non-contact type electronic license card.

5. An in-vehicle apparatus controlling system as set forth in any one of claims 1 to 4, in which
said in-vehicle apparatus is constituted by a door lock controlling apparatus provided in said automotive vehicle, and
said controlling means is adapted to control said door lock controlling apparatus on the basis of the judgment made by said identifying means.

6. An in-vehicle apparatus controlling system as set forth in any one of claims 1 to 4, in which
said in-vehicle apparatus is constituted by an engine starting apparatus provided in said automotive vehicle, and
said controlling means is adapted to control said engine starting apparatus on the basis of the judgment made by said identifying means.

7. An in-vehicle apparatus controlling system as set forth in any one of claims 1 to 4, in which
said in-vehicle apparatus is constituted by a telephone provided in said automotive vehicle, and
said controlling means is adapted to control said telephone on the basis of the judgment made by said identifying means.

8. An in-vehicle apparatus controlling system as set forth in any one of claims 1 to 4, in which
said in-vehicle apparatus is constituted by an audio apparatus provided in said automotive vehicle, and
said controlling means is adapted to control said audio apparatus on the basis of the judgment made by said identifying means.

9. An in-vehicle apparatus controlling system as set forth in any one of claims 1 to 4, in which
said in-vehicle apparatus is constituted by an automotive instrument panel provided in said automotive vehicle, and
said controlling means is adapted to control said automotive instrument panel on the basis of the judgment made by said identifying means.

10. An in-vehicle apparatus controlling system as set forth in any one of claims 1 to 4, in which
said in-vehicle apparatus is constituted by an emergency call apparatus provided in said automotive vehicle, and
said controlling means is adapted to control said emergency call apparatus on the basis of the judgment made by said identifying means.

11. An in-vehicle apparatus controlling system as set forth in any one of claims 1 to 4, in which
said in-vehicle apparatus is constituted by a vehicle-to-roadside communication apparatus provided in said automotive vehicle, and
said controlling means is adapted to control said vehicle-to-roadside communication apparatus on the basis of the judgment made by said identifying means.

12. An in-vehicle apparatus controlling system, comprising:
an in-vehicle controlling apparatus for controlling an in-vehicle apparatus;
memory media having stored therein user identification information indicative of a person demanding permission to utilize said in-vehicle apparatus; and
a mobile apparatus for performing communication with said in-vehicle controlling apparatus, wherein
said mobile apparatus includes: reading means for receiving said user identification information from said memory media; storing means for storing user identification information indicative of a registered user having permission to utilize said automotive vehicle; identifying means for judging whether or not said person is identical to said registered user having permission to utilize said automotive vehicle by establishing the verification of said biometric information received by said reading means with respect to said biometric information stored by said storing means; and transmitting means for transmitting the judgment made by said identifying means to said in-vehicle controlling apparatus, and
said in-vehicle controlling apparatus includes: receiving means for receiving said judgment made by said identifying means from said mobile apparatus; and controlling means for controlling said in-vehicle apparatus on the basis of the judgment made by said identifying means.

13. An in-vehicle apparatus controlling system, comprising:
an in-vehicle controlling apparatus for controlling an in-vehicle apparatus;
memory media having stored therein user identification information indicative of a person demanding permission to utilize said in-vehicle apparatus; and
a mobile apparatus for performing communication with said in-vehicle controlling apparatus, wherein
said mobile apparatus includes: reading means for receiving said user identification information from said memory media; and transmitting means for transmitting said user identification information to said in-vehicle controlling apparatus, and
said in-vehicle controlling apparatus includes: receiving means for receiving said user identification information from said mobile apparatus; storing means for storing user identification information indicative of a registered user having permission to utilize said automotive vehicle; identifying means for judging whether or not said person is identical to said registered user having permission to utilize said automotive vehicle by establishing the verification of said biometric information received by said reading means with respect to said biometric information stored by said storing means; and controlling means for controlling said in-vehicle apparatus on the basis of the judgment made by said identifying means.

14. An in-vehicle apparatus controlling system as set forth in claim 12 or claim 13, in which
said user identification information stored in said memory media is partially constituted by biometric information indicative of a person demanding permission to utilize said in-vehicle apparatus,
said user identification information stored by said storing means of said in-vehicle controlling apparatus is partially constituted by biometric information indicative of said registered user having permission to utilize said automotive vehicle, and
said identifying means of said in-vehicle controlling apparatus is adapted to judge whether or not said person is identical to said registered user having permission to utilize said automotive vehicle by establishing the verification of said biometric information received by said reading means with respect to said biometric information stored by said storing means.

15. An in-vehicle apparatus controlling system as set forth in claim 14, in which
said memory media is constituted by an electronic license card, and
said reading means of said mobile apparatus is adapted to receive said user identification information from said electronic license card.

16. An in-vehicle apparatus controlling system as set forth in claim 14, in which
said memory media is constituted by a non-contact type electronic license card, and
said reading means of said mobile apparatus is adapted to receive said user identification information from said non-contact type electronic license card.

17. An in-vehicle apparatus controlling system as set forth in claim 12 or claim 13, in which
said in-vehicle apparatus is constituted by a door lock controlling apparatus provided in said automotive vehicle,
said controlling means of said in-vehicle controlling apparatus is adapted to control said door lock controlling apparatus on the basis of the judgment made by said identifying means.

18. An in-vehicle apparatus controlling system as set forth in claim 12 or claim 13, in which
said in-vehicle apparatus is constituted by an engine starting apparatus provided in said automotive vehicle,
said controlling means of said in-vehicle controlling apparatus is adapted to control said engine starting apparatus on the basis of the judgment made by said identifying means.

19. An in-vehicle apparatus controlling system as set forth in claim 12 or claim 13, in which
said in-vehicle apparatus is constituted by a telephone provided in said automotive vehicle,
said controlling means of said in-vehicle controlling apparatus is adapted to control said telephone on the basis of the judgment made by said identifying means.

20. An in-vehicle apparatus controlling system as set forth in claim 12 or claim 13, in which
said in-vehicle apparatus is constituted by an audio apparatus provided in said automotive vehicle,
said controlling means of said in-vehicle controlling apparatus is adapted to control said audio apparatus on the basis of the judgment made by said identifying means.

21. An in-vehicle apparatus controlling system as set forth in claim 12 or claim 13, in which
said in-vehicle apparatus is constituted by an automotive instrument panel provided in said automotive vehicle,
said controlling means of said in-vehicle controlling apparatus is adapted to control said automotive instrument panel on the basis of the judgment made by said identifying means.

22. An in-vehicle apparatus controlling system as set forth in claim 12 or claim 13, in which
said in-vehicle apparatus is constituted by an emergency call apparatus provided in said automotive vehicle,
said controlling means of said in-vehicle controlling apparatus is adapted to control said emergency call apparatus on the basis of the judgment made by said identifying means.

23. An in-vehicle apparatus controlling system as set forth in claim 12 or claim 13, in which
said in-vehicle apparatus is constituted by a vehicle-to-roadside communication apparatus provided in said automotive vehicle,
said controlling means of said in-vehicle controlling apparatus is adapted to control said vehicle-to-roadside communication apparatus on the basis of the judgment made by said identifying means.

24. An in-vehicle apparatus controlling system, comprising:
an in-vehicle controlling apparatus for controlling an in-vehicle apparatus; and a mobile apparatus which is being carried by a person demanding permission to utilize said in-vehicle apparatus, said mobile apparatus being adapted to perform communication with said in-vehicle controlling apparatus, wherein
said mobile apparatus includes: biometric information obtaining means for obtaining biometric information indicative of said person demanding permission to utilize said in-vehicle apparatus; and transmitting means for transmitting said biometric information obtained by said biometric information obtaining means to said in-vehicle controlling apparatus, and
said in-vehicle controlling apparatus includes: receiving means for receiving said biometric information from said mobile apparatus; storing means for storing user identification information partially constituted by biometric information indicative of a registered user having permission to utilize said automotive vehicle; biometric information obtaining means for obtaining biometric information indicative of said person demanding permission to utilize said in-vehicle apparatus; identifying means for judging whether or not said person is identical to said registered user having permission to utilize said automotive vehicle by establishing the verification of said biometric information obtained by said biometric information obtaining means with respect to said biometric information forming part of said user identification information stored by said storing means; and controlling means for controlling said in-vehicle apparatus on the basis of the judgment made by said identifying means, said identifying means being adapted to judge whether or not said person is identical to said registered user having permission to utilize said automotive vehicle by establishing the verification of said biometric information received by said receiving means with respect to said biometric information forming part of said user identification information stored by said storing means when the verification of said biometric information obtained by said biometric information obtaining means with respect to said biometric information forming part of said user identification information stored by said storing means is not normally established by said identifying means.

25. An in-vehicle apparatus controlling system as set forth in claim 24, in which said biometric information obtained by said biometric information obtaining means of said in-vehicle controlling apparatus is substantially the same as said biometric information obtained by said biometric information obtaining means of said mobile apparatus.

26. An in-vehicle apparatus controlling system as set forth in claim 24 or claim 25, in which said mobile apparatus is constituted by a cellular phone.

27. An in-vehicle apparatus controlling system as set forth in any one of claims 24 to 26, in which
said user identification information stored by said storing means of said in-vehicle controlling apparatus includes an identification code of a mobile apparatus owned by said registered user having permission to utilize said automotive vehicle,
said mobile apparatus, carried by said person demanding permission to utilize said in-vehicle apparatus, further includes storing means for storing its own identification code,
said transmitting means of said mobile apparatus is adapted to transmit said biometric information obtained by said biometric information obtaining means and said identification code stored by said storing means to said in-vehicle controlling apparatus,
said receiving means of said in-vehicle controlling apparatus is adapted to receive said biometric information and said identification code from said mobile apparatus,
said identifying means of said in-vehicle controlling apparatus is adapted to judge that said person is identical to said registered user having permission to utilize automotive vehicle by comparing said identification code received from said mobile apparatus with said identification code stored by said storing means of said in-vehicle controlling apparatus,
said controlling means of said in-vehicle controlling apparatus is adapted to prevent said in-vehicle apparatus from being utilized by said person when the judgment is made that said identification code received from said mobile apparatus is not the same as said identification code stored by said storing means of said in-vehicle controlling apparatus,
said identifying means of said in-vehicle controlling apparatus is adapted to judge that said person is identical to said registered user having permission to utilize automotive vehicle by establishing the verification of said biometric information received from said mobile apparatus with respect to said biometric information forming part of said user identification information when the judgment is made that said identification code received from said mobile apparatus is the same as said identification code stored by said storing means of said in-vehicle controlling apparatus.

28. An in-vehicle apparatus controlling system as set forth in any one of claims 24 to 27, in which said user identification information stored by said storing means of said in-vehicle controlling apparatus includes biometric information indicative of said registered user having permission to unlock one or more locking apparatuses.

29. An in-vehicle apparatus controlling system as set forth in any one of claims 24 to 28, in which said locking apparatus and said in-vehicle controlling apparatus are mounted on said automotive vehicle.

30. An in-vehicle apparatus controlling system as set forth in any one of claims 24 to 29, in which
said biometric information obtaining means of said mobile apparatus is constituted by a camera unit for taking an image indicative of the face of said person demanding permission to utilize said in-vehicle apparatus, and obtaining, as said biometric information, image information indicative of said face of said person demanding permission to utilize said in-vehicle apparatus,
said user identification information stored by said storing means of said in-vehicle controlling apparatus includes image information indicative of the face of said registered user having permission to utilize said automotive vehicle, and
said identifying means of said in-vehicle controlling apparatus is adapted to judge whether or not said person is identical to said registered user having permission to utilize said automotive vehicle by establishing the verification of said image information obtained by said camera unit of said mobile apparatus with respect to said image information stored by said storing means of said in-vehicle controlling apparatus.

31. An in-vehicle apparatus controlling system as set forth in any one of claims 24 to 29, in which
said biometric information obtaining means of said mobile apparatus is constituted by a microphone unit for receiving a voice of said person demanding permission to utilize said in-vehicle apparatus, and obtaining, as said biometric information, voice pattern information from said voice of said person demanding permission to utilize said in-vehicle apparatus,
said user identification information stored by said storing means of said in-vehicle controlling apparatus includes voice pattern information indicative of a voice of said registered user having permission to utilize said automotive vehicle, and
said identifying means of said in-vehicle controlling apparatus is adapted to judge whether or not said person is identical to said registered user having permission to utilize said automotive vehicle by establishing the verification of said voice pattern information obtained by said microphone unit of said mobile apparatus with respect to said voice pattern information stored by said storing means of said in-vehicle controlling apparatus.

32. An in-vehicle apparatus controlling system as set forth in any one of claims 24 to 29, in which
said biometric information obtaining means of said mobile apparatus is constituted by a fingerprint pattern sensor for detecting a fingerprint of said person demanding permission to utilize said in-vehicle apparatus, and obtaining, as said biometric information, fingerprint pattern information indicative of said fingerprint of said person demanding permission to utilize said in-vehicle apparatus,
said user identification information stored by said storing means of said in-vehicle controlling apparatus includes fingerprint pattern information indicative of a fingerprint pattern of a registered user having permission to utilize said automotive vehicle, and
said identifying means of said in-vehicle controlling apparatus is adapted to judge whether or not said person is identical to said registered user having permission to utilize said automotive vehicle by establishing the verification of said fingerprint pattern information obtained by said fingerprint pattern sensor of said mobile apparatus with respect to said fingerprint pattern information stored by said storing means of said in-vehicle controlling apparatus.

33. An in-vehicle apparatus controlling system as set forth in any one of claims 24 to 29, in which
said biometric information obtaining means of said mobile apparatus is constituted by a camera unit for taking an image of an iris of said person demanding permission to utilize said in-vehicle apparatus, and obtaining, as said biometric information, iris pattern information indicative of said iris of said person demanding permission to utilize said in-vehicle apparatus,
said user identification information stored by said storing means of said in-vehicle controlling apparatus includes iris pattern information indicative of an iris of a registered user having permission to utilize said automotive vehicle, and
said identifying means of said in-vehicle controlling apparatus is adapted to judge whether or not said person is identical to said registered user having permission to utilize said automotive vehicle by establishing the verification of said iris pattern information obtained by said camera unit of said mobile apparatus with respect to said iris pattern information stored by said storing means of said in-vehicle controlling apparatus.

34. An in-vehicle apparatus controlling system, comprising:
an in-vehicle controlling apparatus for controlling an in-vehicle apparatus; and a mobile apparatus which is being carried by a person demanding permission to utilize said in-vehicle apparatus, wherein
said mobile apparatus includes: storing means for storing user identification information indicative of said person demanding permission to utilize said in-vehicle apparatus and personal information according to said in-vehicle apparatus; and communication means for perform communication with said in-vehicle controlling apparatus,
said in-vehicle controlling apparatus includes: communication means for perform communication with said mobile apparatus; storing means for storing user identification information indicative of a registered user having permission to utilize said automotive vehicle; identifying means for judging whether or not said person is identical to said registered user having permission to utilize said automotive vehicle by establishing the verification of said user identification information received by said communication means with respect to said user identification information stored by said storing means; and controlling means for controlling said in-vehicle apparatus on the basis of the judgment made by said identifying means and said personal information received form said mobile apparatus.

35. An in-vehicle apparatus controlling system as set forth in claim 34, in which
said personal information includes information needed for said person to utilize a telephone provided as said in-vehicle apparatus in said automotive vehicle, and
said controlling means of said in-vehicle controlling apparatus is adapted to control said telephone on the basis of the judgment made by said identifying means and said personal information stored by said storing means.

36. An in-vehicle apparatus controlling system as set forth in claim 34, in which
said personal information includes information needed for said person to utilize an audio-visual apparatus provided as said in-vehicle apparatus in said automotive vehicle, and adapted to reproduce both a sound and an image, or either said sound or said image from data stored in memory media, and
said controlling means of said in-vehicle controlling apparatus is adapted to control said audio-visual apparatus on the basis of the judgment made by said identifying means and said personal information stored by said storing means.

37. An in-vehicle apparatus controlling system as set forth in claim 34, in which said personal information includes information needed for said person to drive said automotive vehicle.

38. An in-vehicle apparatus controlling system as set forth in claim 34, in which
said personal information includes information indicative of the current and previous physical condition of said person demanding permission to utilize said in-vehicle apparatus,
said in-vehicle apparatus is constituted by an emergency call apparatus provided in said automotive vehicle, and
said controlling means of said in-vehicle controlling apparatus is adapted to control said emergency call apparatus on the basis of the judgment made by said identifying means and said personal information stored by said storing means.

39. An in-vehicle apparatus controlling system as set forth in claim 34, in which
said personal information includes information needed for said person to purchase one or more products through a vehicle-to-roadside communication apparatus provided, as said in-vehicle apparatus, in said automotive vehicle,
said in-vehicle apparatus is constituted by a vehicle-to-roadside communication apparatus provided in said automotive vehicle, and
said controlling means of said in-vehicle controlling apparatus is adapted to control said vehicle-to-roadside communication apparatus on the basis of the judgment made by said identifying means and said personal information stored by said storing means.

40. An in-vehicle apparatus controlling system as set forth in any one of claims 34 to 39, in which
said storing means of said mobile apparatus includes driving license information storing unit for storing driving license information according to said person demanding permission to utilize said in-vehicle apparatus.

41. An in-vehicle apparatus controlling system, comprising:
memory media having user identification information stored therein, said user identification information being indicative of a registered user having permission to utilize said automotive vehicle;
registering and canceling means for registering user identification information indicative of a new user in said memory media to allow said new user to have permission to utilize said automotive vehicle, or canceling said user identification information indicative of said previously registered user to prevent said previously registered user from having permission to utilize said automotive vehicle;
user identification information obtaining means for obtaining user identification information indicative of a person demanding permission to utilize said in-vehicle apparatus;
identifying means for judging whether or not said person is identical to said registered user having permission to utilize said automotive vehicle by establishing the verification of said user identification information obtained by said user identification information obtaining means with respect to said user identification information stored in said memory media;
controlling means for controlling said in-vehicle apparatus on the basis of the judgment made by said identifying means; and
informing means for informing about said user identification information registered or cancelled by said registering and canceling means.

42. An in-vehicle apparatus controlling system as set forth in claim 41, in which
said user identification information includes image information indicative of the face of said person demanding permission to utilize said in-vehicle apparatus,
said user identification information includes image information indicative of the face of said registered user having permission to utilize said automotive vehicle,
said user identification information obtaining means is constituted by a camera unit for taking an image indicative of said person to obtain image information indicative of the face of said person, and
said identifying means is adapted to judge whether or not said person is identical to said registered user having permission to utilize said automotive vehicle by establishing the verification of said image information obtained by said camera unit with respect to said image information stored in said memory media.

43. An in-vehicle apparatus controlling system as set forth in claim 41, in which
said user identification information includes voice pattern information indicative of a voice of said person demanding permission to utilize said in-vehicle apparatus,
said user identification information includes voice pattern information indicative of a voice of said registered user having permission to utilize said automotive vehicle,
said user identification information obtaining means is constituted by a microphone unit for receiving a voice of said person demanding permission to utilize said in-vehicle apparatus, and obtaining, as said biometric information, voice pattern information from said voice of said person demanding permission to utilize said in-vehicle apparatus, and
said identifying means is adapted to judge whether or not said person is identical to said registered user having permission to utilize said automotive vehicle by establishing the verification of said voice pattern information obtained by said microphone unit with respect to said voice pattern information stored in said memory media.

44. An in-vehicle apparatus controlling system as set forth in claim 41, in which
said user identification information includes fingerprint pattern information indicative of a fingerprint of said person demanding permission to utilize said in-vehicle apparatus,
said user identification information includes fingerprint pattern information indicative of a fingerprint of said registered user having permission to utilize said automotive vehicle,
said user identification information obtaining means is constituted by a fingerprint pattern sensor for detecting said fingerprint of said person demanding permission to utilize said in-vehicle apparatus, and obtaining fingerprint pattern information indicative of said detected fingerprint, and
said identifying means is adapted to judge whether or not said person is identical to said registered user having permission to utilize said automotive vehicle by establishing the verification of said fingerprint pattern information obtained by said fingerprint pattern sensor with respect to said fingerprint pattern information stored in said memory media.

45. An in-vehicle apparatus controlling system as set forth in claim 41, in which
said user identification information includes iris pattern information indicative of an iris of said person demanding permission to utilize said in-vehicle apparatus,
said user identification information includes iris pattern information indicative of an iris of said registered user having permission to utilize said automotive vehicle,
said user identification information obtaining means is constituted by a camera unit for taking an image indicative of said person demanding permission to utilize said in-vehicle apparatus, and obtaining iris pattern information indicative of said iris of said person, and
said identifying means is adapted to judge whether or not said person is identical to said registered user having permission to utilize said automotive vehicle by establishing the verification of said iris pattern information obtained by said camera unit with respect to said iris pattern information stored in said memory media.

46. An in-vehicle apparatus controlling system as set forth in claim 41, which further comprises an integrated circuit card having user identification information stored therein, and in which
said user identification information obtaining means is adapted to obtain said user identification information from said integrated circuit card by performing communication with said integrated circuit card.

47. An in-vehicle apparatus controlling system as set forth in claim 46, in which said integrated circuit card is constituted by an electronic license card.

48. An in-vehicle apparatus controlling system as set forth in any one of claims 41 to 47, in which said informing means is adapted to inform about said user identification information registered or cancelled by said registering and canceling means when the judgment is made by said identifying means that said person is identical to said registered user having permission to utilize said automotive vehicle.

49. An in-vehicle apparatus controlling system as set forth in any one of claims 41 to 48, which further comprises in-vehicle apparatus immobilizing means for preventing said in-vehicle apparatus from being started when the judgment is made that said person is not identical to said user having permission to utilize said automotive vehicle.

50. An in-vehicle apparatus controlling system as set forth in claim 49, in which said in-vehicle apparatus includes an engine controlling apparatus for allowing an engine of the automotive vehicle to be started.

51. An in-vehicle apparatus controlling system as set forth in any one of claims 41 to 50, which further comprises start signal outputting means for outputting a start signal to said user identification information obtaining means in order to have said user identification information obtaining means started, and in which
said user identification information obtaining means is adapted to assume an active state over a predetermined period in response to said start signal.

52. An in-vehicle controlling apparatus, comprising:
biometric information obtaining means for obtaining biometric information indicative of a person demanding permission to utilize an in-vehicle apparatus;
storing means for storing user identification information which is partially constituted by biometric information indicative of a registered user having permission to utilize an automotive vehicle;
identifying means for judging whether or not said person is identical to said registered user having permission to utilize said automotive vehicle by establishing the verification of said biometric information obtained by said biometric information obtaining means with respect to said biometric information stored by said storing means;
controlling means for controlling said in-vehicle apparatus on the basis of the judgment made by said identifying means; and
reading means for receiving said user identification information from a memory media, wherein
said identifying means is adapted to judge whether or not said person is identical to said registered user having permission to utilize said automotive vehicle by establishing the verification of said biometric information received by said reading means with respect to said biometric information stored in said memory media when the verification of said biometric information obtained by said biometric information obtaining means with respect to said biometric information stored by said storing means is not normally established by said identifying means.

53. An in-vehicle controlling apparatus as set forth in claim 52, in which said biometric information obtaining means is constituted by a camera unit for taking an image indicative of the face of said person demanding permission to utilize said in-vehicle apparatus, and obtaining, as said biometric information, image information indicative of said face of said person demanding permission to utilize said in-vehicle apparatus.

54. An in-vehicle controlling apparatus as set forth in claim 52 or claim 53, in which
said memory media is constituted by an electronic license card, and
said biometric information obtaining means is adapted to obtain said biometric information from said electronic license card.

55. An in-vehicle controlling apparatus as set forth in claim 52 or claim 53, in which
said memory media is constituted by a non-contact type electronic license card, and
said biometric information obtaining means is adapted to obtain said biometric information from said non-contact type electronic license card.

56. An in-vehicle controlling apparatus as set forth in any one of claims 52 to 55, in which
said in-vehicle apparatus is constituted by a door lock controlling apparatus provided in said automotive vehicle, and
said controlling means is adapted to control said door lock controlling apparatus on the basis of the judgment made by said identifying means.

57. An in-vehicle controlling apparatus as set forth in any one of claims 52 to 55, in which
said in-vehicle apparatus is constituted by an engine starting apparatus provided in said automotive vehicle, and
said controlling means is adapted to control said engine starting apparatus on the basis of the judgment made by said identifying means.

58. An in-vehicle controlling apparatus as set forth in any one of claims 52 to 55, in which
said in-vehicle apparatus is constituted by a telephone provided in said automotive vehicle, and
said controlling means is adapted to control said telephone on the basis of the judgment made by said identifying means.

59. An in-vehicle controlling apparatus as set forth in any one of claims 52 to 55, in which
said in-vehicle apparatus is constituted by an audio apparatus provided in said automotive vehicle, and
said controlling means is adapted to control said audio apparatus on the basis of the judgment made by said identifying means.

60. An in-vehicle controlling apparatus as set forth in any one of claims 52 to 55, in which
said in-vehicle apparatus is constituted by an automotive instrument panel provided in said automotive vehicle, and
said controlling means is adapted to control said automotive instrument panel on the basis of the judgment made by said identifying means.

61. An in-vehicle controlling apparatus as set forth in any one of claims 52 to 55, in which
said in-vehicle apparatus is constituted by an emergency call apparatus provided in said automotive vehicle, and
said controlling means is adapted to control said emergency call apparatus on the basis of the judgment made by said identifying means.

62. An in-vehicle controlling apparatus as set forth in any one of claims 52 to 55, in which
said in-vehicle apparatus is constituted by a vehicle-to-roadside communication apparatus provided in said automotive vehicle, and
said controlling means is adapted to control said vehicle-to-roadside communication apparatus on the basis of the judgment made by said identifying means.

63. An in-vehicle controlling apparatus, comprising:
receiving means for receiving the judgment made by said identifying means from a mobile apparatus; and
controlling means for controlling an in-vehicle apparatus on the basis of the judgment made by said identifying means.

64. An in-vehicle controlling apparatus, comprising:
receiving means for receiving user identification information from a mobile apparatus;
storing means for storing user identification information indicative of a registered user having permission to utilize an automotive vehicle;
identifying means for judging whether or not a person is identical to said registered user having permission to utilize said automotive vehicle by establishing the verification of said biometric information received by said reading means with respect to said biometric information stored by said storing means; and
controlling means for controlling an in-vehicle apparatus on the basis of the judgment made by said identifying means.

65. An in-vehicle controlling apparatus as set forth in claim 63 or claim 64, in which
said user identification information stored in said memory media is partially constituted by biometric information indicative of a person demanding permission to utilize said in-vehicle apparatus,
said user identification information stored by said storing means of said in-vehicle controlling apparatus is partially constituted by biometric information indicative of said registered user having permission to utilize said automotive vehicle, and
said identifying means of said in-vehicle controlling apparatus is adapted to judge whether or not said person is identical to said registered user having permission to utilize said automotive vehicle by establishing the verification of said biometric information received by said reading means with respect to said biometric information stored by said storing means.

66. An in-vehicle controlling apparatus as set forth in claim 63 or claim 64, in which
said memory media is constituted by an electronic license card, and
said reading means of said mobile apparatus is adapted to receive said user identification information from said electronic license card.

67. An in-vehicle controlling apparatus as set forth in claim 63 or claim 64, in which
said memory media is constituted by a non-contact type electronic license card, and
said reading means of said mobile apparatus is adapted to receive said user identification information from said non-contact type electronic license card.

68. An in-vehicle controlling apparatus as set forth in claim 63 or claim 64, in which
said in-vehicle apparatus is constituted by a door lock controlling apparatus provided in said automotive vehicle, and
said controlling means of said in-vehicle controlling apparatus is adapted to control said door lock controlling apparatus on the basis of the judgment made by said identifying means.

69. An in-vehicle controlling apparatus as set forth in claim 63 or claim 64, in which
said in-vehicle apparatus is constituted by an engine starting apparatus provided in said automotive vehicle, and
said controlling means of said in-vehicle controlling apparatus is adapted to control said engine starting apparatus on the basis of the judgment made by said identifying means.

70. An in-vehicle controlling apparatus as set forth in claim 63 or claim 64, in which
said in-vehicle apparatus is constituted by a telephone provided in said automotive vehicle, and
said controlling means of said in-vehicle controlling apparatus is adapted to control said telephone on the basis of the judgment made by said identifying means.

71. An in-vehicle controlling apparatus as set forth in claim 63 or claim 64, in which
said in-vehicle apparatus is constituted by an audio apparatus provided in said automotive vehicle, and
said controlling means of said in-vehicle controlling apparatus is adapted to control said audio apparatus on the basis of the judgment made by said identifying means.

72. An in-vehicle controlling apparatus as set forth in claim 63 or claim 64, in which
said in-vehicle apparatus is constituted by an automotive instrument panel provided in said automotive vehicle, and
said controlling means of said in-vehicle controlling apparatus is adapted to control said automotive instrument panel on the basis of the judgment made by said identifying means.

73. An in-vehicle controlling apparatus as set forth in claim 63 or claim 64, in which
said in-vehicle apparatus is constituted by an emergency call apparatus provided in said automotive vehicle, and
said controlling means of said in-vehicle controlling apparatus is adapted to control said emergency call apparatus on the basis of the judgment made by said identifying means.

74. An in-vehicle controlling apparatus as set forth in claim 63 or claim 64, in which
said in-vehicle apparatus is constituted by a vehicle-to-roadside communication apparatus provided in said automotive vehicle, and
said controlling means of said in-vehicle controlling apparatus is adapted to control said vehicle-to-roadside communication apparatus on the basis of the judgment made by said identifying means.

75. An in-vehicle controlling apparatus, comprising:
receiving means for receiving biometric information from a mobile apparatus which is being carried by a person demanding permission to utilize an in-vehicle apparatus, said biometric information being indicative of said person demanding permission to utilize said in-vehicle apparatus;
storing means for storing user identification information partially constituted by biometric information indicative of a registered user having permission to utilize an automotive vehicle;
biometric information obtaining means for obtaining biometric information indicative of said person demanding permission to utilize said in-vehicle apparatus;
identifying means for judging whether or not said person is identical to said registered user having permission to utilize said automotive vehicle by establishing the verification of said biometric information obtained by said biometric information obtaining means with respect to said biometric information forming part of said user identification information stored by said storing means; and
controlling means for controlling said in-vehicle apparatus on the basis of the judgment made by said identifying means, wherein
said identifying means is adapted to judge whether or not said person is identical to said registered user having permission to utilize said automotive vehicle by establishing the verification of said biometric information received by said receiving means with respect to said biometric information forming part of said user identification information stored by said storing means when the verification of said biometric information obtained by said biometric information obtaining means with respect to said biometric information forming part of said user identification information stored by said storing means is not normally established by said identifying means.

76. An in-vehicle controlling apparatus as set forth in claim 75, in which said biometric information obtained by said biometric information obtaining means of said in-vehicle controlling apparatus is substantially the same as said biometric information obtained by said biometric information obtaining means of said mobile apparatus.

77. An in-vehicle controlling apparatus as set forth in claim 75 or claim 76, in which said mobile apparatus is constituted by a cellular phone.

78. An in-vehicle controlling apparatus as set forth in any one of claims 75 to 77, in which
said user identification information stored by said storing means includes an identification code of a mobile apparatus which is being owned by said registered user having permission to utilize said automotive vehicle,
said mobile apparatus, carried by said person demanding permission to utilize said in-vehicle apparatus, further includes storing means for storing its own identification code,
said transmitting means of said mobile apparatus is adapted to transmit said biometric information obtained by said biometric information obtaining means and said identification code stored by said storing means to said in-vehicle controlling apparatus,
said receiving means of said in-vehicle controlling apparatus is adapted to receive said biometric information and said identification code from said mobile apparatus,
said identifying means of said in-vehicle controlling apparatus is adapted to judge that said person is identical to said registered user having permission to utilize automotive vehicle by comparing said identification code received from said mobile apparatus with said identification code stored by said storing means of said in-vehicle controlling apparatus,
said controlling means of said in-vehicle controlling apparatus is adapted to prevent said in-vehicle apparatus from being utilized by said person when the judgment is made that said identification code received from said mobile apparatus is not the same as said identification code stored by said storing means of said in-vehicle controlling apparatus,
said identifying means of said in-vehicle controlling apparatus is adapted to judge that said person is identical to said registered user having permission to utilize automotive vehicle by establishing the verification of said biometric information received from said mobile apparatus with respect to said biometric information forming part of said user identification information when the judgment is made that said identification code received from said mobile apparatus is the same as said identification code stored by said storing means of said in-vehicle controlling apparatus.

79. An in-vehicle controlling apparatus as set forth in any one of claims 75 to 78, in which said user identification information stored by said storing means of said in-vehicle controlling apparatus includes biometric information indicative of said registered user having permission to unlock one or more locking apparatuses.

80. An in-vehicle controlling apparatus as set forth in any one of claims 75 to 79, in which said locking apparatus and said in-vehicle controlling apparatus are mounted on said automotive vehicle.

81. An in-vehicle controlling apparatus as set forth in any one of claims 75 to 80, in which
said biometric information obtaining means of said mobile apparatus is constituted by a camera unit for taking an image indicative of the face of said person demanding permission to utilize said in-vehicle apparatus, and obtaining, as said biometric information, image information indicative of said face of said person demanding permission to utilize said in-vehicle apparatus,
said user identification information stored by said storing means includes image information indicative of the face of said registered user having permission to utilize said automotive vehicle, and
said identifying means is adapted to judge whether or not said person is identical to said registered user having permission to utilize said automotive vehicle by establishing the verification of said image information obtained by said camera unit of said mobile apparatus with respect to said image information stored by said storing means.

82. An in-vehicle controlling apparatus as set forth in any one of claims 75 to 80, in which
said biometric information obtaining means of said mobile apparatus is constituted by a microphone unit for receiving a voice of said person demanding permission to utilize said in-vehicle apparatus, and obtaining, as said biometric information, voice pattern information from said voice of said person demanding permission to utilize said in-vehicle apparatus,
said user identification information stored by said storing means includes voice pattern information indicative of a voice of said registered user having permission to utilize said automotive vehicle, and
said identifying means is adapted to judge whether or not said person is identical to said registered user having permission to utilize said automotive vehicle by establishing the verification of said voice pattern information obtained by said microphone unit of said mobile apparatus with respect to said voice pattern information stored by said storing means.

83. An in-vehicle controlling apparatus as set forth in any one of claims 24 to 29, in which
said biometric information obtaining means of said mobile apparatus is constituted by a fingerprint pattern sensor for detecting a fingerprint of said person demanding permission to utilize said in-vehicle apparatus, and obtaining, as said biometric information, fingerprint pattern information indicative of said fingerprint of said person demanding permission to utilize said in-vehicle apparatus,
said user identification information stored by said storing means includes fingerprint pattern information indicative of a fingerprint pattern of a registered user having permission to utilize said automotive vehicle, and
said identifying means is adapted to judge whether or not said person is identical to said registered user having permission to utilize said automotive vehicle by establishing the verification of said fingerprint pattern information obtained by said fingerprint pattern sensor of said mobile apparatus with respect to said fingerprint pattern information stored by said storing means.

84. An in-vehicle controlling apparatus as set forth in any one of claims 24 to 29, in which
said biometric information obtaining means of said mobile apparatus is constituted by a camera unit for taking an image of an iris of said person demanding permission to utilize said in-vehicle apparatus, and obtaining, as said biometric information, iris pattern information indicative of said iris of said person demanding permission to utilize said in-vehicle apparatus,
said user identification information stored by said storing means includes iris pattern information indicative of an iris of a registered user having permission to utilize said automotive vehicle, and
said identifying means is adapted to judge whether or not said person is identical to said registered user having permission to utilize said automotive vehicle by establishing the verification of said iris pattern information obtained by said camera unit of said mobile apparatus with respect to said iris pattern information stored by said storing means.

85. An in-vehicle controlling apparatus, comprising:
communication means for receiving user identification information and personal information according to an in-vehicle apparatus from a mobile phone, said user identification information being indicative of a person demanding permission to utilize said in-vehicle apparatus;
storing means for storing user identification information indicative of a registered user having permission to utilize an automotive vehicle;
identifying means for judging whether or not said person is identical to said registered user having permission to utilize said automotive vehicle by establishing the verification of said user identification information received by said communication means with respect to said user identification information stored by said storing means; and
controlling means for controlling said in-vehicle apparatus on the basis of the judgment made by said identifying means and said personal information received form said mobile apparatus.

86. An in-vehicle controlling apparatus as set forth in claim 85, in which
said personal information includes information needed for said person to utilize a telephone provided as said in-vehicle apparatus in said automotive vehicle, and
said controlling means is adapted to control said telephone on the basis of the judgment made by said identifying means and said personal information stored by said storing means.

87. An in-vehicle controlling apparatus as set forth in claim 85, in which
said personal information includes information needed for said person to utilize an audio-visual apparatus provided as said in-vehicle apparatus in said automotive vehicle, said audio-visual apparatus being adapted to reproduce both a sound and an image, or either said sound or said image from data stored in memory media, and
said controlling means is adapted to control said audio-visual apparatus on the basis of the judgment made by said identifying means and said personal information stored by said storing means.

88. An in-vehicle controlling apparatus as set forth in claim 85, in which said personal information includes information needed for said person to drive said automotive vehicle.

89. An in-vehicle controlling apparatus as set forth in claim 85, in which
said personal information includes information indicative of the current and previous physical condition of said person demanding permission to utilize said in-vehicle apparatus, and
said controlling means is adapted to control an emergency call apparatus provided as said in-vehicle apparatus in said automotive vehicle on the basis of the judgment made by said identifying means and said personal information stored by said storing means.

90. An in-vehicle controlling apparatus as set forth in claim 85, in which
said personal information includes information needed for said person to purchase one or more products through a vehicle-to-roadside communication apparatus provided as said in-vehicle apparatus in said automotive vehicle;
said controlling means is adapted to control a vehicle-to-roadside communication apparatus mounted, as said in-vehicle apparatus, on said automotive vehicle on the basis of the judgment made by said identifying means and said personal information stored by said storing means.

91. An in-vehicle controlling apparatus as set forth in any one of claims 85 to 90, in which
said storing means of said mobile apparatus includes driving license information storing unit for storing driving license information according to said person demanding permission to utilize said in-vehicle apparatus.

92. An in-vehicle controlling apparatus, comprising:
memory media having user identification information stored therein, said user identification information being indicative of a registered user having permission to utilize said automotive vehicle;
registering and canceling means for registering user identification information indicative of a new user in said memory media to allow said new user to have permission to utilize said automotive vehicle, or canceling said user identification information indicative of said previously registered user to prevent said previously registered user from having permission to utilize said automotive vehicle;
user identification information obtaining means for obtaining user identification information indicative of a person demanding permission to utilize said in-vehicle apparatus;
identifying means for judging whether or not said person is identical to said registered user having permission to utilize said automotive vehicle by establishing the verification of said user identification information obtained by said user identification information obtaining means with respect to said user identification information stored in said memory media;
controlling means for controlling said in-vehicle apparatus on the basis of the judgment made by said identifying means; and
informing means for informing about said user identification information registered or cancelled by said registering and canceling means.

93. An in-vehicle controlling apparatus as set forth in claim 92, in which
said user identification information includes image information indicative of the face of said person demanding permission to utilize said in-vehicle apparatus,
said user identification information includes image information indicative of the face of said registered user having permission to utilize said automotive vehicle,
said user identification information obtaining means is constituted by a camera unit for taking an image indicative of said person to obtain image information indicative of the face of said person, and
said identifying means is adapted to judge whether or not said person is identical to said registered user having permission to utilize said automotive vehicle by establishing the verification of said image information obtained by said camera unit with respect to said image information stored in said memory media.

94. An in-vehicle controlling apparatus as set forth in claim 92, in which
said user identification information includes voice pattern information indicative of a voice of said person demanding permission to utilize said in-vehicle apparatus,
said user identification information includes voice pattern information indicative of a voice of said registered user having permission to utilize said automotive vehicle,
said user identification information obtaining means is constituted by a microphone unit for receiving a voice of said person demanding permission to utilize said in-vehicle apparatus, and obtaining, as said biometric information, voice pattern information from said voice of said person demanding permission to utilize said in-vehicle apparatus, and
said identifying means is adapted to judge whether or not said person is identical to said registered user having permission to utilize said automotive vehicle by establishing the verification of said voice pattern information obtained by said microphone unit with respect to said voice pattern information stored in said memory media.

95. An in-vehicle controlling apparatus as set forth in claim 92, in which
said user identification information includes fingerprint pattern information indicative of a fingerprint of said person demanding permission to utilize said in-vehicle apparatus,
said user identification information includes fingerprint pattern information indicative of a fingerprint of said registered user having permission to utilize said automotive vehicle,
said user identification information obtaining means is constituted by a fingerprint pattern sensor for detecting said fingerprint of said person demanding permission to utilize said in-vehicle apparatus, and obtaining fingerprint pattern information indicative of said detected fingerprint, and
said identifying means is adapted to judge whether or not said person is identical to said registered user having permission to utilize said automotive vehicle by establishing the verification of said fingerprint pattern information obtained by said fingerprint pattern sensor with respect to said fingerprint pattern information stored in said memory media.

96. An in-vehicle controlling apparatus as set forth in claim 92, in which
said user identification information includes iris pattern information indicative of an iris of said person demanding permission to utilize said in-vehicle apparatus,
said user identification information includes iris pattern information indicative of an iris of said registered user having permission to utilize said automotive vehicle,
said user identification information obtaining means is constituted by a camera unit for taking an image indicative of said person demanding permission to utilize said in-vehicle apparatus, and obtaining iris pattern information indicative of said iris of said person, and
said identifying means is adapted to judge whether or not said person is identical to said registered user having permission to utilize said automotive vehicle by establishing the verification of said iris pattern information obtained by said camera unit with respect to said iris pattern information stored in said memory media.

97. An in-vehicle controlling apparatus as set forth in claim 92, in which said user identification information obtaining means is adapted to obtain said user identification information from an integrated circuit card by performing communication with said integrated circuit card.

98. An in-vehicle controlling apparatus as set forth in claim 97, in which said integrated circuit card is constituted by an electronic license card.

99. An in-vehicle controlling apparatus as set forth in any one of claims 92 to 98, in which said informing means is adapted to inform about said user identification information registered or cancelled by said registering and canceling means when the judgment is made by said identifying means that said person is identical to said registered user having permission to utilize said automotive vehicle.

100. An in-vehicle controlling apparatus as set forth in any one of claims 92 to 99, which further comprises in-vehicle apparatus immobilizing means for prevent said in-vehicle apparatus from being started when the judgment is made that said person is not identical to said user having permission to utilize said automotive vehicle.

101. An in-vehicle controlling apparatus as set forth in claim 100, in which said in-vehicle apparatus includes an engine controlling apparatus for allowing an engine of said automotive vehicle to be started.

102. An in-vehicle controlling apparatus as set forth in any one of claims 92 to 101, which further comprises start signal outputting means for outputting a start signal to said user identification information obtaining means in order to have said user identification information obtaining means started, and in which said user identification information obtaining means is adapted to assume an active state over a predetermined period in response to said start signal.

103. An in-vehicle apparatus controlling method of controlling locks through steps of transmitting biometric information obtained by biometric information obtaining means provided in a mobile apparatus through communication means provided in said mobile apparatus, judging whether or not a person demanding permission to utilize the automotive vehicle is identical to a registered user having permission to utilize an automotive vehicle by establishing the verification of said biometric information received from said mobile apparatus with respect to biometric information previously registered by said biometric information registering means and indicative of a registered user having permission to utilize an automotive vehicle, or establishing the verification of biometric information obtained by biometric information obtaining means with respect to said biometric information previously registered by said biometric information registering means and indicative of said user having said permission to utilize said automotive vehicle.
